(19) Europäisches Patentamt
European Patent Office
Office européen des brevets

(11) Veröffentlichungsnummer: **0 374 815 B1**

(12) # EUROPÄISCHE PATENTSCHRIFT

(45) Veröffentlichungstag der Patentschrift: **04.05.94**

(51) Int. Cl.$^5$: **C09B 50/00**, C09B 62/503, D06P 1/384

(21) Anmeldenummer: **89123424.7**

(22) Anmeldetag: **19.12.89**

Die Akte enthält technische Angaben, die nach dem Eingang der Anmeldung eingereicht wurden und die nicht in dieser Patentschrift enthalten sind.

(54) **Kupferkomplex-Formazan-Verbindungen, Verfahren zu ihrer Herstellung und ihre Verwendung als Farbstoffe.**

(30) Priorität: **22.12.88 DE 3843135**

(43) Veröffentlichungstag der Anmeldung:
**27.06.90 Patentblatt 90/26**

(45) Bekanntmachung des Hinweises auf die Patenterteilung:
**04.05.94 Patentblatt 94/18**

(84) Benannte Vertragsstaaten:
**BE CH DE ES FR GB IT LI**

(56) Entgegenhaltungen:
**GB-A- 956 455**
**GB-A- 1 194 504**
**US-A- 4 370 145**
**US-A- 4 757 135**

(73) Patentinhaber: **HOECHST AKTIENGESELL-SCHAFT**

**D-65926 Frankfurt(DE)**

(72) Erfinder: **Schwaiger, Günther, Dr.**
**Johannesallee 41**
**D-6230 Frankfurt am Main 80(DE)**

EP 0 374 815 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Kupferkomplex-Formazan-Farbstoffe des Triphenylformazan-Typs mit einer faserreaktiven Gruppe aus der Vinylsulfon-Reihe, die beispielsweise Cellulosefasermaterialien in grünen bis blauen Tönen zu färben vermögen, sind beispielsweise aus der britischen Patentschrift Nr. 1 194 504 und den US-Patentschriften Nrs. 4 370 145 und 4 757 135 bekannt.

In der britischen Patentschrift 956 455 wird die Herstellung von Färbungen mit Formazanfarbstoffen, die einen Arylcarbonylrest enthalten, beschrieben, in dem man den Formazanfarbstoff auf das Fasermaterial aufbringt und die erhaltene Färbung anschließend mit einem kupfer-, kobalt- oder nickelabgebenden Mittel behandelt. Die Färbungen besitzen in der Regel einen rot-, violett- oder blaunuancierten grauen Farbton. Des weiteren wird dort auch die Herstellung der Metallkomplex-Farbstoffe selbst beschrieben, mit denen Färbungen ähnlicher Nuance erhalten werden. Im Beispiel 5 wird ein Kupferkomplex-Formazanfarbstoff hergestellt, der einen Trichlor-pyrimidinyl-Rest als faserreaktive Gruppe besitzt. Mit ihm werden blaugraue Färbungen erhalten.

Mit der vorliegenden Erfindung wurden nunmehr neue Kupferkomplex-Formazan-Verbindungen gefunden, die beispielsweise Cellulosefasermaterialien in bordofarbenen und violetten Tönen zu färben vermögen. Diese neuen Formazanverbindungen entsprechend der allgemeinen Formel (1)

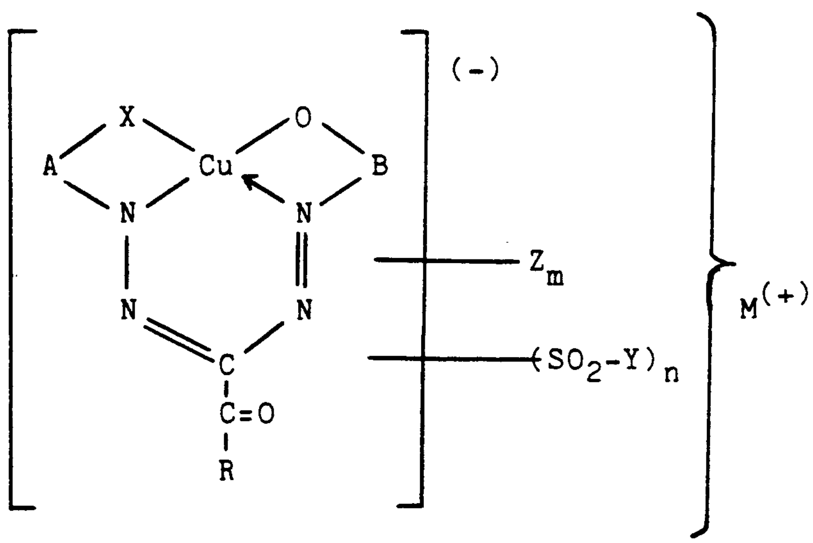

(1)

in welcher bedeuten:

A kann durch eine oder zwei Gruppen Z, die nachstehend definiert ist, und/oder durch die angegebene Gruppe der Formel $-SO_2-Y$ , die nachstehend definiert ist, substituiert sein und ist ein Phenylenrest oder ein Naphthylenrest, die beide durch Substituenten, wie beispielsweise einen Substituenten, substituiert sein können, wobei diese der folgenden Gruppe der Substituenten angehören: Halogen, wie Fluor, Chlor und Brom, Alkyl von 1 bis 5 C-Atomen, wie Methyl und Ethyl, Alkoxy von 1 bis 5 C-Atomen, wie Methoxy und Ethoxy, Alkylsulfonyl von 1 bis 4 C-Atomen, das substituiert sein kann, wie beispielsweise durch Hydroxy oder Sulfo, wie beispielsweise Methylsulfonyl, Ethylsulfonyl, β-Hydroxyethylsulfonyl und β-Sulfoethylsulfonyl, Phenylsulfonyl, Sulfamoyl, durch Alkyl von 1 bis 4 C-Atomen mono- oder disubstituiertes Sulfamoyl, Cycloalkylsulfamoyl mit einem Cycloalkylrest von 5 bis 8 C-Atomen, wie beispielsweise Cyclohexylsulfamoyl, Nitro, Alkanoylamino von 2 bis 5 C-Atomen, wie Acetylamino und Propionylamino, Benzoylamino, das durch 1 oder 2 Substituenten aus der Gruppe Sulfo, Carboxy, Chlor, Methyl, Ethyl, Methoxy und Ethoxy substituiert sein kann, Alkanoylamino von 2 bis 5 C-Atomen, das substituiert ist, wie beispielsweise durch Sulfo, Carboxy und/oder Hydroxy, wie beispielsweise Succinylamido, Alkylsulfonylamino von 1 bis 4 C-Atomen, Phenylsulfonylamino, (β-Sulfatoethyl)-sulfonylamino, N-Methyl-N-(β-sulfatoethyl-sulfonyl)-amino;

die Gruppe X und das N-Atom sind in ortho-Stellung zueinander an den aromatischen Kern von A gebunden;

B hat eine der Bedeutungen von A und kann mit A gleich oder von A verschieden sein;

das O-Atom und das N-Atom sind in ortho-Stellung zueinander an den aromatischen Kern von B gebunden;

R ist ein Arylrest, wie Phenyl- oder Naphthylrest, der durch eine oder zwei Gruppen Z, die nachstehend definiert ist, und/oder durch Substituenten, wie einen oder zwei Substituenten, substituiert sein kann, die der folgenden Gruppe von Substituenten angehören: Halogen, wie Fluor, Chlor und Brom, Alkyl von 1 bis 5 C-Atomen, wie Methyl und Ethyl, und Alkoxy von 1 bis 5 C-Atomen, wie Methoxy und Ethoxy, oder

R ist ein geradkettiger oder verzweigter Alkylrest von 1 bis 6, vorzugsweise 1 bis 4 C-Atomen, wie der Methyl-, Ethyl- und Propyl-Rest, der durch Halogen, wie Chlor, Brom und Fluor, Sulfo und/oder Carboxy substituiert sein kann, wie beispielsweise die Trifluormethylgruppe;

Z ist eine wasserlöslichmachende Gruppe, wie beispielsweise die Sulfo-, Carboxy- und Phosphonsäuregruppe, bevorzugt hiervon die Sulfogruppe, als ein zu den obengenannten Substituenten von A, B und R gegebenenfalls zusätzlicher Substituent an A, B und R, der im Formazanmolekül gemäß der untenstehenden Definition von m einmal bis viermal enthalten ist und an ein aromatisches Kohlenstoffatom oder an ein aliphatisches Kohlenstoffatom von A, B und R oder einem Substituenten davon, wie beispielsweise auch über eine Methylen- oder Ethylenbrücke an ein aromatisches Kohlenstoffatom, vorzugsweise jedoch an ein aromatisches Kohlenstoffatom gebunden ist, wobei Z, sofern es im Molekül 2-, 3- oder 4-mal enthalten ist, verschiedene Bedeutungen innerhalb der obenangegebenen Bedeutungen besitzen kann;

m ist die Zahl 1, 2, 3 oder 4, bevorzugt 1, 2 oder 3;

Y ist die Vinylgruppe oder Ethylgruppe, die in $\beta$-Stellung einen Substituenten enthält, der durch ein Alkali eliminierbar ist, wobei die Gruppe $-SO_2-Y$ als ein zu den obengenannten Substituenten von A und B gegebenenfalls zusätzlicher Substituent an A und B im Formazanmolekül gemäß der untenstehenden Definition von n ein- oder zweimal enthalten ist und an ein aromatisches Kohlenstoffatom von A und B oder an ein aliphatisches Kohlenstoffatom eines Substituenten davon, wie beispielsweise auch über eine Methylen- oder Ethylenbrücke an ein aromatisches Kohlenstoffatom, vorzugsweise jedoch an ein aromatisches Kohlenstoffatom gebunden ist, wobei die Gruppen $-SO_2-Y$ , sofern sie zweimal im Molekül enthalten sind, verschiedene Bedeutungen innerhalb der obenangegebenen Bedeutungen besitzen können;

n ist die Zahl 1 oder 2;

X ist ein Sauerstoffatom oder eine Carbonyloxygruppe der Formel -CO-O- oder eine nur an den Rest A gebundene Gruppe der Formel $-SO_3^{(-)}$ ;

$M^{(+)}$ ist ein Wasserstoffatom oder ein Alkalimetall oder das Äquivalent eines zweiwertigen Metalls, wie eines Erdalkalimetalls, beispielsweise des Calciums oder Magnesiums, vorzugsweise ein Wasserstoffatom und insbesondere Natrium, Kalium oder Lithium.

Die erfindungsgemäßen Verbindungen der allgemeinen Formel (1) können sowohl in saurer Form als auch in Form ihrer Salze, insbesondere der obengenannten Alkali- und Erdalkalimetallsalze, vorliegen. Sie finden, bevorzugt in Form der Alkalimetallsalze, Verwendung zum Färben (einschließlich des Bedruckens) von hydroxygruppen-, aminogruppen- und/oder carbonamidgruppen-haltigen Materialien, insbesondere Fasermaterialien.

Bevorzugt ist A ein Benzolkern, der neben der Gruppe Z und/oder der Gruppe $-SO_2-Y$ mit Y bevorzugt der Vinylgruppe und insbesondere bevorzugt der $\beta$-Sulfatoethyl-Gruppe durch einen Substituenten aus der Gruppe Chlor, Brom, Nitro, Methyl, Ethyl, Methoxy, Ethoxy, Methylsulfonyl, Ethylsulfonyl, Sulfamoyl, N,N-Dimethylsulfamoyl, Phenylsulfonyl, $\beta$-Hydroxyethylsulfonyl, $\beta$-Sulfoethylsulfonyl, Acetylamino, Benzoylamino, Succinylamino, ($\beta$-Sulfatoethylsulfonyl)-amino und N-Methyl-N-($\beta$-sulfatoethylsulfonyl)-amino substituiert sein kann. Bevorzugt ist B der Benzolring, der neben Z und/oder einer Gruppe $-SO_2-Y$ mit Y bevorzugt der Vinylgruppe und insbesondere bevorzugt der $\beta$-Sulfatoethyl-Gruppe durch einen oder zwei Substituenten aus der Gruppe Chlor, Brom, Nitro, Methyl, Ethyl, Methoxy, Ethoxy, Methylsulfonyl, Ethylsulfonyl, Sulfamoyl, N,N-Dimethylsulfamoyl, Phenylsulfonyl, $\beta$-Hydroxyethylsulfonyl, $\beta$-Sulfoethylsulfonyl, Acetylamino, Benzoylamino, Succinylamino, ($\beta$-Sulfatoethylsulfonyl)-amino und N-Methyl-N-($\beta$-sulfatoethylsulfonyl)-amino substituiert sein kann.

Mittels Alkali unter Bildung der Vinylgruppe im Rest Y eliminierbare $\beta$-Substituenten des Ethylrestes sind beispielsweise ein Halogenatom, wie Chlor- oder Bromatom, eine Alkanoyloxygruppe von 2 bis 5 C-Atomen, wie Acetyloxygruppe, eine Aroyloxygruppe, wie die Benzoyloxy-oder Sulfobenzoyloxy-Gruppe, eine Arylsulfonyloxygruppe, wie die p-Methyl-phenylsulfonyloxy-Gruppe, eine niedere Dialkylaminogruppe, wie die Dimethylamino oder Diethylaminogruppe, eine Phosphatogruppe, eine Thiosulfatogruppe und eine Sulfatogruppe. Bevorzugt ist Y die Vinylgruppe und insbesondere die $\beta$-Sulfatoethyl-Gruppe.

Von den Verbindungen der allgemeinen Formel (1) sind insbesondere diejenigen bevorzugt, in welchen A einen Naphthylen- oder Phenylenrest bedeutet, die - neben den angegebenen Gruppen Z und/oder $-SO_2-Y$ - durch 1 oder 2, bevorzugt einen, Substituenten aus der Gruppe Chlor, Brom, Nitro, Methyl, Ethyl, Methoxy, Ethoxy, Methylsulfonyl, Ethylsulfonyl, β-Sulfoethylsulfonyl, Sulfamoyl und N,N-Dimethylsulfamoyl substituiert sein können, und B einen Naphthylen- oder Phenylenrest bedeutet, die - neben den Gruppen Z und/oder $-SO_2-Y$ - durch 1 oder 2 Substituenten aus der Gruppe Chlor, Methyl, Ethyl, Methoxy, Ethoxy, Methylsulfonyl, Ethylsulfonyl und Nitro substituiert sein können. Hierbei ist Z bevorzugt eine Sulfogruppe und an A einmal oder zweimal und/oder an B einmal oder zweimal gebunden und die Gruppe $-SO_2-Y$ an A oder an B oder, im Falle von n gleich 2, an A und B gebunden.

Bevorzugt ist n die Zahl 1, und die Gruppe $SO_2-Y$ ist bevorzugt an B gebunden.

Bevorzugt sind weiterhin Verbindungen der allgemeinen Formel (1), in welchen R Methyl, Ethyl, Phenyl oder Naphthyl, bevorzugt Methyl oder Phenyl, ist. Besonders bevorzugt sind Verbindungen der Formel (1), in welcher A den Phenylenrest bedeutet, der durch eine Methyl-, Ethyl-, Methoxy-, Ethoxy-, Nitro-, β-Sulfoethylsulfonyl-, Methylsulfonyl- oder Ethylsulfonyl-Gruppe oder ein Chloratom substituiert sein kann, B den Phenylenrest bedeutet, der durch eine Gruppe $-SO_2-Y$ substituiert ist, m für die Zahl 1, 2 oder 3 steht, Z die Sulfogruppe bedeutet und an A und/oder B gebunden ist und X den Oxy- oder Carbonyloxyrest bedeutet und M und Y eine der obengenannten, insbesondere bevorzugten Bedeutungen haben.

Insbesondere können solche erfindungsgemäßen Kupferkomplex-Formazan-Verbindungen hervorgehoben werden, die den nachstehenden allgemeinen Formeln (1a), (1b) und (1c) entsprechen:

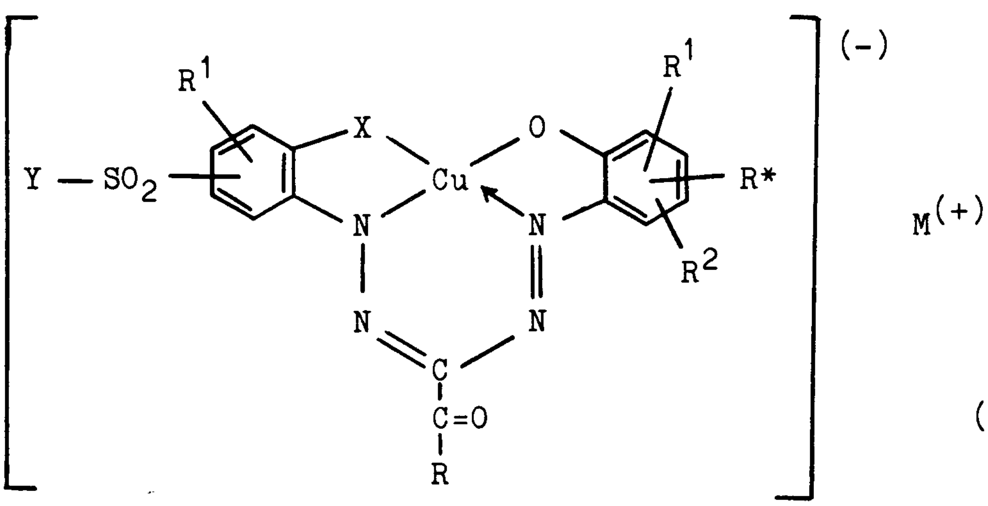

(1a)

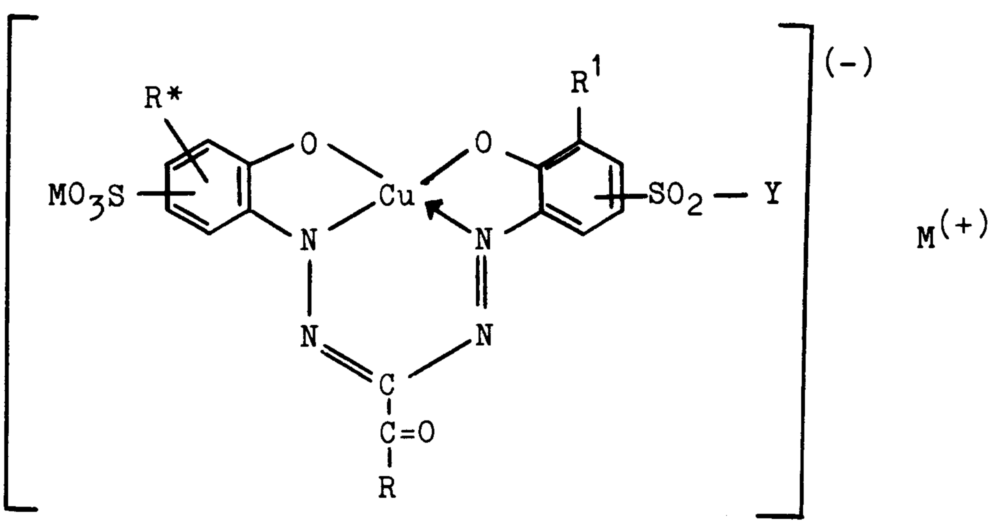

(1b)

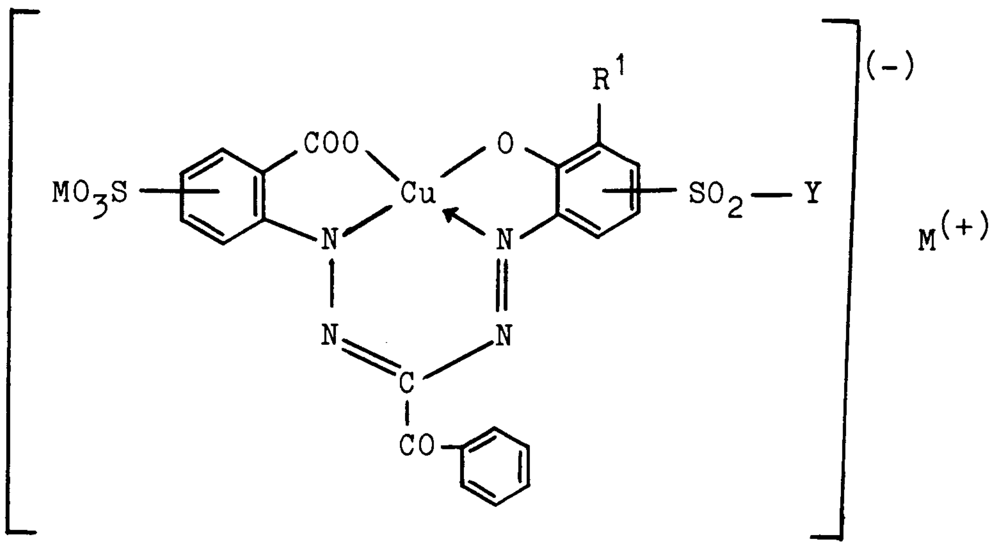

(1c)

In diesen Formeln bedeuten:

- $R^1$ ist ein Wasserstoffatom oder eine Sulfogruppe, wobei jedoch mindestens ein $R^1$ eine Sulfogruppe ist;
- $R^2$ ist Wasserstoff oder β-Sulfatoethylsulfonyl;
- $R^*$ ist Wasserstoff, Sulfo, Chlor, Methylsulfonyl, Ethylsulfonyl, Carboxy, Nitro oder Methyl;
- R ist Methyl oder Phenyl;
- X hat die obengenannte Bedeutung und ist vorzugsweise Carbonyloxy oder Oxy;
- Y hat eine der obengenannten, insbesondere bevorzugten Bedeutungen;
- M ist Wasserstoff oder ein Alkalimetall, wie Natrium, Kalium oder Lithium.

Die Substituenten "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen entsprechend Gruppen der allgemeinen Formel $-OSO_3M$ , jeweils mit M der obengenannten Bedeutung.

Die vorliegende Erfindung betrifft weiterhin Verfahren zur Herstellung der obengenannten und definierten Verbindungen der allgemeinen Formel (1). Die Verfahren sind dadurch gekennzeichnet, daß man eine aromatische Hydrazonverbindung der allgemeinen Formel (2)

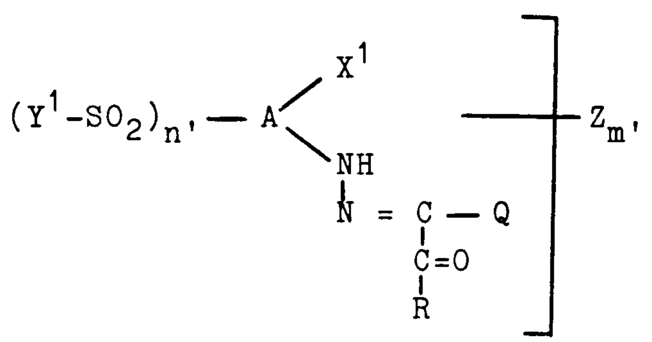

(2)

in welcher

- A, R und Z die obengenannten Bedeutungen haben,
- $X^1$ für die Hydroxy-, Carboxy- oder Sulfogruppe steht,
- $Y^1$ eine der für Y genannten Bedeutungen hat oder die β-Hydroxyethyl-Gruppe ist,
- n' die Zahl Null oder 1 bedeutet,
- m' die Zahl Null, 1, 2 oder 3 bedeutet,
- Q ein Wasserstoffatom oder ein durch Azokupplung ersetzbarer Substituent ist, wie beispielsweise die Carboxygruppe (die aus der entsprechenden Ausgangsverbindung mit Q gleich Carbalkoxy durch alkalische Verseifung erhältlich ist), wobei die Gruppe $X^1$ und die Aminogruppe an A zueinander in ortho-Stellung gebunden sind,

mit der Diazoniumverbindung eines aromatischen Amins der allgemeinen Formel (3)

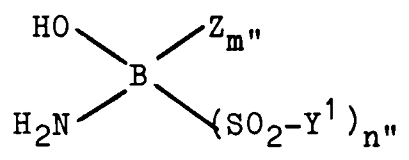

(3)

in welcher

B, Z und $Y^1$ eine der obengenannten Bedeutungen haben, wobei die Hydroxygruppe und die Aminogruppe an B zueinander in ortho-Stellung gebunden sind,

m'' für die Zahl Null, 1 oder 2 steht und

n'' die Zahl Null oder 1 bedeutet,

wobei die Summe von (m' + m'') gleich der Bedeutung von m ist und die Summe von (n' + n'') gleich die Bedeutung von n besitzt, in Gegenwart eines kupferabgebenden Mittels umsetzt,

und im Falle, daß eine oder beide der Gruppen $Y^1$ für die β-Hydroxyethyl-Gruppe stehen, man diese Gruppe(n) in der gebildeten Kupferformazanverbindung analog bekannten Verfahrensweisen mittels einem Sulfatisierungsmittel, wie Schwefelsäure oder Amidosulfonsäure in Pyridin, in die erfindungsgemäße β-Sulfatoethylsulfonyl-Kupferkomplex-Formazanverbindung überführt.

Bei der Synthese der erfindungsgemäßen Verbindungen (1) kann man in üblicher und analog bekannter Verfahrensweise zur Herstellung von Metallkomplexformazanverbindungen verfahren. Vorzugsweise wird das erfindungsgemäße Verfahren bei einem pH-Wert von 3 bis 8, insbesondere 4,5 bis 6, und bei einer Temperatur zwischen etwa 0°C und 30°C durchgeführt, wobei die Reaktionstemperatur während des Kupplungsschrittes auch auf bis zu 60°C erhöht werden kann. Die Zugabe der Reaktionskomponenten kann beliebig sein, jedoch läßt sich das Verfahren leicht als Dreikomponentenreaktion durchführen.

Als kupferabgebende Verbindungen kommen beispielsweise die einfachen und die komplexen Salze des Kupfers in Frage, wie beispielsweise Kupfersulfat, Kupferchlorid, Kupferacetat oder Kupfercarbonat und die Kupfersalze der Salicylsäure oder Weinsäure.

Verwendet man die Kupfersalze von Mineralsäuren, so arbeitet man zweckmäßig in Gegenwart eines säureabstumpfenden Mittels, wie beispielsweise eines Alkali- oder Erdalkalihydroxides oder -carbonats oder eines Alkalimetallsalzes einer niederen Alkancarbonsäure, wie der Essigsäure oder eines basischen Alkalimetallsalzes der Phosphorsäure. Diese Alkali- oder Erdalkaliverbindungen sind insbesondere die Natrium-, Kalium-, Lithium- und Calciumverbindungen, bevorzugt beispielsweise Natriumhydroxid, Kaliumhydroxid, Calciumhydroxid, Natrium-, Lithium- und Kaliumcarbonat, Calciumcarbonat, Natriumbicarbonat, Natriumacetat, Dinatriumhydrogenphosphat, Trinatriumphosphat und Magnesiumoxid.

Das kupferabgebende Mittel wird in äquimolaren Mengen verwendet, so daß auf eine zu bildende Verbindung der Formel (1) ein Kupferatom entfällt. Die Kupplungsreaktion und Metallisierung geht üblicherweise schon bei Raumtemperatur zu Ende, jedoch kann auch eine Reaktionstemperatur von bis zu 60°C gewählt werden.

Die Herstellung der erfindungsgemäßen Verbindungen (1) kann beispielsweise in der Weise durchgeführt werden, daß man eine Hydrazonverbindung der allgemeinen Formel (2) mit einem Alkali, wie Natronlauge oder Natriumcarbonat, in Wasser bei Raumtemperatur löst; vorzugsweise hält man den pH-Wert bei 5 bis 7. Anschließend gibt man die Diazoniumsalzlösung des Amins der allgemeinen Formel (3) hinzu. Vorzugsweise arbeitet man bei einem pH-Wert zwischen 4 und 7, insbesondere zwischen 4,5 und 6. Bevorzugt arbeitet man bei einer Reaktionstemperatur von nicht oberhalb 20°C, insbesondere nicht von oberhalb 15°C. Gleichzeitig, d.h. auch - zusammen mit - , oder nach der Zugabe der Diazoniumverbindung gibt man die äquimolare Menge an dem kupferabgebenden Mittel, beispielsweise als Kupfersulfat in wäßriger Lösung, hinzu. Auch die Metallisierungsreaktion wird vorteilhaft bei einem pH-Wert von 4 bis 6, insbesondere 4,5 bis 6, durchgeführt. Metallisierungs- und Kupplungsreaktion erfolgen gleichzeitig. Die Metallisierungsreaktion verläuft verhältnismäßig schnell. Vor der Isolierung der hergestellten Metallkomplexformazanverbindung ist es jedoch vorteilhaft, die Reaktionslösung auf bis zu 60°C erwärmen und mittels

Kieselgur zu klären. Anschließend stellt man den Ansatz auf einen pH-Wert von 5 bis 6 und isoliert die erfindungsgemäße Verbindung aus der Syntheselösung in üblicher Weise, beispielsweise durch Aussalzen mittels einem Elektrolyten, wie Natriumchlorid oder Kaliumchlorid. Die Verbindung (1) kann gegebenenfalls auch durch Eindampfen der Lösung, wie beispielsweise Sprühtrocknung, isoliert werden. Hierbei empfiehlt es sich, wenn die Umsetzung nicht vollständig erfolgte, restliches ionogenes Kupfer durch übliche Maßnahmen, wie sie aus der Literatur zur Ausfällung von Kupferionen bekannt sind, zu eliminieren, beispielsweise mittels Oxalsäure, Stearinsäure, Trimercapto-triazin, Natriumsulfid und ähnlich wirkenden Mitteln; hierfür dienlich sind auch beispielsweise Ionenaustauscher.

Aldehyde, die erf indungsgemäß als Ausgangsverbindungen dienen, sind insbesondere Methylglyoxal und Phenylglyoxal.

Aromatische Aminoverbindungen der allgemeinen Formel X-A-$NH_2$ , die als Ausgangsverbindungen für die entsprechenden aromatischen Hydrazine dienen, sind zahlreich in der Literatur beschrieben. Solche aromatischen Amine sind beispielsweise 2-Aminophenol, 2-Aminophenol-4-oder -5-sulfonsäure, 2-Amino-phenol-3,5- oder -4,6-disulfonsäure, 2-Aminophenol-4- oder -5-sulfonsäureamid, 4-Ethylsulfonyl-2-aminophenol, 4-Ethylsulfonyl-6-sulfo-2-aminophenol,4-Methylsulfonyl-6-sulfo-2-aminophenol, 6-Acetylamino-2-amino-phenol-4-sulfonsäure, 6-Chlor-2-aminophenol-4-sulfonsäure, 6-Nitro-2-aminophenol-4-sulfonsäure, 4-Chlor-2-aminophenol-6-sulfonsäure, 4-Nitro-2-aminophenol-6-sulfonsäure, 4-Methyl-2-aminophenol-6-sulfonsäure, 6-Succinylamino-2-aminophenol-4-sulfonsäure, 6-Sulfobenzoylamino-2-aminophenol-4-sulfonsäure, 6-Methyl-4-sulfo-2-aminophenol, 4- oder 5-Methyl-2-aminophenol, 4- oder 5- oder 6-Chlor-2-aminophenol, 4-Sulfo-6-carboxy-2-aminophenol, 4-Methoxy-2-aminophenol, 5-Methylsulfonyl-2-aminophenol, 4-Diethylsulfamoyl-6-sulfo-2-aminophenol, 4-Brom-6-sulfo-2-aminophenol, 4- oder 5-(N-β-Hydroxyethyl)-sulfamoyl-2-aminophenol, 4-(N-Methyl-N-β-sulfatoethyl sulfonyl)-amino-6-sulfo-2-aminophenol, 4-(N-β-Sulfatoethylsulfonyl)-amino-2-aminophenol, 6-Chlor-4-nitro-2-aminophenol, 1-Amino-2-naphthol, 2-Amino-3-naphthol, 1-Amino-2-naphthol-4oder -6-sulfonsäure, 1-Amino-2-naphthol-3,6- oder -4,6-oder 4,7-disulfonsäure, 6-Nitro-1-diazo-2-naphthol-4-sulfonsäure, 4-(β-Sulfatoethylsulfonyl)-2-aminophenol und dessen in 6-Stellung durch Chlor oder Nitro oder Methyl substituierten Derivate, 5-(β-Sulfatoethylsulfonyl)-2-aminophenol, 4-(β-Sulfatoethylsulfonyl)-6-sulfo-aminophenol, die β-Hydroxyethylsulfonyl-Derivate dieser β-Sulfatoethylsulfonyl-Verbindungen, 4-(N-Methyl-N-β-sulfoethyl-sulfonyl)-amino-6-sulfo-2-aminophenol, 4-(N-Methyl-N-β-sulfoethyl-sulfonyl )-amino-6-sulfo-2-aminophenol, 4-(N-β-Sulfoethylsulfonyl )-amino-2-aminophenol, 4-(β-Sulfoethylsulfonyl)-2-aminophenol und dessen in 6-Stellung durch Chlor oder Nitro oder Methyl substituierten Derivate, 5-(β-Sulfoethylsulfonyl)-2-aminophenol, 4-(β-Sulfatoethylsulfonyl)-6-sulfoaminophenol, 2-Amino-benzoesäure, 4- oder 5-Sulfo-2-amino-benzoesäure, 5-Nitro-2-aminobenzoesäure, 5-Chlor-2-amino-benzoesäure, 5-Methoxy-2-amino-benzoesäure, 5-Sulfamoyl-2-amino-benzoesäure, 5-Methylsulfamoyl-2-amino-benzoesäure, 5-Phenylsulfamoyl-2-amino-benzoesäure, 2-Amino-4-(β-hydroxyethylsulfonyl)-benzoesäure, 2-Amino-4(β-sulfatoethylsulfonyl)-benzoesaure, 2-Amino-5-(β-hydroxyethylsulfonyl)-benzoesäure, 2-Amino-5-(β-sulfatoethylsulfonyl)-benzoesaure, Anilin-2-sulfonsäure, Anilin-2,4-disulfonsäure, Anilin-2,5-disulfonsäure, 5- und 4-Methyl-anilin-2-sulfonsäure, 2,4-Dimethyl-anilin-6-sulfonsäure, 4,5-Dimethyl-anilin-2-sulfonsäure, 2-Methyl-anilin-4,6-disulfonsäure, 4-Methyl-anilin-2,5-disulfonsäure, 4- und 5-Methoxy-anilin2-sulfonsäure, 4-Methoxy-5-chlor-anilin-2-sulfonsäure, 4,5-Dimethoxy-anilin-2-sulfonsäure, 4- und 5-Ethoxy-anilin-2-sulfonsäure, 4- und 5-Hydroxy-anilin-2-sulfonsäure, 5-Hydroxy-anilin-2,4-disulfonsäure, 4- und 5-Carboxy-anilin-2-sulfonsäure, 4-Hydroxy-3-carboxy-anilin-2-sulfonsäure, 4- und 5-Nitro-anilin-2-sulfonsäure, 2,4-Dinitro-anilin-6-sulfonsäure, 5-Nitro-4-chlor-anilin-2-sulfonsäure, 4-Fluor-anilin-2-sulfonsäure, 3-, 4- und 5-Chlor-anilin-2-sulfonsäure, 4,5-Dichlor-anilin-2-sulfonsäure, 2,4-Dichlor-anilin-6-sulfonsäure,2,4,5-Trichlor-anilin-2-sulfonsäure, 4-Chlor-5-carboxy-anilin-2-sulfonsäure, 2,5-Dichlor-4-nitro-anilin-6-sulfonsäure, 4- und 5-Brom-anilin-2-sulfonsäure, 2,4- und 3,4-Dibrom-anilin-6-sulfonsäure, 4- und 5-Jod-anilin-2-sulfonsäure, 4- und 5-Acetamino-anilin-2-sulfonsäure, 1-Naphthylamin-2-sulfonsäure, 2-Naphthylamin-1-sulfonsäure, 1 -Naphthylamin-2,4-disulfonsäure, 1-Naphthylamin-2,5-disulfonsäure, 2-Naphthylamin-1,5-disulfonsäure, 2-Naphthylamin-1,7-disulfonsäure, 2-Naphthylamin-3,6-disulfonsäure, 2-Naphthylamin-3,7-disulfonsäure, 1-Naphthylamin-2,4,7-trisulfonsäure, 2-Naphthylamin-3,6,8-trisulfonsäure und 2-Naphthylamin1,5,7-trisulfonsäure, 2-Amino-4-(β-hydroxyethylsulfonyl)-benzolsulfonsäure, 2-Amino-4-(β-sulfatoethylsulfonyl)-benzolsulfonsäure, 2-Amino-4(β-hydroxyethylsulfonyl)-benzol-1,5-disulfonsäure, 2-Amino-4-(β-sulfatoethylsulfonyl)-benzol-1,5-disulfonsäure, 2-Amino-β-(2-hydroxyethylsulfonyl)-benzolsulfonsäure und 2-Amino-5-(β-sulfatoethylsulfonyl)-benzolsulfonsäure.

Die bei der Synthese der erfindungsgemäßen Verbindungen (1) als Diazokomponenten dienenden ortho-Hydroxy-arylamine mit dem Formelrest B sind beispielsweise alle diejenigen für die Derivate mit dem Formelrest A genannten Verbindungen, die o-Amino-phenol und o-Amino-naphthol-Derivate darstellen.

Die als Ausgangsverbindung dienenden Hydrazonverbindungen der Formel (2) mit Q gleich Wasserstoff gewinnt man aus den entsprechenden Phenyl- und Naphthylhydrazinen - die wiederum in an und für sich üblicher und bekannter Weise, beispielsweise aus den entsprechenden Diazoniumverbindungen mit Salzen

der schwefligen Säure unter Hydrolyse der intermediären N-Sulfonsäuren mit Mineralsäuren, hergestellt werden können, - durch Umsetzung mit dem entsprechenden Aldehyd der allgemeinen Formel R-CO-CHO mit R der obengenannten Bedeutung.

Die Hydrazonverbindungen der allgemeinen Formel (2) mit Q gleich der erwähnten abspaltbaren Carboxygruppe kann man vorzugsweise auch in an und für sich üblicher Weise erhalten, wenn man eine zweifach ankuppelbare Methylenverbindung, die den Strukturanteil des Formelrestes R-CO- enthält, mit der Diazoniumverbindung einer aromatischen Aminoverbindung der allgemeinen Formel (4)

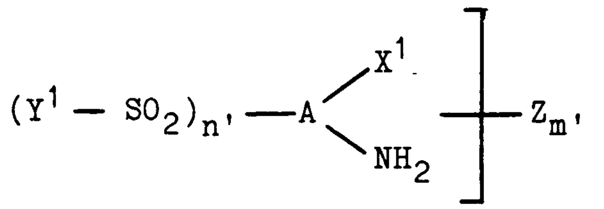

(4)

in welcher $Y^1$, n', A, $X^1$, Z und m' die obengenannten Bedeutungen haben, kuppelt. Zweifach ankuppelbare Methylenverbindungen, die nach erfolgter Kupplung am Methinkohlenstoff noch eine gegebenenfalls abgewandelte Carboxygruppe aufweisen, sind beispielsweise die Benzoylessigester, wie der Benzoylessigsäuremethylester oder Benzoylessigsäureethylester, Benzoylaceton oder die Benzoylessigsäureester, deren Benzolreste durch Carboxy, Sulfo, Nitro und/oder Chlor substituiert sind, desweiteren die Acetylessigester, wie der Acetylessigsäuremethylester und der Acetylessigsäureethylester, Acetylaceton, die Butyrylessigsäureester, wie beispielsweise die Methyl- und Ethylester, die Propionylessigsäureester, wie beispielsweise die Methyl- und Ethylester, desweiteren Acetylessigsäure, Benzoylessigsäure, Acetylessigsäureamid und Benzoylessigsäureamid. Nach erfolgter alkalischer Hydrolyse der Estergruppe kann das Hydrazon der Formel (2), sofern es eine Gruppe enthält, in welcher $Y^1$ für $\beta$-Hydroxyethyl-Gruppe steht, mittels Schwefelsäure oder Schwefeltrioxid enthaltender Schwefelsäure zur Sulfatoverbindung verestert werden.

Die erfindungsgemäßen Kupferkomplexformazanverbindungen (im nachstehenden Verbindungen (1) genannt) besitzen wertvolle Farbstoffeigenschaften. Sie werden bevorzugt zum Färben (im allgemeinen Sinne) von hydroxy-, amino- und/oder carbonamidgruppenhaltigen Materialien, beispielsweise in Form von Flächengebilden, wie Papier und Leder, oder in der Masse, wie Polyamid und Polyurethan, insbesondere von solchen Materialien in Faserform, verwendet.

Die vorliegende Erfindung betrifft demnach auch die Verwendung der Verbindungen (1) zum Färben (einschließlich Massefärbung und Druckfärbung) dieser Materialien bzw. Verfahren zum Färben solcher Materialien in an und für sich üblicher Verfahrensweise, bei welchen eine Verbindung (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Verbindungen (1) lassen sich auf den genannten Substraten, insbesondere auf den genannten Fasermaterialien, nach den für wasserlösliche Farbstoffe, insbesondere für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie beispielsweise Natriumchlorid oder Natriumsulfat, sehr gute Farbausbeuten. Man färbt bei Temperaturen zwischen 40 und 100 °C, gegebenenfalls bei Temperaturen bis zu 120 °C unter Druck, gegebenenfalls in Gegenwart von üblichen Färbereihilfsmitteln, in wäßrigem Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch ers nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu etwa 60 °C,

durch Dämpfen oder mit Trockenhitze in üblicher Weise fixiert werden kann.

Ebenfalls nach den üblichen Druckverfahren für Cellulosefasern erhält man farbstarke Drucke mit gutem Stand der Konturen und einem klaren Weißfond. Der Ausfall der Drucke ist von wechselnden Fixierbedingungen nur wenig abhängig. Die Druckverfahren können Einphasen-Verfahren sein, nach denen das Material mit einer beispielsweise Natriumbicarbonat oder ein anderes säurebindendes Mittel und die Verbindung (1) enthaltenden Druckpaste bedruckt und die Verbindung (1) durch anschließendes Dämpfen bei 101 bis 103 °C auf der Faser fixiert wird, oder können Zweiphasen-Verfahren sein, nach denen das Material beispielsweise mit neutraler oder schwach saurer Druckfarbe, die die Verbindung (1) enthält, bedruckt wird und sodann die Verbindung (1) durch Hindurchführen des bedruckten Materials durch ein heißes elektrolythaltiges alkalisches Bad oder durch Überklotzen mit einer alkalischen elektrolythaltigen Klotzflotte und anschließendem Verweilen dieses überklotzten Materials oder anschließendem Dämpfen oder anschließender Behandlung mit Trockenhitze auf dem Material fixiert wird. Sowohl in der Färberei als auch in der Druckerei sind die mit den Verbindungen (1) erhaltenen Fixiergrade hoch.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindungen (1) auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natrium-trichloracetat, Wasserglas und Trinatriumphosphat.

Durch die Behandlung der Verbindungen (1) mit den säurebindenden Mitteln, gegebenenfalls unter Wärmeeinwirkung, werden die Verbindungen (1) chemisch an die Faser gebunden; insbesondere die Cellulosefärbungen zeigen nach der üblichen Nachbehandlung durch Spülen zur Entfernung von nicht fixierten Farbstoffanteilen ausgezeichnete Naßechtheiten.

Für das coloristische Verhalten der Verbindungen (1) ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Aufbau und hohe Fixiergeschwindigkeit nach den üblichen Färbe- und Druckverfahren, besonders bei niederen Temperaturen (d.h. Raumtemperatur und bis zu 50 °C), durch eine gleiche Farbtiefe beim Färben auf Baumwolle und Regeneratcellulosefasern, durch ein egales Warenbild der mit ihnen hergesellten Färbungen und Drucke und ebenfalls durch einen gleichmäßigen Ausfall der Färbungen aus langer Flotte bei Zugabe verschiedener Mengen an Elektrolyten auszeichnen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zustz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das zuerst schwach alkalisch eingestellte Bad eingebracht, dort einige Zeit darin bewegt, das Färbebad dann auf einen schwach sauren, vorzugsweise schwach essigsauren, pH-Wert eingestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden. Anschleißend kann eine Nachbehandlung in ammoniakalischem Bad erfolgen.

Die mit den Verbindungen (1) hergestellten Färbungen und Drucke zeichnen sich durch bordorote bis marineblaue Farbtöne aus. Insbesondere die Färbungen und Drucke auf Cellulosefasermaterialien besitzen, wie bereits erwähnt, eine hohe Farbstärke ebenso gute Licht-, gute Naßlicht- und Schweißlichtechtheiten, eine gute Hypochloritbleichechtheit und Chlorbadewasserechtheit, gute Bügel-, Überfärbe- und Reibechtheiten und weiterhin gute Wasch-, Walk-, Alkali-, Säure- und Schweißechtheiten. Nicht fixierte Anteile an Farbstoff lassen sich leicht und vollständig wieder aus dem Fasermaterial auswaschen, was eine wesentliche Voraussetzung für die guten Naßechtheiten der erhältlichen Färbung ist. Desweiteren sind die Färbungen gegen die üblichen Kunstharzappreturen stabil. Ein Teil der Verbindungen (1) sind in der Reinheit des Farbtones und wichtigen Echtheitseigenschaften mit Reaktivfarbstoffen der Azoreihe vergleichbar, überragen diese aber teilweise in wesentlichen Echtheiten, wie beispielsweise der Lichtechtheit.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.
Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel A**

225 Teile 6-Chlor-2-aminophenol-4-sulfonsäure werden in 800 Teilen eines Gemisches aus Eis und Wasser in üblicher Weise diazotiert; der Ansatz wird sodann auf einen pH-Wert von 6 gestellt und bei 0 bis 10°C unter Einhaltung eines pH-Wertes von 8 bis 9 in eine Lösung von 192 Teilen Benzoylessigsäureetylester in 1000 Teilen Wasser und 90 Volumenteilen einer konzentrierten Natronlauge eingerührt. Danach wird mit Salzsäure auf einen pH-Wert von 5 angesäuert, die ausgefallene Verbindung der Formel

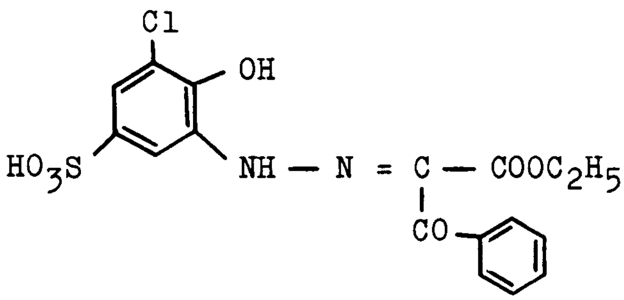

isoliert und anschließend in 2000 bis 3000 Teilen Wasser bei einem pH-Wert von 7 und einer Temperatur von 50°C gelöst. Durch Zugabe von 100 Volumenteilen einer konzentrierten Natronlauge wird die Carbethoxygruppe in dieser Verbindung bei einem pH-Wert zwischen 10 und 12 während einer Stunde zur Carboxygruppe verseift. Durch anschließende Einstellung des pH-Wertes dieses Ansatzes auf 4 bis 5 fällt man die Carboxy-hydrazon-Verbindung aus. Durch Filtration erhält man sie in hoher Ausbeute und Reinheit.

**Beispiel B**

Eine zur Herstellung von erfindungsgemäßen Kupferkomplex-Formazanverbindungen als Ausgangsverbindung dienende Carboxy-hydrazon-Verbindung wird wie folgt hergestellt: 297 Teile 4-($\beta$-Hydroxyethylsulfonyl)-2-aminophenol-6-sulfonsäure werden in einem Gemisch aus 1000 Teilen Eis und Wasser in üblicher Weise diazotiert. Die Diazoniumsalzsuspension wird sodann mit Natriumcarbonat auf einen pH-Wert von 5 gestellt und zu einer Lösung von 192 Teilen Benzoylessigsäure-ethylester in einem Gemisch aus 1000 Teilen Wasser und 90 Volumenteilen einer konzentrierten Natronlauge gegeben; die Umsetzung erfolgt bei einem pH-Wert von 9 und einer Temperatur von 0 bis 10°C. Die anschließende Esterhydrolyse erfolgt bei einem pH-Wert von 10 bis 12 und einer Temperatur von 50°C während einer Reaktionszeit von 3 bis 4 Stunden nach Zugabe einer entsprechenden Menge an konzentrierter Natronlauge. Anschließend stellt man den Ansatz auf einen pH-Wert von 2 bis 3. Die ausfallende Phenylhydrazonverbindung wird isoliert und getrocknet und sodann zu der dreifachen Gewichtsmenge einer Schwefelsäure oder einem bis zu 20%igen Oleum bei einer Temperatur von höchstens 20°C eingetragen. Man rührt noch einige Zeit nach, gibt sodann den Ansatz auf Eis und isoliert, gegebenenfalls nach Zusatz eines Elektrolytsalzes, wie Natriumchlorid, das ausgefallene Phenylhydrazon der Formel

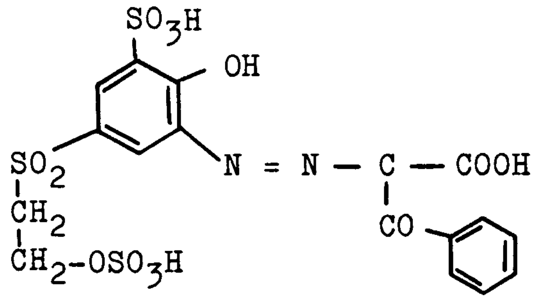

.

**Beispiel 1**

Eine wäßrige Lösung mit einem pH-Wert von 6,5 bis 7 von 40 Teilen der Carboxy-hydrazon-Ausgangsverbindung des Beispieles A wird bei 5 bis 15 ° C mit der wäßrigen Lösung des Diazoniumsalzes von 37,7 Teilen 4-(β-Sulfatoethylsulfonyl)-6-sulfo-2-aminophenol und anschließend langsam bei 10 bis 15 ° C mit 100 Volumenteilen einer wäßrigen 1-molaren Kupfersulfatlösung innerhalb von 15 Minuten unter Einhaltung eines pH-Wertes zwischen 4,0 und 6,5 versetzt.

Man rührt zur Beendigung der Kupplungsreaktion noch eine Stunde nach, erwärmt gegebenenfalls die Reaktionsmischung auf 40 bis 50 ° C, rührt den Ansatz eine Stunde weiter, klärt ihn mit Kieselgur, fällt die gebildete Kupferkomplex-Formazanverbindung aus dem Filtrat mit Natriumchlorid aus, filtriert sie ab, wäscht sie mit verdünnter wäßriger Natriumchloridlösung und trocknet sie.

Es wird ein dunkles, elektrolythaltiges Pulver des Alkalimetallsalzes (Natriumsalzes) der Verbindung der Formel

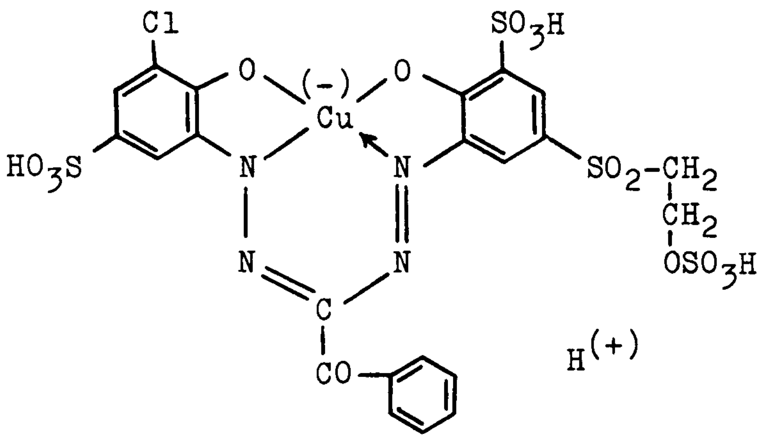

($\lambda_{max}$ = 576 nm)

erhalten. Sie eignet sich sehr gut als Farbstoff und färbt beispielsweise Baumwolle und regenerierte Cellulosefasern aus langer Flotte in Gegenwart eines säurebindenden Mittels mit hoher Fixiergeschwindigkeit in blaustichigen Bordotönen. Die in üblicher Weise nachbehandelte Färbung (beispielsweise durch 10-minütige kochende Behandlung in einem ein nichtionogenes Waschmittel enthaltenden wäßrigen Bad und Spülen mit Wasser) besitzt gute Licht- und Naßechtheiten, von denen insbesondere die guten Wasch-, Walk- und Schweißechtheiten, die gute Chlorwasserechtheit, die Naßlichtechtheit und die Schweißlichtechtheit hervorgehoben werden können. Weiterhin ist die gute Stabilität von Drucken gegen saure Hydrolyse erwähnenswert.

**Beispiel 2**

Die erfindungsgemäße β-Sulfatoethylsulfonyl-Kupferkomplex-Formazanverbindung wird in deren entsprechende Vinylsulfonyl-Verbindung übergeführt, indem man die aus dem Beispiel 1 erhaltene Syntheselösung mit 9 Volumenteilen einer konzentrierten wäßrigen Natronlauge versetzt und einige Zeit bei 15 bis 25 °C rührt, oder indem man die wäßrige Syntheselösung auf 50 bis 55 °C erwärmt und eine Lösung von 21 Teilen Natriumcarbonat in 76 Teilen Wasser innerhalb von 5 bis 10 Minuten hinzugibt und zur vollständigen Umsetzung noch 30 bis 40 Minuten bei einem pH-Wert von 9,2 rührt. Anschließend gibt man 20 Volumenteile einer 17%igen wäßrigen Salzsäure bei 50 bis 55 °C hinzu und stellt den pH-Wert auf 6,5. Die erfindungsgemäße Vinylsulfonyl-Verbindung, die in wäßriger Lösung ein Absorptionsmaximum bei 575 nm zeigt, wird aus der Syntheselösung in üblicher Weise isoliert, beispielsweise durch Sprühtrocknung. Sie besitzt ebenfalls sehr gute Farbstoffeigenschaften und färbt beispielsweise Baumwolle und regenerierte Cellulosefasern oder Wolle nach den für faserreaktive Farbstoffe üblichen Applikations- und Fixierverfahren in den für die erfindungsgemäße Verbindung des Beispieles 1 angegebenen guten Eigenschaften.

Die erfindungsgemäße Vinylsulfonyl-Kupferformazanverbindung kann auch analog der Verfahrensweise des Beispieles 1 hergestellt werden, indem man anstelle der dort verwendeten wäßrigen Diazoniumsalzlösung aus 4-(β-Sulfatoethylsulfonyl)-6-sulfo-2-aminophenol die äquivalente Menge an dem Diazoniumsalz von 4-Vinylsulfonyl-6-sulfo-2-aminophenol einsetzt.

**Beispiel 3**

Zur Herstellung der erfindungsgemäßen β-Thiosulfatoethylsulfonyl-Kupferkomplex-Formazanverbindung mit der Struktur der erfindungsgemäßen Verbindung des Beispieles 1 kann analog der Verfahrensweise des Beispieles 1 unter Verwendung des 4-(β-Thiosulfatoethylsulfonyl)-6-sulfo-2-aminophenols als Diazokomponente verfahren. Man kann jedoch auch zur Herstellung der erfindungsgemäßen β-Thiosulfatoethylsulfonyl-Verbindung von der aus der Synthese erhaltenen Lösung der Vinylsulfonyl-Verbindung des Beispieles 2 ausgehen und diese bei einem pH-Wert von 6,8 bis 7,2 und einer Temperatur von 70 bis 75 °C mit 37,5 Teilen krist. Natriumthiosulfat versetzen. Zur Vervollständigung der Umsetzung rührt man den Ansatz etwa 4 Stunden unter Einhaltung eines pH-Wertes zwischen 5,7 und 6,2 mittels Essigsäure, klärt sodann durch Kieselgur und Filtration und fällt die erfindungsgemäße β-Thiosulfatoethylsulfonyl-Verbindung durch Zugabe von Kaliumchlorid in einer Menge von 15 %, bezogen auf das Volumen des Filtrats, aus. Man läßt unter Rühren abkühlen, saugt die ausgeschiedene Verbindung ab und trocknet sie.

Man erhält die erfindungsgemäße β-Thiosulfatoethylsulfonyl-Verbindung als Alkalimetallsalz, vorwiegend Kaliumsalz, in Form eines elektrolytsalzhaltigen dunklen Pulvers. Sie besitzt ein Absorptionsmaximum bei 576 nm, zeigt sehr gute färberische Eigenschaften und färbt beispielsweise Baumwolle in kräftigen bordofarbenen Tönen mit den für die erfindungsgemäße Verbindung des Beispieles 1 angegebenen guten Echtheitseigenschaften.

**Beispiel 4**

Man schlämmt 30 Teile der Carboxy-hydrazon-Verbindung, erhältlich durch Kupplungsreaktion des Diazoniumsalzes von 4-Sulfo-2-aminophenol an Acetessigsäureethylester und anschließende alkalische Verseifung der Estergruppe, in 250 Teilen Wasser an und löst die Verbindung mit konzentrierter wäßriger Natronlauge bei einem pH-Wert von 6,5 bis 7. Man gibt sodann bei einem pH-Wert von etwa 6 und einer Temperatur von 5 bis 15 °C eine wäßrige Lösung des Diazoniumsalzes aus 37,7 Teilen 4-(β-Sulfatoethylsulfonyl)-6-sulfo-2-aminophenol und anschließend langsam 25 Teile krist. Kupfersulfat, gegebenenfalls in Form einer wäßrigen Lösung, hinzu und hält den pH-Wert zwischen 4,5 und 6,5. Man erwärmt den Ansatz auf 30 bis 40 °C, rührt noch etwa 4 Stunden, klärt die Syntheselösung bei einem pH-Wert von 5,5 und isoliert die erfindungsgemäße Verbindung in üblicher Weise, beispielsweise durch Sprühtrocknung oder Aussalzen.

Die erfindungsgemäße Kupferkomplex-Formazan-Verbindung der Formel (in Form der freien Säure geschrieben)

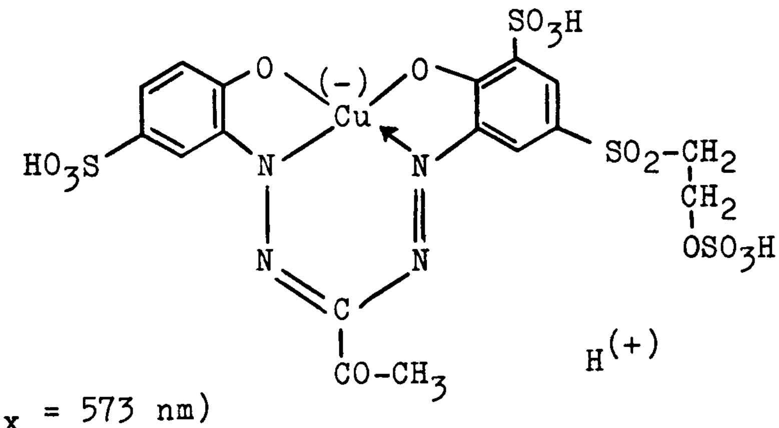

($\lambda_{max}$ = 573 nm)

zeigt sehr gute Farbstoffeigenschaften und färbt nach üblichen Applikations- und Fixiermethoden für faserreaktive Farbstoffe beispielsweise Cellulosefasermaterialien in tiefen, klaren, blauvioletten Farbtönen mit guten Licht- und Naßechtheiten.

Die erfindungsgemäße Kupferkomplex-Formazanverbindung des Beispieles 4 kann auch in der Weise hergestellt werden, daß man 26 Teile der Hydrazonverbindung, erhältlich aus 2-Hydroxy-5-sulfo-phenylhydrazin und Methylglyoxal, analog den Angaben des Beispieles 4 mit dem Diazoniumsalz des 4-($\beta$-Sulfatoethylsulfonyl)-6-sulfo-2-aminophenols umsetzt.

**Beispiel 5**

43 Teile einer Carboxy-hydrazon-Verbindung, erhältlich gemäß bekannten Verfahrensweisen durch Kupplungsreaktion von diazotierter Anilin-2,5-disulfonsäure mit Benzoylessigsäure-ethylester bei einem pH-Wert von 13 und anschließende alkalische Hydrolyse der Estergruppe, werden in Form einer wäßrigen, neutralen Lösung (etwa 400 Teile) mit der wäßrigen Lösung des Diazoniumsalzes von 29,7 Teilen 4-($\beta$-Sulfatoethylsulfonyl)-2-aminophenol versetzt. Die Umsetzung erfolgt bei einem pH-Wert von 4,5 bis 6,5 und einer Temperatur von 10 bis höchstens 20 °C. Danach setzt man bei einer Temperatur zwischen 10 und 15 °C langsam 100 Volumenteile einer wäßrigen 1-molaren Kupfersulfatlösung hinzu und hält den pH-Wert weiterhin bei 4,5 bis 6,5. Man rührt noch einige Stunden nach und isoliert nach einer Klärfiltratrion bei einem pH-Wert von 5 die erhaltene erfindungsgemäße Kupferkomplex-Formazanverbindung in üblicher Weise. Man erhält in Form eines elektrolythaltigen Pulvers das Natriumsalz der Verbindung der Formel

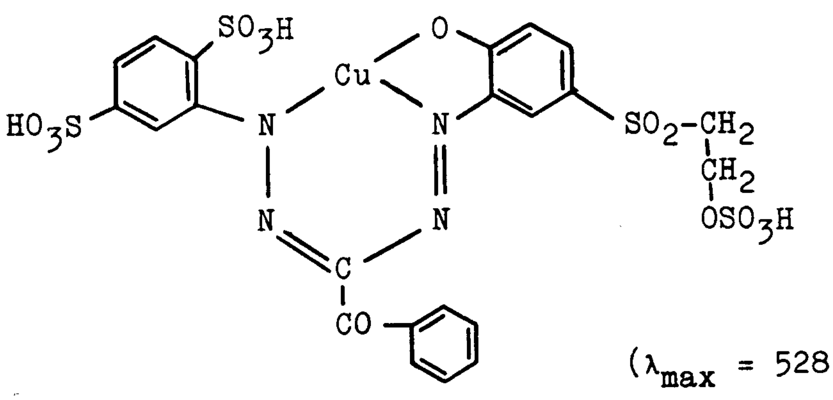

($\lambda_{max}$ = 528 nm).

Die erfindungsgemäße Verbindung zeigt sehr gute faserreaktive Farbstoffeigenschaften und färbt die in der Beschreibung genannten Materialien, wie beispielsweise Cellulosefasermaterialien oder natürliche oder synthetische Polyamidfasermaterialien, nach den für faserreaktive Farbstoffe üblichen Applikations- und Fixiermethoden in blaustichig bordofarbenen Tönen mit hoher Farbstärke und guten Echtheitseigenschaften.

**Beispiel 6**

Zur Herstellung einer erfindungsgemäßen Kupferkomplex-Formazanverbindung verfährt man gemäß der Verfahrensweise des Beispieles 5, geht jedoch von 32 Teilen des Phenylhydrazons aus, das aus 2,5-Disulfo-phenylhydrazin und Methylglyoxal erhältlich ist.
Die erfindungsgemäße Verbindung hat, in Form der freien Säure geschrieben, die Formel

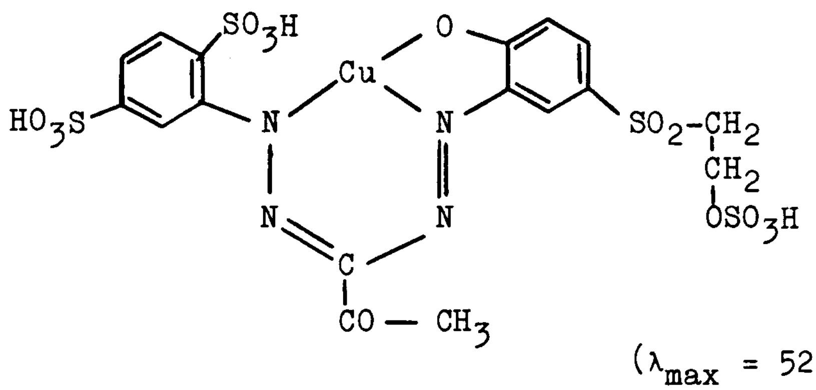

($\lambda_{max}$ = 521 nm).

Sie wird als Alkalimetallsalz isoliert und besitzt gute Farbstoffeigenschaften. Beispielsweise werden Cellulosefasermaterialien in farbstarken rotvioletten Tönen mit guten Echtheitseigenschaften erhalten.

**Beispiel 7**

Zu etwa 250 Teilen einer wäßrigen Lösung mit einem pH-Wert von 5,5 bis 6,5 von 55 Teilen der Phenylhydrazon-Ausgangsverbindung des Beispiels B gibt man gleichzeitig innerhalb von 15 Minuten und unter Einhaltung einer Temperatur zwischen etwa 5 und 20 °C, vorzugsweise 10 bis 15 °C, und einem pH-Wert zwischen 4,5 und 6,5 250 Teile einer wäßrigen Diazoniumsalzlösung aus 37,7 Teilen 4-($\beta$-Sulfatoethyl-sulfonyl)-6-sulfo-2-aminophenol und 100 Volumenteilen einer wäßrigen 1-molaren Kupfersulfatlösung (die Diazoniumsalzlösung und die Kupfersulfatlösung können zuvor auch vereinigt werden). Man rührt das Reaktionsgemisch noch etwa 1 Stunde bei 15 bis 25 °C nach und erwärmt es dann auf 40 bis 50 °C. Nachdem kein Diazoniumsalz mehr nachweisbar ist, stellt man den Ansatz auf einen pH-Wert von 5, klärt mittels Kieselgur und Filtration und fällt aus dem Filtrat mit Hilfe von Natriumchlorid die erfindungsgemäße Kupferformazanverbindung aus. Man filtriert ab, wäscht mit verdünnter wäßriger Natriumchloridlösung und trocknet den Rückstand.

Man erhält das Alkalimetallsalz der erfindungsgemäßen Verbindung der Formel

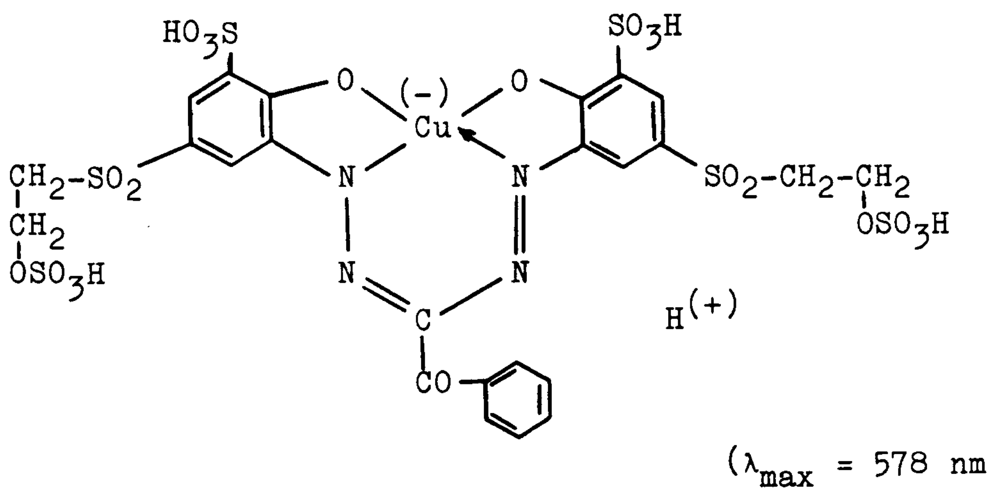

($\lambda_{max}$ = 578 nm)

die sehr gute faserreaktive Farbstoffeigenschaften besitzt und beispielsweise Cellulosefasermaterialien, wie Baumwolle, in farbtiefen, violetten Tönen mit guten Echtheiten, insbesondere guten Lichtechtheiten, färbt.

**Beispiel 8**

Zur Herstellung einer erfindungsgemäßen Kupferkomplex-Formazanverbindung verfährt man gemäß der Verfahrensweise des Beispieles 7, setzt jedoch als Diazoniumsalz das von 22,5 Teilen 6-Chlor-2-aminophenol-4-sulfonsäure ein. Die synthetisierte erfindungsgemäße Verbindung besitzt, in Form der freien Säure geschrieben, die Formel

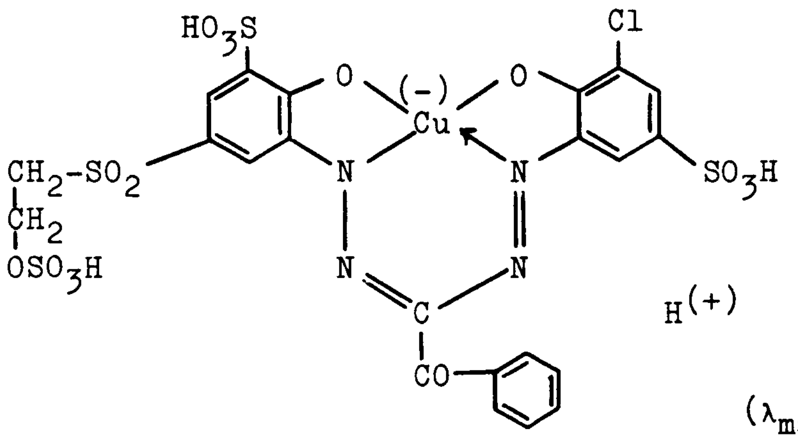

($\lambda_{max}$ = 576 nm)

und färbt insbesondere Cellulosefasermaterialien, wie Baumwolle, nach den in der Technik üblichen Applikations-und Fixiermethoden in farbtiefen bordofarbenen Tönen mit guten Licht- und Naßechtheiten, wie beispielsweise guten Waschechtheiten und guten alkalischen und sauren Schweißechtheiten.

**Beispiel 9**

Man geht von einer neutralen wäßrigen Lösung (etwa 250 Teile) von 40 Teilen eines Carboxyphenylhydrazons (erhältlich durch Ankupplung von 2-Amino-4-sulfo-benzoesäure an Benzoylessigsäureethylester und anschließende alkalische Hydrolyse der Estergruppe) aus und gibt bei einer Temperatur von 5 bis 15 °C und einem pH-Wert von 5 die schwach sauer eingestellte wäßrige Diazoniumsalzlösung aus 37,7 Teilen 4-($\beta$-sulfatoethylsulfonyl)6-sulfo-2-aminophenol und anschließend stetig innerhalb von 5 Minuten bei 10 bis 15 °C und Einhaltung eines pH-Wertes zwischen 4,5 und 6,5 100 Volumenteile einer wäßrigen 1-molaren Kupfersulfatlösung hinzu. Man rührt noch 10 bis 12 Stunden zur Beendigung der Kupplungsreaktion bei 20 °C nach, erwärmt das Reaktionsgemisch sodann auf 40 bis 50 °C, rührt es noch eine Stunde weiter und klärt mittels Kieselgur und Filtration bei einem pH-Wert von 12,5. Die erfindungsgemäße Kupferkomplex-Formazanverbindung wird aus dem Filtrat mittels Natriumchlorid ausgefällt und isoliert. Sie besitzt, in Form der freien Säure geschrieben, die Formel

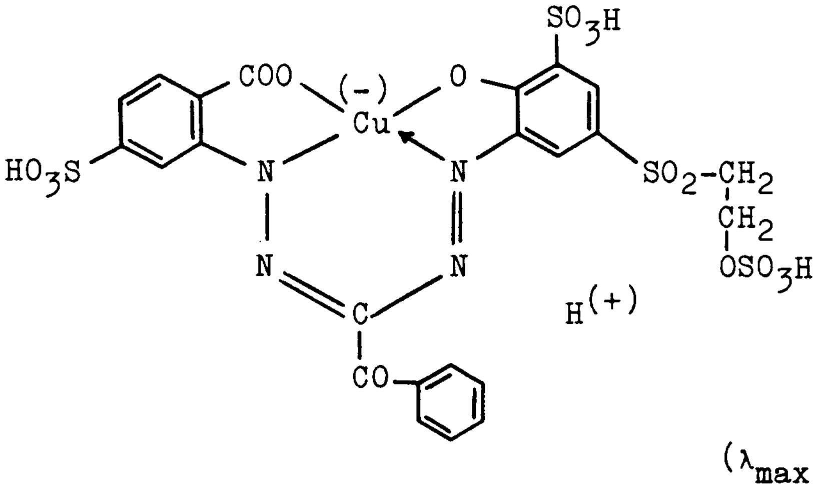

($\lambda_{max}$ = 528 nm)

und färbt beispielsweise Baumwolle und regenerierte Cellulosefasern aus langer Flotte nach den für faserreaktive Farbstoffe üblichen Fixierbedingungen in reinen blaustichigen Bordotönen. Die in üblicher Weise nach 10-minütigem Seifen und Spülen mit Wasser nachbehandelten Färbungen und Drucke zeigen gute Licht- und Naßechtheitseigenschaften.

Die erfindungsgemäße Kupferkomplex-Formazanverbindung kann auch in der Weise hergestellt werden, indem man von 35 Teilen eines Phenylhydrazons ausgeht, das aus 2-Carboxy-5-sulfophenylhydrazin und Phenylglyoxal erhältlich ist.

**Beispiele 10 bis 236**

In den nachfolgenden Tabellenbeispielen sind weitere erfindungsgemäße Kupferkomplex-Formazanverbindungen mit Hilfe der Formelreste der allgemeinen Formel (A)

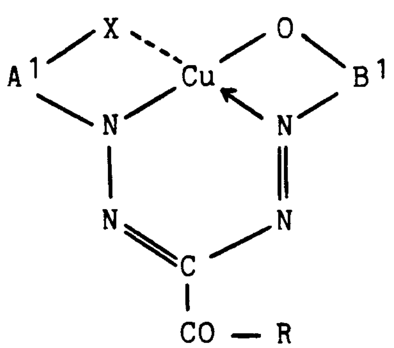

(A)

beschrieben. Sie lassen sich in erfindungsgemäßer Weise, beispielsweise analog den obigen Ausführungsbeispielen, aus den aus den Komponenten des entsprechenden Tabellenbeispieles ableitbaren Ausgangsverbindungen herstellen. Sie besitzen sehr gute Farbstoffeigenschaften und liefern auf den in der Beschreibung genannten Materialien, insbesondere Cellulosefasermaterialien, nach den in der Technik für faserreaktive Farbstoffe üblichen Applikations- und Fixierverfahren farbstarke Färbungen und Drucke in dem für das jeweilige Tabellenbeispiel für die Färbung auf Baumwolle angegebenen Farbton (die nach dem Farbton in Klammern angegebenen Zahlen geben das Absorptionsmaximum der erfindungsgemäßen Verbindung in nm, gemessen in wäßriger Lösung, an).

In der Tabelle sind die Reste -$B^1$-O- durch die Abkürzungen (I), (II) und (III) angegeben; sie haben folgende Bedeutung:

(I) ist: 1-Oxi-4-($\beta$-sulfatoethylsulfonyl)-6-sulfophen-2-yl
(II) ist: 1-Oxi-4-($\beta$-sulfatoethylsulfonyl)-phen-2-yl
(III) ist: 1-Oxi-5-$\beta$-sulfatoethylsulfonyl)-phen-2-yl.

Die Abkürzung VS steht für die β-Sulfatoethylsulfonyl-Gruppe.

| Bsp. | Rest $-A^1-X-$ | Rest R | Rest $-O-B^1-$ | Farbton |
|---|---|---|---|---|
| 10 | 1-Oxi-4-sulfo-6-chlor-phen-2-yl | Phenyl | (II) | blaustichig bordo (528) |
| 11 | dito | Phenyl | (III) | rotstichig marineblau (584) |
| 12 | dito | Phenyl | (I) | blaustichig bordo (576) |
| 13 | 1-Oxi-4-sulfo-phen-2-yl | Phenyl | (I) | blaustichig bordo (575) |
| 14 | dito | Phenyl | (II) | blaustichig bordo (567) |
| 15 | dito | Phenyl | (III) | rotstichig marineblau (581) |
| 16 | 1-Oxi-4,6-disulfo-phen-2-yl | Phenyl | (I) | rotstichig violett (582) |
| 17 | dito | Phenyl | (II) | rotstichig violett (576) |
| 18 | dito | Phenyl | (III) | rotstichig marineblau (590) |
| 19 | 1-Oxi-4-sulfo-6-nitro-phen-2-yl | Phenyl | (I) | blaustichig violett (585) |
| 20 | dito | Phenyl | (II) | blaustichig violett (577) |
| 21 | dito | Phenyl | (III) | rotstichig marineblau |
| 22 | 1-Oxi-5-sulfo-phen-2-yl | Phenyl | (I) | dito |
| 23 | dito | Phenyl | (II) | dito |
| 24 | dito | Phenyl | (III) | dito |

| Bsp. | Rest $-A^1-X-$ | Rest R | Rest $-O-B^1-$ | Farbton |
|---|---|---|---|---|
| 25 | 1-Oxi-4-ethyl-sulfonyl-6-sulfo-phen-2-yl | Phenyl | (I) | rotstichig violett |
| 26 | dito | Phenyl | (II) | dito |
| 27 | dito | Phenyl | (III) | rotstichig marineblau |
| 28 | 1-Oxi-4-methyl-sulfonyl-6-sulfo-phen-2-yl | Phenyl | (I) | rotstichig violett |
| 29 | dito | Phenyl | (II) | dito |
| 30 | 1-Oxi-4-(ß-sulfatoethylsulfonyl)-6-sulfo-phen-2-yl | Phenyl | (I) | dito |
| 31 | 1-Oxi-4-(ß-sulfoethylsulfonyl)-6-sulfo-phen-2-yl | Phenyl | (I) | dito |
| 32 | dito | Phenyl | (II) | dito |
| 33 | dito | Phenyl | (III) | rotstichig marineblau |
| 34 | 1-Oxi-4-(ß-sulfoethylsulfonyl)-phen-2-yl | Phenyl | (I) | rotstichig violett |
| 35 | 1-Oxi-5-(ß-sulfoethylsulfonyl)-phen-2-yl | Phenyl | (I) | rotstichig violett |
| 36 | 1-Oxi-4-sulfo-6-carboxy-phen-2-yl | Phenyl | (I) | dito |
| 37 | dito | Phenyl | (II) | dito |
| 38 | dito | Phenyl | (III) | rotstichig marineblau |
| 39 | 1-Oxi-4-sulfo-6-acetylamino-phen-2-yl | Phenyl | (I) | blaustichig violett |
| 40 | 1-Oxi-3,5-disulfo-phen-2-yl | Phenyl | (I) | grünstichig blau |

| Bsp. | Rest -$A^1$-X- | Rest R | Rest -O-$B^1$- | Farbton |
|---|---|---|---|---|
| 41 | dito | Phenyl | (II) | dito |
| 42 | dito | Phenyl | (III) | grünstichig marineblau |
| 43 | 1-Oxi-4-chlor-6-sulfo-phen-2-yl | 3-Sulfo-phenyl | (I) | rotstichig violett |
| 44 | 1-Oxi-4-nitro-6-sulfo-phen-2-yl | 3-Nitro-phenyl | (I) | blaustichig violett |
| 45 | 1-Oxi-4-methyl-6-sulfo-phen-2-yl | Phenyl | (I) | dito |
| 46 | 1-Oxi-3-chlor-5-sulfo-phen-2-yl | Phenyl | (I) | blaustichig grün |
| 47 | 1-Oxi-3-nitro-5-sulfo-phen-2-yl | Phenyl | (I) | dito |
| 48 | 1-Oxi-3-sulfo-5-methylsulfonyl-phen-2-yl | Phenyl | (I) | dito |
| 49 | 1-Oxi-4-dimethyl-sulfamoyl-phen-2-yl | 2-Carboxy-phenyl | (I) | rotstichig violett |
| 50 | 1-Oxi-4-(3'-sulfo-phenyl-sulfonyl)-phen-2-yl | 2,6-Di-fluor-phenyl | (I) | dito |
| 51 | 1-Oxi-4-sulfo-6-(4'-sulfo-benzoylamino)-phen-2-yl | Phenyl | (I) | blaustichig violett |
| 52 | dito | Phenyl | (II) | dito |
| 53 | dito | Phenyl | (III) | rotstichig marineblau |
| 54 | 2-Oxi-4-sulfo-6-nitro-naphth-1-yl | Phenyl | (I) | blaustichig grün |
| 55 | 2-Oxi-3,6-disulfo-naphth-1-yl | Phenyl | (I) | dito |

| Bsp. | Rest $-A^1-X-$ | Rest R | Rest $-O-B^1-$ | Farbton |
|---|---|---|---|---|
| 56 | 1-Oxi-4-(N-methyl-N-ß-sulfatoethyl-sulfonyl)-amino-phen-2-yl | Phenyl | (I) | rotstichig violett |
| 57 | 1-Oxi-4-sulfo-6-(ß-carboxy-propionylamino)-phen-2-yl | Phenyl | (I) | rotstichig blau |
| 58 | dito | Phenyl | (II) | dito |
| 59 | dito | Phenyl | (III) | rotstichig marineblau |
| 60 | 1-Oxi-4-phosphono-phen-2-yl | Phenyl | (I) | rotstichig violett |
| 61 | 1-Oxi-4-carboxy-6-sulfo-phen-2-yl | Phenyl | (II) | dito |
| 62 | 1-Oxi-4-sulfamoyl-phen-2-yl | Phenyl | (I) | dito |
| 63 | 1-Oxi-4-sulfo-phen-2-yl | Phenyl | 1-Oxi-4-(ß-sulfatoethyl-sulfonyl)-6-nitro-phen-2-yl | blaustichig violett |
| 64 | 1-Oxi-4-sulfo-6-chlor-phen-2-yl | Phenyl | 1-Oxi-4-(ß-sulfatoethyl-sulfonyl)-6-chlor-phen-2-yl | rotstichig violett |
| 65 | 1-Oxi-4,6-disulfo-phen-2-yl | Phenyl | 1-Oxi-4-(ß-phosphatoethyl-sulfonyl)-phen-2-yl | dito |
| 66 | dito | Phenyl | 1-Oxi-4-(ß-phenylsulfonyl-oxy-ethylsulfonyl)-phen-2-yl | dito |
| 67 | dito | Phenyl | 1-Oxi-4-(ß-propionyloxy-ethylsulfonyl)-phen-2-yl | dito |

| Bsp. | Rest $-A^1-X-$ | Rest R | Rest $-O-B^1-$ | Farbton |
|---|---|---|---|---|
| 68 | dito | Phenyl | 1-Oxi-4-(ß-dimethylamino-ethylsulfonyl)-phen-2-yl | rotstichig violett |
| 69 | 1-Oxi-4-sulfo-6-chlor-phen-2-yl | Methyl | (I) | dito |
| 70 | dito | Methyl | (II) | dito |
| 71 | dito | Methyl | (III) | rotstichig marineblau |
| 72 | 1-Oxi-4-sulfo-phen-2-yl | Trifluor-methyl | (I) | rotstichig violett |
| 73 | dito | Methyl | (II) | rotstichig violett |
| 74 | dito | Methyl | (III) | blaustichig violett (565) |
| 75 | dito | Ethyl | (I) | rotstichig violett |
| 76 | dito | n-Propyl | (I) | dito |
| 77 | dito | Methyl | (I) | rotstichig violett (573) |
| 78 | 1-Oxi-4,6-disulfo-phen-2-yl | Methyl | (I) | blaustichig violett |
| 79 | dito | Methyl | (II) | dito |
| 80 | dito | Methyl | (III) | dito |
| 81 | 1-Oxi-4-sulfo-6-nitro-phen-2-yl | Methyl | (I) | dito |
| 82 | dito | Methyl | (II) | dito |
| 83 | dito | Methyl | (III) | rotstichig marineblau |
| 84 | 1-Oxi-5-sulfo-phen-2-yl | Methyl | (I) | blaustichig violett |
| 85 | dito | Methyl | (II) | dito |
| 86 | dito | Methyl | (III) | dito |

| Bsp. | Rest $-A^1-X-$ | Rest R | Rest $-O-B^1-$ | Farbton |
|---|---|---|---|---|
| 87 | 1-Oxi-4-ethyl-sulfonyl-6-sulfo-phen-2-yl | Methyl | (I) | rotstichig violett |
| 88 | dito | Methyl | (II) | dito |
| 89 | dito | Methyl | (III) | rotstichig marineblau |
| 90 | 1-Oxi-4-methyl-sulfonyl-6-sulfo-phen-2-yl | Methyl | (I) | rotstichig violett |
| 91 | 1-Oxi-4-(ß-sul-fatoethylsul-fonyl)-6-sulfo-phen-2-yl | Methyl | (I) | dito |
| 92 | 1-Oxi-4-(ß-sulfo-ethylsulfonyl)-6-sulfo-phen-2-yl | Methyl | (I) | dito |
| 93 | dito | Methyl | (II) | dito |
| 94 | dito | Methyl | (III) | rotstichig marineblau |
| 95 | 1-Oxi-4-(ß-sulfo-ethylsulfonyl)-phen-2-yl | Methyl | (I) | rotstichig violett |
| 96 | 1-Oxi-5-(ß-sulfo-ethylsulfonyl)-phen-2-yl | Methyl | (I) | dito |
| 97 | 1-Oxi-4-sulfo-6-carboxy-phen-2-yl | Methyl | (I) | dito |
| 98 | dito | Methyl | (II) | dito |
| 99 | dito | Methyl | (III) | rotstichig marineblau |
| 100 | 1-Oxi-4-sulfo-6-acetylamino-phen-2-yl | Methyl | (II) | rotstichig violett |
| 101 | 1-Oxi-3,5-disulfo-phen-2-yl | Methyl | (I) | blaustichig violett |

| Bsp. | Rest $-A^1-X-$ | Rest R | Rest $-O-B^1-$ | Farbton |
|---|---|---|---|---|
| 102 | dito | Methyl | (II) | dito |
| 103 | dito | Methyl | (III) | marineblau |
| 104 | 1-Oxi-4-chlor-6-sulfo-phen-2-yl | Methyl | (I) | rotstichig violett |
| 105 | 1-Oxi-4-nitro-6-sulfo-phen-2-yl | Methyl | (I) | blaustichig violett |
| 106 | 1-Oxi-4-methyl-6-sulfo-phen-2-yl | Methyl | (I) | dito |
| 107 | 1-Oxi-3-chlor-5-sulfo-phen-2-yl | Methyl | (I) | grünstichig blau |
| 108 | 1-Oxi-3-nitro-5-sulfo-phen-2-yl | Methyl | (I) | dito |
| 109 | 1-Oxi-3-sulfo-5-methylsulfonyl-phen-2-yl | Methyl | (I) | dito |
| 110 | 1-Oxi-4-dimethyl-sulfamoyl-phen-2-yl | Methyl | (I) | rotstichig violett |
| 111 | 1-Oxi-4-(3'-sulfo-phenyl-sulfonyl)-phen-2-yl | Methyl | (I) | dito |
| 112 | 1-Oxi-4-sulfo-6-(4'-sulfobenzoyl-amino)-phen-2-yl | Methyl | (I) | dito |
| 113 | dito | Methyl | (II) | dito |
| 114 | dito | Methyl | (III) | rotstichig marineblau |
| 115 | 2-Oxi-4-sulfo-6-nitro-naphth-1-yl | Methyl | (I) | blaustichig grün |
| 116 | 2-Oxi-3,6-disulfo-naphth-1-yl | Methyl | (I) | dito |
| 117 | 1-Oxi-4-(N-methyl-N-ß-sulfatoethyl-sulfonyl)-amino-6-sulfo-phen-2-yl | Methyl | (I) | blaustichig violett |

| Bsp. | Rest $-A^1-X-$ | Rest R | Rest $-O-B^1-$ | Farbton |
|---|---|---|---|---|
| 118 | 1-Oxi-4-sulfo-6-(ß-carboxy-propionylamino)-phen-2-yl | Methyl | (I) | dito |
| 119 | dito | Methyl | (II) | dito |
| 120 | dito | Methyl | (III) | dito |
| 121 | 1-Oxi-4-sulfo-phen-2-yl | 1-Naphthyl | (I) | dito |
| 122 | dito | Sulfo-naphth-1-yl | (II) | dito |
| 123 | 1-Carbonyloxy-4-sulfo-phen-2-yl | Phenyl | (II) | blaustichig bordo (524) |
| 124 | dito | Phenyl | (III) | blaustichig bordo (538) |
| 125 | 1-Carbonyloxy-5-sulfo-phen-2-yl | Phenyl | (I) | blaustichig bordo |
| 126 | dito | Phenyl | (II) | dito |
| 127 | dito | Phenyl | (III) | dito |
| 128 | 1-Carbonyloxy-phen-2-yl | Phenyl | (I) | dito |
| 129 | 1-Carbonyloxy-4-methoxy-phen-2-yl | Phenyl | (I) | dito |
| 130 | 1-Carbonyloxy-5-chlor-phen-2-yl | Phenyl | (I) | dito |
| 131 | 1-Carbonyloxy-4-nitro-phen-2-yl | Phenyl | (I) | dito |
| 132 | 1-Carbonyloxy-4-carboxy-phen-2-yl | Phenyl | (I) | dito |
| 133 | 1-Carbonyloxy-5-acetylamino-phen-2-yl | Phenyl | (I) | dito |

| Bsp. | Rest $-A^1-X-$ | Rest R | Rest $-O-B^1-$ | Farbton |
|---|---|---|---|---|
| 134 | 1-Carbonyloxy-4-sulfo-phen-2-yl | Methyl | (I) | blaustichig bordo (524) |
| 135 | dito | Methyl | (II) | blaustichig bordo (519) |
| 136 | dito | Methyl | (III) | blaustichig bordo (534) |
| 137 | 1-Carbonyloxy-5-sulfo-phen-2-yl | Methyl | (I) | blaustichig bordo |
| 138 | dito | Methyl | (II) | dito |
| 139 | dito | Methyl | (III) | dito |
| 140 | 1-Carbonyloxy-phen-2-yl | Methyl | (I) | dito |
| 142 | 1-Carbonyloxy-4-methoxy-phen-2-yl | Methyl | (I) | dito |
| 143 | 1-Carbonyloxy-5-chlor-phen-2-yl | Methyl | (I) | dito |
| 144 | 1-Carbonyloxy-4-nitro-phen-2-yl | Methyl | (I) | dito |
| 145 | 1-Carbonyloxy-4-N-(ß-sulfato-ethylsulfonyl)-amino-phen-2-yl | Methyl | (I) | dito |
| 146 | 1-Carbonyloxy-4-(ß-sulfato-ethylsulfonyl)-phen-2-yl | Methyl | (I) | dito |
| 147 | 1,4-Disulfo-phen-2-yl | Phenyl | (I) | blaustichig bordo (528) |
| 148 | dito | Phenyl | (III) | blaustichig bordo (538) |
| 149 | 1,5-Disulfo-phen-2-yl | Phenyl | (1) | blaustichig bordo |
| 150 | dito | Phenyl | (II) | dito |

| Bsp. | Rest $-A^1-X-$ | Rest R | Rest $-O-B^1-$ | Farbton |
|---|---|---|---|---|
| 151 | dito | Phenyl | (III) | blaustichig bordo |
| 152 | 1-Sulfo-phen-2-yl | Phenyl | (I) | dito |
| 153 | dito | Phenyl | (II) | dito |
| 154 | dito | Phenyl | (III) | dito |
| 155 | 1-Sulfo-5-methoxy-phen-2-yl | Phenyl | (III) | dito |
| 156 | 1-Sulfo-5-carboxy-phen-2-yl | Phenyl | (I) | dito |
| 157 | 1-Sulfo-4-carboxy-phen-2-yl | Phenyl | (II) | dito |
| 158 | 1-Sulfo-4-chlor-phen-2-yl | Phenyl | (I) | dito |
| 159 | 1,4-Disulfo-phen-2-yl | Methyl | (I) | dito |
| 160 | dito | Methyl | (III) | dito |
| 161 | 1,5-Disulfo-phen-2-yl | Methyl | (I) | dito |
| 162 | dito | Methyl | (II) | dito |
| 163 | dito | Methyl | (III) | dito |
| 164 | 1-Sulfo-phen-2-yl | Methyl | (I) | dito |
| 165 | dito | Methyl | (II) | dito |
| 166 | dito | Methyl | (III) | dito |
| 167 | 1-Sulfo-5-methoxy-phen-2-yl | Methyl | (I) | dito |
| 168 | 1-Sulfo-5-carboxy-phen-2-yl | Methyl | (I) | dito |
| 169 | 1-Sulfo-4-carboxy-phen-2-yl | Methyl | (II) | dito |
| 170 | 1-Sulfo-4-chlor-phen-2-yl | Methyl | (I) | dito |

| Bsp. | Rest $-A^1-X-$ | Rest R | Rest $-O-B^1-$ | Farbton |
|---|---|---|---|---|
| 171 | 1-Oxi-4-VS-6-sulfo-phen-2-yl | Phenyl | (II) | blaustichig bordo |
| 172 | dito | Phenyl | (III) | dito |
| 173 | dito | Phenyl | 1-Oxi-4-sulfo-phen-2-yl | dito |
| 174 | dito | Phenyl | 1-Oxi-4,6-disulfo-phen-2-yl | rotstichig violett |
| 175 | dito | Phenyl | 1-Oxi-4-sulfo-6-acetylamino-phen-2-yl | dito |
| 176 | dito | Phenyl | 1-Oxi-4-sulfo-6-(ß-carboxy-propionylamino)-phen-2-yl | dito |
| 177 | dito | Phenyl | 1-Oxi-4-sulfo-6-nitro-phen-2-yl | blaustichig violett |
| 178 | dito | Phenyl | 1-Oxi-4-ethyl-sulfonyl-6-sulfo-phen-2-yl | rotstichig violett |
| 179 | 1-Oxi-4-VS-phen-2-yl | Phenyl | 1-Oxi-4,6-di-sulfo-phen-2-yl | dito |
| 180 | dito | Phenyl | (I) | dito |
| 181 | 1-Oxi-5-VS-phen-2-yl | Phenyl | (I) | dito |
| 182 | dito | Phenyl | 1-Oxi-4,6-di-sulfo-phen-2-yl | dito |
| 183 | 1-Sulfo-5-VS-phen-2-yl | Methyl | 1-Oxi-4-sulfo-phen-2-yl | blaustichig bordo |
| 184 | 1-Oxi-4-VS-6-sulfo-phen-2-yl | Methyl | (II) | rotstichig violett |
| 185 | dito | Methyl | (III) | blaustichig violett |
| 186 | dito | Methyl | 1-Oxi-4-sulfo-phen-2-yl | rotstichig violett |

| Bsp. | Rest -A¹-X- | Rest R | Rest -O-B¹- | Farbton |
|---|---|---|---|---|
| 187 | dito | Methyl | 1-Oxi-4,6-disulfo-phen-2-yl | rotstichig violett |
| 188 | dito | Methyl | 1-Oxi-4-sulfo-6-acetylamino-phen-2-yl | dito |
| 189 | dito | Methyl | 1-Oxi-4-sulfo-6-(ß-carboxy-propionylamino)-phen-2-yl | dito |
| 190 | dito | Methyl | 1-Oxi-4-sulfo-6-nitro-phen-2-yl | blaustichig violett |
| 191 | dito | Methyl | 1-Oxi-4-ethyl-sulfonyl-6-sulfo-phen-2-yl | rotstichig violett |
| 192 | 1-Oxi-4-VS-phen-2-yl | Methyl | 1-Oxi-4,6-di-sulfo-phen-2-yl | dito |
| 193 | dito | Methyl | (I) | dito |
| 194 | 1-Oxi-5-VS-phen-2-yl | Methyl | (I) | blaustichig violett |
| 195 | dito | Methyl | 1-Oxi-4,6-di-sulfo-phen-2-yl | dito |
| 196 | 1-Carbonyloxy-4-VS-phen-2-yl | Phenyl | (I) | blaustichig bordo |
| 197 | dito | Phenyl | 1-Oxi-4,6-di-sulfo-phen-2-yl | dito |
| 198 | dito | Phenyl | 1-Oxi-4-sulfo-phen-2-yl | dito |
| 199 | dito | Phenyl | 1-Oxi-4-sulfo-6-chlor-phen-2-yl | dito |
| 200 | dito | Phenyl | 1-Oxi-4-methyl-sulfonyl-6-sulfo-phen-2-yl | dito |

| Bsp. | Rest -A$^1$-X- | Rest R | Rest -O-B$^1$- | Farbton |
|---|---|---|---|---|
| 201 | dito | Phenyl | 1-Oxi-4-sulfo-6-acetylamino-phen-2-yl | dito |
| 202 | dito | Phenyl | 1-Oxi-4-sulfo-6-(ß-carboxy-propionyl-amino)-phen-2-yl | dito |
| 203 | dito | Phenyl | 2-Oxi-4,6-di-sulfo-naphth-1-yl | blaustichig violett |
| 204 | 1-Carbonyloxy-5-VS-phen-2-yl | Phenyl | 1-Oxi-4,6-disulfo-phen-2-yl | blaustichig bordo |
| 205 | dito | Phenyl | 1-Oxi-4-sulfo-phen-2-yl | dito |
| 206 | 1-Carbonyloxy-4-VS-phen-2-yl | Methyl | (I) | blaustichig bordo |
| 207 | dito | Methyl | 1-Oxi-4,6-disulfo-phen-2-yl | dito |
| 208 | dito | Methyl | 1-Oxi-4-sulfo-phen-2-yl | dito |
| 209 | dito | Methyl | 1-Oxi-5-sulfo-6-chlor-phen-2-yl | dito |
| 210 | dito | Methyl | 1-Oxi-4-methyl-sulfonyl-6-sulfo-phen-2-yl | dito |
| 211 | dito | Methyl | 1-Oxi-4-sulfo-6-acetylamino-phen-2-yl | dito |
| 212 | dito | Methyl | 1-Oxi-4-sulfo-6-(ß-carboxy-propionylamino)-phen-2-yl | dito |
| 213 | dito | Methyl | 2-Oxi-4,6-di-sulfo-naphth-1-yl | dito |

| Bsp. | Rest -$A^1$-X- | Rest R | Rest -O-$B^1$- | Farbton |
|---|---|---|---|---|
| 214 | 1-Carbonyloxy-5-VS-phen-2-yl | Methyl | 1-Oxi-4,6-di-sulfo-phen-2-yl | dito |
| 215 | dito | Methyl | 1-Oxi-4-sulfo-phen-2-yl | dito |
| 216 | 1-Sulfo-4-VS-phen-2-yl | Phenyl | (I) | dito |
| 217 | dito | Phenyl | (II) | dito |
| 218 | dito | Phenyl | (III | dito |
| 219 | dito | Phenyl | 1-Oxi-4-sulfo-phen-2-yl | dito |
| 220 | dito | Phenyl | 1-Oxi-4,6-di-sulfo-phen-2-yl | dito |
| 221 | dito | Phenyl | 1-Oxi-4-sulfo-6-chlor-phen-2-yl | blaustichig bordo (537) |
| 222 | 1-Sulfo-5-VS-phen-2-yl | Phenyl | dito | blaustichig bordo |
| 223 | dito | Phenyl | (I) | dito |
| 224 | dito | Phenyl | 1-Oxi-6-acetyl-amino-phen-2-yl | dito |
| 225 | dito | Phenyl | 1-Oxi-4,6-di-sulfo-phen-2-yl | dito |
| 226 | dito | Phenyl | 1-Oxi-4-sulfo-phen-2-yl | dito |
| 227 | 1-Sulfo-4-VS-phen-2-yl | Methyl | (I) | dito |
| 228 | dito | Methyl | (II) | dito |
| 229 | dito | Methyl | (III) | dito |
| 230 | dito | Methyl | 1-Oxi-4-sulfo-phen-2-yl | blaustichig bordo (536) |

| Bsp. | Rest $-A^1-X-$ | Rest R | Rest $-O-B^1-$ | Farbton |
|---|---|---|---|---|
| 231 | dito | Methyl | 1-Oxi-4,6-di-sulfo-phen-2-yl | blaustichig bordo |
| 232 | dito | Methyl | 1-Oxi-4-sulfo-6-chlor-phen-2-yl | dito |
| 233 | 1-Sulfo-5-VS-phen-2-yl | Methyl | dito | dito |
| 234 | dito | Methyl | (I) | dito |
| 235 | dito | Methyl | 1-Oxi-6-acetyl-amino-phen-2-yl | dito |
| 236 | dito | Methyl | 1-Oxi-4,6-disulfo-phen-2-yl | dito |

**Anwendungsbeispiel 1**

Zwecks Färbung von 10 Teilen eines Garnes aus Wolle wird ein wäßriges Bad hergestellt, das aus 0,25 Volumenteilen einer 60%igen wäßrigen Essigsäure, 0,15 Teilen eines handelsüblichen Egalisierhilfsmittels für Wolle und 0,3 Teilen Ammoniumsulfat in 400 Teilen Wasser besteht. Diese Wolle wird bei einer Temperatur von 30 bis 40 °C und einem pH-Wert des Bades von 5 bis 5,2 darin gut benetzt. Dem Bad wird sodann eine Lösung von 0,2 Teilen des Vinylsulfonyl-Kupferkomplexformazanfarbstoffes von Beispiel 2 in 20 Teilen Wasser unter Rühren zugegeben. Man bewegt die Wolle weiterhin darin und läßt die Temperatur 5 Minuten bei 30 bis 40 °C, erhitzt sodann das Färbebad innerhalb von 40 Minuten auf 85 °C, färbt bei dieser Temperatur 10 Minuten weiter und erhitzt sodann das Färbebad innerhalb von 10 Minuten zum Sieden. Es wird 1 Stunde lang kochend weitergefärbt. Anschließend wird das Bad auf 80 °C abgekühlt. Der verwendete Farbstoff ist auf der Wolle sehr gut aufgezogen. Die Nachbehandlung des gefärbten Wollgarnes kann deshalb im selben Bad erfolgen. Man gibt Ammoniak bis auf einen pH-Wert von 8 bis 8,5 hinzu und behandelt das Material 15 Minuten bei diesem pH und bei einer Temperatur von 80 °C. Man nimmt es heraus, spült es mit warmem und kaltem Wasser und trocknet es. Es wird eine farbstarke Bordofärbung mit den im Beispiel 2 angegebenen guten Gebrauchs- und Fabrikationsechtheiten erhalten.

**Anwendungsbeispiel 2**

Zur Färbung eines Baumwollgewebes wird eine wäßrige Klotzflotte hergestellt, die im Liter 40 g des erfindungsgemäßen Kupferformazan-Farbstoffes von Beispiel 9, 100 g Harnstoff, 30 g wasserfreies Natriumsulfat und 16 ml einer wäßrigen 32,5 %igen Natronlauge enthält. Das Baumwollgewebe wird bei Zimmertemperatur mit einer Flottenaufnahme von 80 des Gewichtes des Baumwollgewebes foulardiert, auf eine Docke aufgewickelt, in eine Plastikfolie gehüllt und 24 Stunden lang bei Raumtemperatur liegen lassen. Während dieser Zeit fixiert der Farbstoff. Nach dem Seifen und Spülen in üblicher Weise erhält man eine farbstarke brillante Bordofärbung, die die im Beispiel 9 genannten guten Gebrauchs- und Fabrikationsechtheiten aufweist.

**Anwendungsbeispiel 3**

Zur Färbung eines Baumwollgewebes wird ein wäßriges Färbebad hergestellt, das in 2000 Volumenteilen 5 Teile des erfindungsgemäßen Kupferformazan-Farbstoffes von Beispiel 4, 100 Teile Natriumchlorid, 10

Teile wasserfreies Natriumcarbonat und 4 Volumenteile einer 32,5 %igen wäßrigen Natronlauge gelöst enthält. In dieses Färbebad werden 100 Teile eines Baumwollgewebes gegeben, das bei einer Temperatur von 40 °C zwischen 60 und 90 Minuten gefärbt wird. Nach Seifen und Spülen in üblicher Weise erhält man eine farbstarke, brillante violette Färbung mit den in Beispiel 4 angegebenen guten Gebrauchs- und Fabrikationsechtheiten.

**Anwendungsbeispiel 4**

Zum Bedrucken eines mercerisierten Baumwollgewebes wird eine Druckpaste verwendet, die auf 1000 Teile 30 Teile des erfindungsgemäßen Kupferformazan-Farbstoffes von Beispiel 9, 50 Teile Harnstoff, 375 Teile Wasser, 500 Teile einer neutralen 4%igen wäßrigen Alginatverdickung, 15 Teile Natriumbicarbonat und 10 Teile des Natriumsalzes der m-Nitrobenzoesäure enthält. Das Baumwollgewebe wird in üblicher Weise mit dieser Druckpaste bedruckt und nach dem Trocknen 10 bis 15 Minuten lang mit Wasserdampf von 101 bis 103 °C gedämpft. Nach diesem Fixierungsvorgang wird das Gewebe in üblicher Weise durch Spülen mit kaltem und warmem Wasser, durch Seifen bei Kochtemperatur und erneutem Spülen mit Wasser und anschließendem Trocknen fertiggestellt. Man erhält einen farbstarken brillanten bordofarbenen Druck, der gute Licht- und Naßechtheiten besitzt.

**Anwendungsbeispiel 5**

Eine Lösung von 30 Teilen des erfindungsgemäßen Kupferformazan-Farbstoffes von Beispiel 9 in 200 Teilen Wasser von 70 °C wird in 500 Teile einer neutralen oder schwach sauren, 4%igen Alginatverdickung eingerührt. Die verdickte Farbstofflösung wird mit Wasser auf 1000 Teile aufgefüllt. Mit der so hergestellten Druckpaste wird in üblicher Weise ein Gewebe aus mercerisierter Baumwolle bedruckt, das anschließend getrocknet und zur Fixierung des Farbstoffes durch ein 90 bis 105 °C heißes wäßriges Fixierbad geführt wird, das in 1000 Teilen Wasser 100 Teile Natriumchlorid, 150 Teile wasserfreies Natriumcarbonat, 50 Teile wasserfreies Kaliumcarbonat und 70 Volumenteile einer 33%igen wäßrigen Natronlauge gelöst enthält. Die Fixierung erfolgt hierbei bereits in wenigen Sekunden, so daß das bedruckte Gewebe sehr schnell hindurchgeführt werden kann. Nach dieser Fixierbehandlung wird das Gewebe in üblicher Weise durch Spülen mit kaltem Wasser, durch heißes Waschen, erneutes Spülen mit Wasser und Trocknen fertiggestellt. Man erhält ein egales, bordofarbenes Druckmuster mit guten Licht- und Naßechtheiten.

**Anwendungsbeispiel 6**

Zur Färbung eines Baumwollgewebes wird eine wäßrige Klotzflotte hergestellt, die pro 1000 Volumenteile 40 Teile des erfindungsgemäßen Kupferformazan-Farbstoffes von Beispiel 9, 95 Volumenteile Wasserglas, 5 Teile eines handelsüblichen Egalisierhilfsmittels und 28,5 Volumenteile einer wäßrigen 32,5%igen Natronlauge enthält. Das Baumwollgewebe wird bei Zimmertemperatur mit einer Flottenaufnahme von 80 % des Gewichtes des Baumwollgewebes foulardiert, auf eine Docke aufgewickelt, in eine Plastikfolie gehüllt und 24 Stunden lang bei Raumtemperatur liegen lassen. Während dieser Zeit fixiert der Farbstoff. Nach dem Seifen und Spülen in üblicher Weise erhält man eine farbstarke brillante bordofarbene Färbung mit guten Licht- und Naßechtheiten.

**Anwendungsbeispiel 7**

Zur Färbung eines Baumwollgewebes wird ein wäßriges Färbebad hergestellt, das in 2000 Volumenteilen 6 Teile des erfindungsgemäßen Kupferformazan-Farbstoffes von Beispiel 1, 10 Teile wasserfreies Natriumsulfat, 10 Teile wasserfreies Natriumcarbonat und 4 Volumenteile einer 32,5%igen wäßrigen Natronlauge gelöst enthält. In dieses Färbebad werden 100 Teiles eines Baumwollgewebes gegeben, das bei einer Temperatur von 60 °C zwischen 60 und 90 Minuten gefärbt wird. Nach Seifen und Spülen in üblicher Weise erhält man eine farbstarke, blaustichige Bordofärbung mit den in Beispiel 1 angegebenen guten Echtheiten.

**Anwendungsbeispiel 8**

Verfährt man in einer der Verfahrensweisen gemäß vorliegender Erfindung zum Färben und Bedrucken von Wolle oder von synthetischen Polyamidmaterialien oder von Cellulosefasermaterialien, beispielsweise analog den Anwendungsbeispielen 1 bis 7, und setzt hierfür als Farbstoff erfindungsgemäß andere der in

den Ausführungs-und Tabellenbeispielen 1 bis 236 beschriebene erfindungsgemäße Kupferkomplexformazanfarbstoffe ein, so erhält man ebenfalls kräftige Färbungen und Drucke mit guten Echtheiten mit den für diese Farbstoffe angegebenen Farbtönen.

**Patentansprüche**
**Patentansprüche für folgende Vertragsstaaten : BE, CH, DE, FR, GB, IT, LI**

1. Eine Kupferkomplex-Formazan-Verbindung entsprechend der allgemeinen Formel (1)

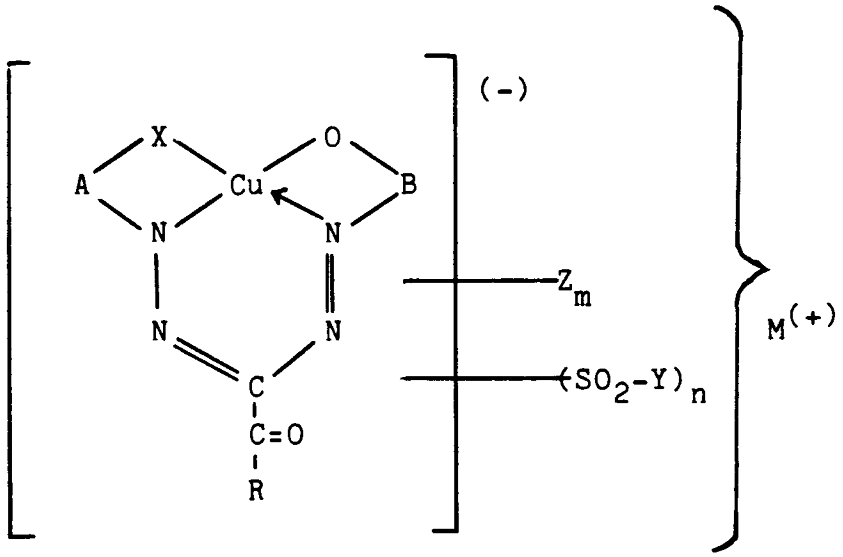

(1)

in welcher bedeuten:

A kann durch eine oder zwei Gruppen Z, die nachstehend definiert ist, und/oder durch die angegebene Gruppe der Formel $-SO_2-Y$ , die nachstehend definiert ist, substituiert sein und ist ein Phenylenrest oder ein Naphthylenrest, die beide durch Substituenten substituiert sein können, die der folgenden Gruppe der Substituenten angehören: Halogen, Alkyl von 1 bis 5 C-Atomen, Alkoxy von 1 bis 5 C-Atomen, Alkylsulfonyl von 1 bis 4 C-Atomen, das substituiert sein kann, Phenylsulfonyl, Sulfamoyl, durch Alkyl von 1 bis 4 C-Atomen mono- oder disubstituiertes Sulfamoyl, Cycloalkylsulfamoyl mit einem Cycloalkylrest von 5 bis 8 C-Atomen, Nitro, Alkanoylamino von 2 bis 5 C-Atomen, Benzoylamino, das durch 1 oder 2 Substituenten aus der Gruppe Sulfo, Carboxy, Chlor, Methyl, Ethyl, Methoxy und Ethoxy substituiert sein kann, und substituiertes Alkanoylamino von 2 bis 5 C-Atomen im Alkanoylrest;
die Gruppe X und das N-Atom sind in ortho-Stellung zueinander an den aromatischen Kern von A gebunden;

B hat eine der Bedeutungen von A und kann mit A gleich oder von A verschieden sein;
das O-Atom und das N-Atom sind in ortho-Stellung zueinander an den aromatischen Kern von B gebunden;

R ist ein Arylrest, wie Phenyl- oder Naphthylrest, der durch eine oder zwei Gruppen Z, die nachstehend definiert ist, und/oder durch Substituenten aus der Gruppe Halogen, Alkyl von 1 bis 5 C-Atomen und Alkoxy von 1 bis 5 C-Atomen substituiert sein kann, oder R ist ein geradkettiger oder verzweigter Alkylrest von 1 bis 6 C-Atomen, vorzugsweise von 1 bis 4 C-Atomen, der durch Halogen, Sulfo und/oder Carboxy substituiert sein kann;

Z ist eine wasserlöslichmachende Gruppe als ein zu den obengenannten Substituenten von A, B und R gegebenenfalls zusätzlicher Substituent an A, B und R, der im Formazanmolekül gemäß der untenstehenden Definition von m einmal bis viermal enthalten ist und an ein aromatisches Kohlenstoffatom oder an ein aliphatisches Kohlenstoffatom von A, B und R oder einem Substituenten davon gebunden ist, wobei Z, sofern es im Molekül 2-, 3- oder 4-mal enthalten ist, verschiedene Bedeutungen innerhalb der angegebenen Bedeutungen besitzen kann;

m ist die Zahl 1, 2, 3 oder 4;

Y ist die Vinylgruppe oder ist die Ethylgruppe, die in β-Stellung einen Substituenten enthält, der durch ein Alkali eliminierbar ist, wobei die Gruppe $-SO_2-Y$ als ein zu den obengenannten Substituenten von A und B gegebenenfalls zusätzlicher Substituent an A und B im Formazanmolekül ein- oder zweimal enthalten ist und an ein aromatisches Kohlenstoffatom von A und B oder an ein aliphatisches Kohlenstoffatom eines Substituenten davon gebunden ist, wobei die Gruppen $-SO_2-Y$ , sofern sie zweimal im Molekül enthalten sind, verschiedene Bedeutungen innerhalb der obenangegebenen Bedeutungen besitzen können;

n ist die Zahl 1 oder 2;

X ist ein Sauerstoffatom oder eine Carbonyloxygruppe der Formel -CO-O- oder eine nur an den Rest A gebundene Gruppe der Formel $-SO_3^{(-)}$;

$M^{(+)}$ ist ein Wasserstoffatom oder ein Alkalimetall oder das Äquivalent eines zweiwertigen Metalls, vorzugsweise ein Wasserstoffatom oder Natrium, Kalium oder Lithium.

**2.** Verbindung nach Anspruch 1, dadurch gekennzeichnet, daß A ein Benzolkern ist, der neben der Gruppe Z und/oder der Gruppe $-SO_2-Y$ durch einen Substituenten aus der Gruppe Chlor, Brom, Nitro, Methyl, Ethyl, Methoxy, Ethoxy, Methylsulfonyl, Ethylsulfonyl, Sulfamoyl, N,N-Dimethylsulfamoyl, Phenylsulfonyl, β-Hydroxyethylsulfonyl, β-Sulfoethylsulfonyl, Acetylamino, Benzoylamino, Succinylamino, (β-Sulfatoethylsulfonyl)-amino und N-Methyl-N-(β-sulfatoethylsulfonyl)-amino substituiert sein kann.

**3.** Verbindung nach Anspruch 1 oder 2, dadurch gekennzeichnet, daß B der Benzolring ist, der neben der Gruppe Z und/oder einer Gruppe $-SO_2-Y$ durch einen oder zwei Substituenten aus der Gruppe Chlor, Brom, Nitro, Methyl, Ethyl, Methoxy, Ethoxy, Methylsulfonyl, Ethylsulfonyl, Sulfamoyl, N,N-Dimethylsulfamoyl, Phenylsulfonyl, β-Hydroxyethylsulfonyl, β-Sulfoethylsulfonyl, Acetylamino, Benzoylamino, Succinylamino, (β-Sulfatoethylsulfonyl)-amino und N-Methyl-N-(β-sulfatoethylsulfonyl)-amino substituiert sein kann.

**4.** Verbindung nach Anspruch 1 oder 3, dadurch gekennzeichnet, daß A einen Naphthylen- oder Phenylenrest bedeutet, die beide außer durch die angegebenen Gruppen Z und/oder $-SO_2-Y$ durch 1 oder 2, bevorzugt 1, Substituenten aus der Gruppe Chlor, Brom, Nitro, Methyl, Ethyl, Methoxy, Ethoxy, Methylsulfonyl, Ethylsulfonyl, β-Sulfoethylsulfonyl, Sulfamoyl und N,N-Dimethylsulfamoyl substituiert sein können.

**5.** Verbindung nach mindestens einem der Ansprüche 1, 2 und 4, dadurch gekennzeichnet, daß B ein Naphthylen- oder Phenylenrest ist, die beide außer den angegebenen Gruppen Z und/oder $-SO_2-Y$ durch 1 oder 2 Substituenten aus der Gruppe Chlor, Methyl, Ethyl, Methoxy, Ethoxy, Methylsulfonyl, Ethylsulfonyl und Nitro substituiert sein können.

**6.** Verbindung nach Anspruch 4 oder 5, dadurch gekennzeichnet, daß Z eine Sulfogruppe ist und an A einmal oder zweimal und/oder an B einmal oder zweimal gebunden ist und die Gruppe $-SO_2-Y$ an A oder an B oder, im Falle von n gleich 2, an A und B gebunden ist.

**7.** Verbindung nach mindestens einem der Ansprüche 1 bis 6, dadurch gekennzeichnet, daß n für die Zahl 1 steht.

**8.** Verbindung nach mindestens einem der Ansprüche 1 bis 7, bevorzugt 7, dadurch gekennzeichnet, daß die Gruppe $-SO_2-Y$ an B gebunden ist.

**9.** Verbindung nach mindestens einem der Ansprüche 1 bis 8, dadurch gekennzeichnet, daß R Methyl, Ethyl, Phenyl oder Naphthyl ist.

**10.** Verbindung nach mindestens einem der Ansprüche 1 bis 8, dadurch gekennzeichnet, daß R Methyl oder Phenyl ist.

**11.** Verbindung nach mindestens einem der Ansprüche 1, 9 und 10, dadurch gekennzeichnet, daß A den Phenylenrest bedeutet, der durch eine Methyl-, Ethyl-, Methoxy-, Ethoxy-, Nitro-, β-Sulfoethylsulfonyl-, Methylsulfonyl- oder Ethylsulfonyl-Gruppe oder ein Chloratom substituiert sein kann, n die Zahl 1 ist, B den Phenylenrest bedeutet, der durch die Gruppe $-SO_2-Y$ mit Y der in Anspruch 1 genannten

Bedeutung substituiert ist, m für die Zahl 1, 2 oder 3 steht, Z die Sulfogruppe bedeutet und an A und/oder B gebunden ist und X den Oxi- oder Carbonyloxirest bedeutet und M die in Anspruch 1 genannte Bedeutung besitzt.

**12.** Verbindung nach Anspruch 1 entsprechend der allgemeinen Formel (1a)

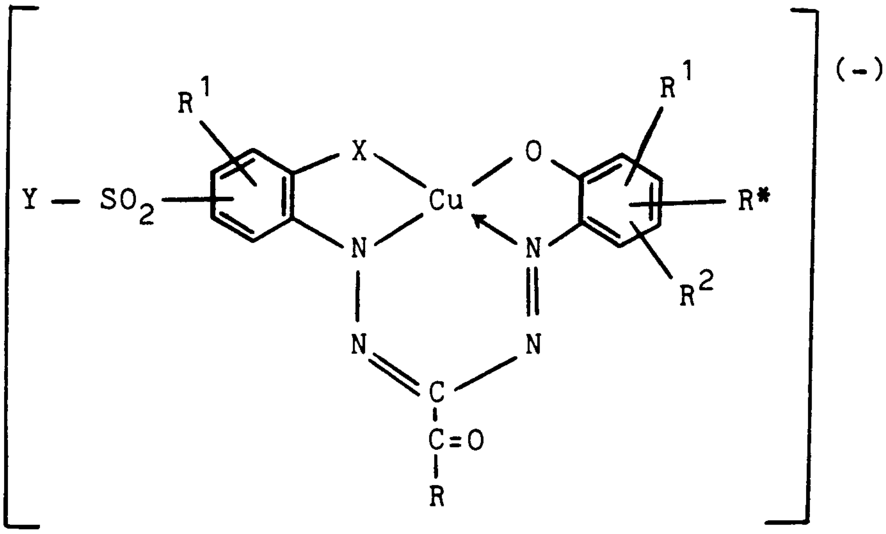

$M^{(+)}$

(1a)

in welcher

| | |
|---|---|
| $R^1$ | ein Wasserstoffatom oder eine Sulfogruppe ist, wobei mindestens ein $R^1$ eine Sulfogruppe ist, |
| $R^2$ | ein Wasserstoffatom oder eine B-Sulfatoethylsulfonyl-Gruppe ist, |
| $R^*$ | Wasserstoff, Sulfo, Chlor, Methylsulfonyl, Ethylsulfonyl, Carboxy, Nitro oder Methyl ist, |
| R | Methyl oder Phenyl ist, |
| X | Carbonyloxi und Oxi ist und |
| Y und M | die in Anspruch 1 genannten Bedeutungen haben. |

**13.** Verbindung nach Anspruch 1 entsprechend der allgemeinen Formel (1b)

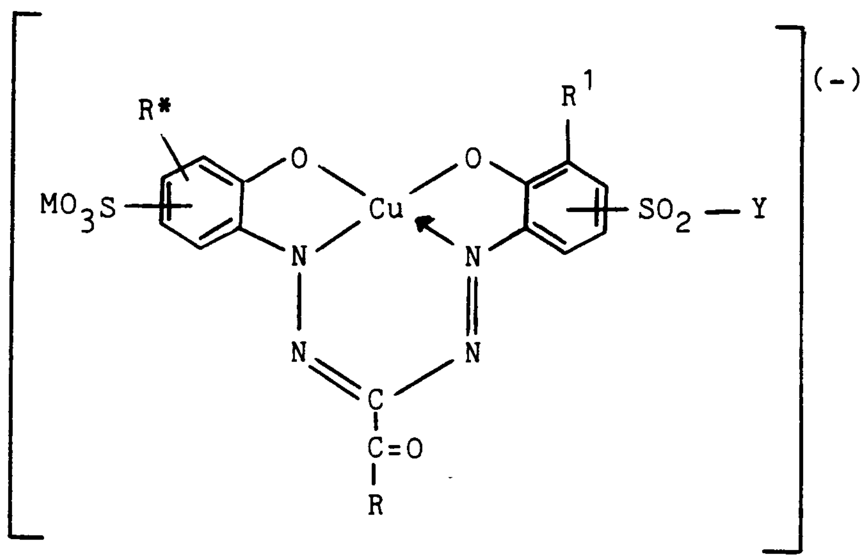

$M^{(+)}$

(1b)

in welcher

| | |
|---|---|
| $R^1$ | ein Wasserstoffatom oder eine Sulfogruppe ist, |
| $R^*$ | Wasserstoff, Sulfo, Chlor, Methylsulfonyl, Ethylsulfonyl, Carboxy, Nitro oder Methyl ist, |

| | |
|---|---|
| R | Methyl oder Phenyl ist und |
| Y und M | die in Anspruch 1 genannten Bedeutungen haben. |

**14.** Verbindung nach Anspruch 1 entsprechend der allgemeine Formel (1c)

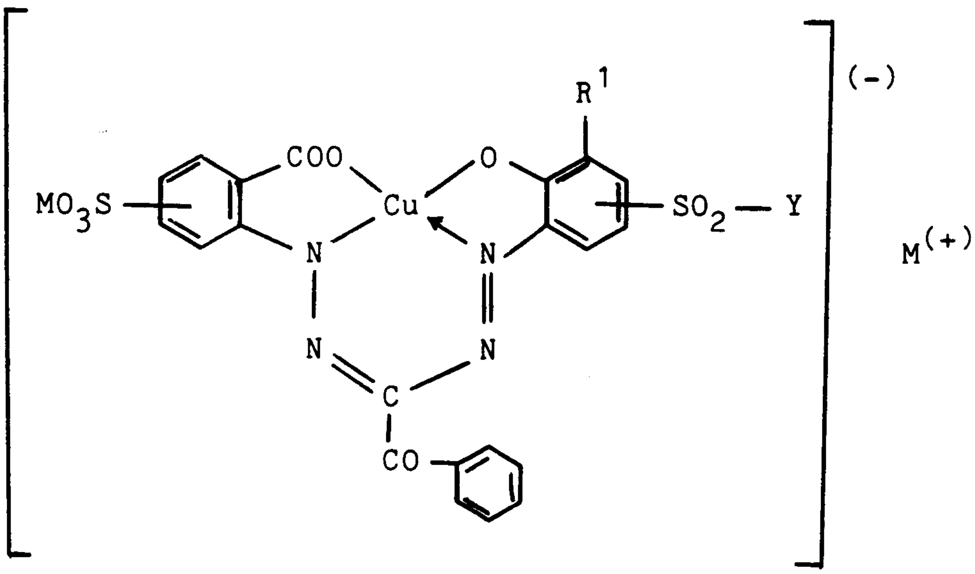

(1c)

in welcher

| | |
|---|---|
| $R^1$ | ein Wasserstoffatom oder eine Sulfogruppe ist und |
| Y und M | die in Anspruch 1 genannten Bedeutungen haben. |

**15.** Verbindung nach mindestens einem der Ansprüche 1 bis 14, dadurch gekennzeichnet, daß Y die Vinylgruppe oder eine β-Chlorethyl-, β-Acetyloxyethyl-, β-(Sulfobenzoyloxy)-ethyl-, β-(p-Methyl-phenylsulfonyloxy)-ethyl-, β-Dimethylamino-ethyl-, β-Diethylamino-ethyl-, β-Phosphatoethyl- oder eine β-Thiosulfatoethyl-Gruppe ist oder eine β-Sulfatoethyl-Gruppe bedeutet.

**16.** Verbindung nach mindestens einem der Ansprüche 1 bis 14, dadurch gekennzeichnet, daß Y eine β-Sulfatoethyl-Gruppe bedeutet.

**17.** Verfahren zur Herstellung einer in Anspruch 1 genannten und definierten Verbindung der allgemeinen Formel (1), dadurch gekennzeichnet, daß man eine Hydrazonverbindung der allgemeinen Formel (2)

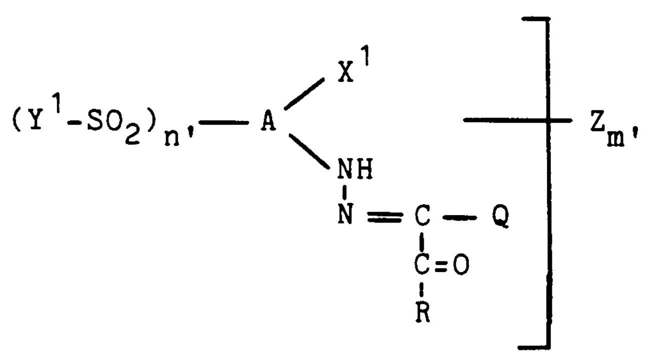

(2)

in welcher

| | |
|---|---|
| A, R und Z | die in Anspruch 1 genannten Bedeutungen haben, |
| $X^1$ | für die Hydroxy-, Carboxy- oder Sulfogruppe steht, |
| $Y^1$ | eine der für Y genannten Bedeutungen hat oder die β-Hydroxyethyl-Gruppe ist, |
| n' | die Zahl Null oder 1 bedeutet, |

m' die Zahl Null, 1, 2 oder 3 bedeutet,
Q ein Wasserstoffatom oder ein durch Azokupplung ersetzbarer Substituent ist, wie beispielsweise die Carboxygruppe, wobei die Gruppe $X^1$ und die Aminogruppe an A zueinander in ortho-Stellung gebunden sind,

mit der Diazoniumverbindung eines aromatischen Amins der allgemeinen Formel (3)

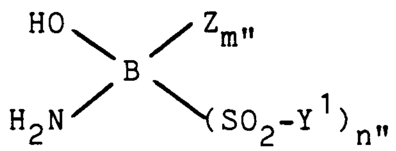
(3)

in welcher
B, Z und $Y^1$ eine der in Anspruch 1 bzw. obengenannten Bedeutungen haben, wobei die Hydroxygruppe und die Aminogruppe an B zueinander in ortho-Stellung gebunden sind,
m" für die Zahl Null, 1 oder 2 steht und
n" die Zahl Null oder 1 bedeutet,
wobei die Summe von (m' + m") gleich der Bedeutung von m ist und die Summe von (n' + n") gleich die Bedeutung von n besitzt, in Gegenwart eines kupferabgebenden Mittels umsetzt,
und im Falle, daß eine oder beide der Gruppen $Y^1$ für die β-Hydroxyethyl-Gruppe stehen, man diese Gruppe(n) in der gebildeten Kupferformazanverbindung analog bekannten Verfahrensweisen mittels einem Sulfatisierungsmittel in die β-Sulfatoethylsulfonyl-Kupferkomplex-Formazanverbindung der Formel (1) überführt.

**18.** Verwendung eines Farbstoffes von mindestens einem der Ansprüche 1 bis 16 zum Färben und Bedrucken von hydroxy- und/oder carbonamidgruppenhaltigem Material, insbesondere Fasermaterial.

**19.** Verfahren zum Kolorieren (Farben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels wärme und mit Hilfe eines alkalischen Mittels fixiert, dadurch gekennzeichnet, daß man als Farbstoff einen Farbstoff von mindestens einem der Ansprüche 1 bis 16 verwendet.

**Patentansprüche für folgenden Vertragsstaat : ES**

**1.** Verfahren zur Herstellung einer Kupferkomplex-Formazan-Verbindung entsprechend der allgemeinen Formel (1)

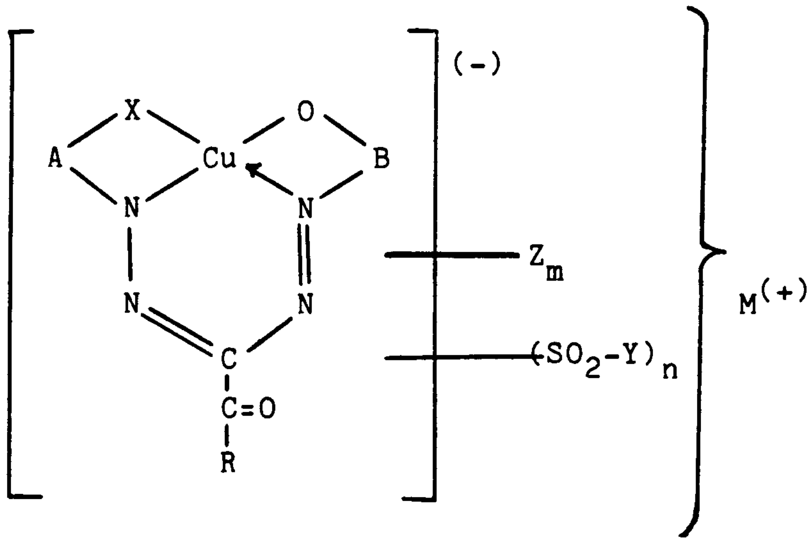

(1)

in welcher bedeuten:

A kann durch eine oder zwei Gruppen Z, die nachstehend definiert ist und/oder durch die angegebene Gruppe der Formel $-SO_2-Y$ , die nachstehend definiert ist, substituiert sein und ist ein Phenylenrest oder ein Naphthylenrest, die beide durch Substituenten, substituiert sein können, die der folgenden Gruppe der Substituenten angehören: Halogen, Alkyl von 1 bis 5 C-Atomen, Alkoxy von 1 bis 5 C-Atomen, Alkylsulfonyl von 1 bis 4 C-Atomen, das substituiert sein kann, Phenylsulfonyl, Sulfamoyl, durch Alkyl von 1 bis 4 C-Atomen mono- oder disubstituiertes Sulfamoyl, Cycloalkylsulfamoyl mit einem Cycloalkylrest von 5 bis 8 C-Atomen, Nitro, Alkanoylamino von 2 bis 5 C-Atomen, Benzoylamino, das durch 1 oder 2 Substituenten aus der Gruppe Sulfo, Carboxy, Chlor, Methyl, Ethyl, Methoxy und Ethoxy substituiert sein kann, und substituiertes Alkanoylamino von 2 bis 5 C-Atomen im Alkanoylrest;

die Gruppe X und das N-Atom sind in ortho-Stellung zueinander an den aromatischen Kern von A gebunden;

B hat eine der Bedeutungen von A und kann mit A gleich oder von A verschieden sein;

das O-Atom und das N-Atom sind in ortho-Stellung zueinander an den aromatischen Kern von B gebunden;

R ist ein Arylrest, wie Phenyl- oder Naphthylrest, der durch eine oder zwei Gruppen Z, die nachstehend definiert ist, und/oder durch Substituenten aus der Gruppe Halogen, Alkyl von 1 bis 5 C-Atomen und Alkoxy von 1 bis 5 C-Atomen, substituiert sein kann, oder

R ist ein geradkettiger oder verzweigter Alkylrest von 1 bis 6 C-Atomen, vorzugsweise von 1 bis 4 C-Atomen, der durch Halogen, Sulfo und/oder Carboxy substituiert sein kann;

Z ist eine wasserlöslichmachende Gruppe als ein zu den obengenannten Substituenten von A, B und R gegebenenfalls zusätzlicher Substituent an A, B und R, der im Formazanmolekül gemäß der untenstehenden Definition von m einmal bis viermal enthalten ist und an ein aromatisches Kohlenstoffatom oder an ein aliphatisches Kohlenstoffatom von A, B und R oder einem Substituenten davon gebunden ist, wobei Z, sofern es im Molekül 2-, 3- oder 4-mal enthalten ist, verschiedene Bedeutungen innerhalb der angegebenen Bedeutungen besitzen kann;

m ist die Zahl 1, 2, 3 oder 4;

Y ist die Vinylgruppe oder ist die Ethylgruppe, die in $\beta$-Stellung einen Substituenten enthält, der durch ein Alkali eliminierbar ist, wobei die Gruppe $-SO_2-Y$ als ein zu den obengenannten Substituenten von A und B gegebenenfalls zusätzlicher Substituent an A und B im Formazanmolekül ein- oder zweimal enthalten ist und an ein aromatisches Kohlenstoffatom von A und B oder an ein aliphatisches Kohlenstoffatom eines Substituenten davon, gebunden ist, wobei die Gruppen $-SO_2-Y$ , sofern sie zweimal im Molekül enthalten sind, verschiedene Bedeutungen innerhalb der obenangegebenen Bedeutungen besitzen können;

n ist die Zahl 1 oder 2;

X ist ein Sauerstoffatom oder eine Carbonyloxygruppe der Formel -CO-O- oder eine nur an

den Rest A gebundene Gruppe der Formel $-SO_3^{(-)}$;

$M^{(+)}$ ist ein Wasserstoffatom oder ein Alkalimetall oder das Äquivalent eines zweiwertigen Metalls, vorzugsweise ein Wasserstoffatom oder Natrium, Kalium oder Lithium;

dadurch gekennzeichnet, daß man eine Hydrazonverbindung der allgemeinen Formel (2)

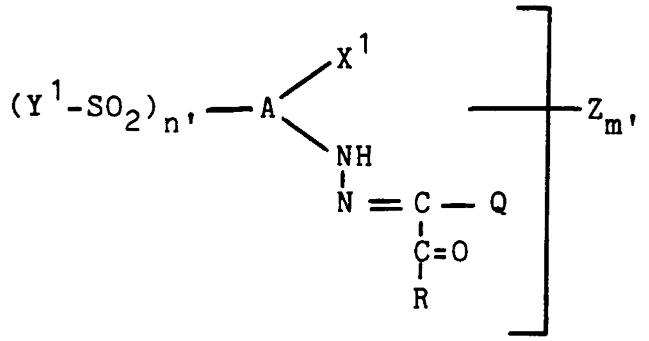

(2)

in welcher

A, R und Z die oben genannten Bedeutungen haben,

$X^1$ für die Hydroxy-, Carboxy- oder Sulfogruppe steht,

$Y^1$ eine der für Y genannten Bedeutungen hat oder die β-Hydroxyethyl-Gruppe ist,

n' die Zahl Null oder 1 bedeutet,

m' die Zahl Null, 1, 2 oder 3 bedeutet,

Q ein Wasserstoffatom oder ein durch Azokupplung ersetzbarer Substituent ist, wie beispielsweise die Carboxygruppe, wobei die Gruppe $X^1$ und die Aminogruppe an A zueinander in ortho-Stellung gebunden sind,

mit der Diazoniumverbindung eines aromatischen Amins der allgemeinen Formel (3)

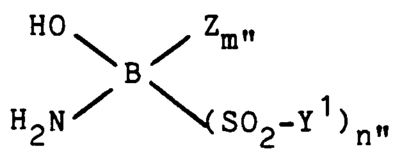

(3)

in welcher

B, Z und $Y^1$ eine der oben genannten Bedeutungen haben, wobei die Hydroxygruppe und die Aminogruppe an B zueinander in ortho-Stellung gebunden sind,

m'' für die Zahl Null, 1 oder 2 steht und

n'' die Zahl Null oder 1 bedeutet,

wobei die Summe von (m' + m'') gleich der Bedeutung von m ist und die Summe von (n' + n'') gleich die Bedeutung von n besitzt, in Gegenwart eines kupferabgebenden Mittels umsetzt,

und im Falle, daß eine oder beide der Gruppen $Y^1$ für die β-Hydroxyethyl-Gruppe stehen, man diese Gruppe(n) in der gebildeten Kupferformazanverbindung analog bekannten Verfahrensweisen mittels einem Sulfatisierungsmittel in die β-Sulfatoethylsulfonyl-Kupferkomplex-Formazanverbindung der Formel (1) überführt.

**2.** Verfahren nach Anspruch 1, dadurch gekennzeichnet, daß A ein Benzolkern ist, der neben der Gruppe Z und/oder der Gruppe $-SO_2-Y$ durch einen Substituenten aus der Gruppe Chlor, Brom, Nitro, Methyl, Ethyl, Methoxy, Ethoxy, Methylsulfonyl, Ethylsulfonyl, Sulfamoyl, N,N-Dimethylsulfamoyl, Phenylsulfonyl, β-Hydroxyethylsulfonyl, β-Sulfoethylsulfonyl, Acetylamino, Benzoylamino, Succinylamino, (β-Sulfatoethylsulfonyl)-amino und N-Methyl-N-(β-sulfatoethylsulfonyl)-amino substituiert sein kann.

**3.** Verfahren nach Anspruch 1 oder 2, dadurch gekennzeichnet, daß B der Benzolring ist, der neben der Gruppe Z und/oder einer Gruppe $-SO_2-Y$ durch einen oder zwei Substituenten aus der Gruppe Chlor, Brom, Nitro, Methyl, Ethyl, Methoxy, Ethoxy, Methylsulfonyl, Ethylsulfonyl, Sulfamoyl, N,N-Dimethylsul-

famoyl, Phenylsulfonyl, β-Hydroxyethylsulfonyl, β-Sulfoethylsulfonyl, Acetylamino, Benzoylamino, Succinylamino, (β-Sulfatoethylsulfonyl)-amino und N-Methyl-N-(β-sulfatoethylsulfonyl)-amino substituiert sein kann.

**4.** Verfahren nach Anspruch 1 oder 3, dadurch gekennzeichnet, daß A einen Naphthylen- oder Phenylenrest bedeutet die beide außer durch die angegebenen Gruppen Z und/oder $-SO_2-Y$ durch 1 oder 2, bevorzugt 1, Substituenten aus der Gruppe Chlor, Brom, Nitro, Methyl, Ethyl, Methoxy, Ethoxy, Methylsulfonyl, Ethylsulfonyl, β-Sulfoethylsulfonyl, Sulfamoyl und N,N-Dimethylsulfamoyl substituiert sein können.

**5.** Verfahren nach mindestens einem der Ansprüche 1, 2 und 4, dadurch gekennzeichnet, daß B ein Naphthylen- oder Phenylenrest ist, die beide außer den angegebenen Gruppen Z und/oder $-SO_2-Y$ durch 1 oder 2 Substituenten aus der Gruppe Chlor, Methyl, Ethyl, Methoxy, Ethoxy, Methylsulfonyl, Ethylsulfonyl und Nitro substituiert sein können.

**6.** Verfahren nach Anspruch 4 oder 5, dadurch gekennzeichnet, daß Z eine Sulfogruppe ist und an A einmal oder zweimal und/oder an B einmal oder zweimal gebunden ist und die Gruppe $-SO_2-Y$ an A oder an B oder, im Falle von n gleich 2, an A und B gebunden ist.

**7.** Verfahren nach mindestens einem der Ansprüche 1 bis 6, dadurch gekennzeichnet, daß n für die Zahl 1 steht.

**8.** Verfahren nach mindestens einem der Ansprüche 1 bis 7, bevorzugt 7, dadurch gekennzeichnet, daß die Gruppe $-SO_2-Y$ an B gebunden ist.

**9.** Verfahren nach mindestens einem der Ansprüche 1 bis 8, dadurch gekennzeichnet, daß R Methyl, Ethyl, Phenyl oder Naphthyl ist.

**10.** Verfahren nach mindestens einem der Ansprüche 1 bis 8, dadurch gekennzeichnet, daß R Methyl oder Phenyl ist.

**11.** Verfahren nach mindestens einem der Ansprüche 1, 9 und 10, dadurch gekennzeichnet, daß A den Phenylenrest bedeutet, der durch eine Methyl-, Ethyl-, Methoxy-, Ethoxy-, Nitro-, β-Sulfoethylsulfonyl-, Methylsulfonyl- oder Ethylsulfonyl-Gruppe oder ein Chloratom substituiert sein kann, n die Zahl 1 ist, B den Phenylenrest bedeutet, der durch die Gruppe $-SO_2-Y$ mit Y der in Anspruch 1 genannten Bedeutung substituiert ist, m für die Zahl 1, 2 oder 3 steht, Z die Sulfogruppe bedeutet und an A und/oder B gebunden ist und X den Oxi- oder Carbonyloxirest bedeutet und M die in Anspruch 1 genannte Bedeutung besitzt.

**12.** Verfahren nach Anspruch 1, dadurch gekennzeichnet, daß die Verbindung der Formel (1) eine Verbindung entsprechend der allgemeinen Formel (1a)

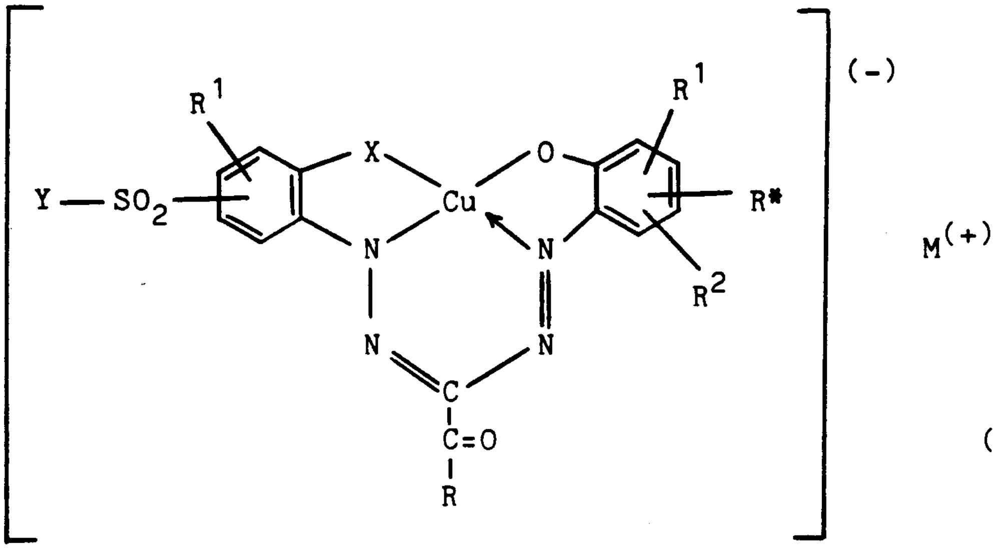

(1a)

ist, in welcher

| | |
|---|---|
| $R^1$ | ein Wasserstoffatom oder eine Sulfogruppe ist, wobei mindestens ein $R^1$ eine Sulfogruppe ist, |
| $R^2$ | ein Wasserstoffatom oder eine $\beta$-Sulfatoethylsulfonyl-Gruppe ist, |
| R* | Wasserstoff, Sulfo, Chlor, Methylsulfonyl, Ethylsulfonyl, Carboxy, Nitro oder Methyl ist, |
| R | Methyl oder Phenyl ist, |
| X | Carbonyloxi und Oxi ist und |
| Y und M | die in Anspruch 1 genannten Bedeutungen haben. |

**13.** Verfahren nach Anspruch 1, dadurch gekennzeichnet, daß die Verbindung der Formel (1) eine Verbindung entsprechend der allgemeinen Formel (1b)

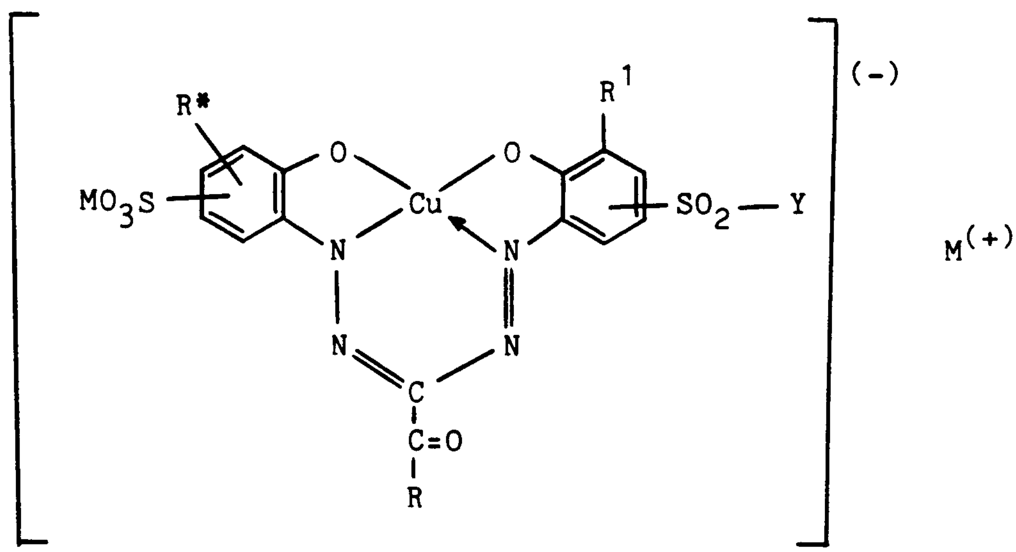

(1b)

ist, in welcher

| | |
|---|---|
| $R^1$ | ein Wasserstoffatom oder eine Sulfogruppe ist, |
| R* | Wasserstoff, Sulfo, Chlor, Methylsulfonyl, Ethylsulfonyl, Carboxy, Nitro oder Methyl ist, |
| R | Methyl oder Phenyl ist und |
| Y und M | die in Anspruch 1 genannten Bedeutungen haben. |

**14.** Verfahren nach Anspruch 1, dadurch gekennzeichnet, daß die Verbindung der Formel (1) eine Verbindung entsprechend der allgemeine Formel (1c)

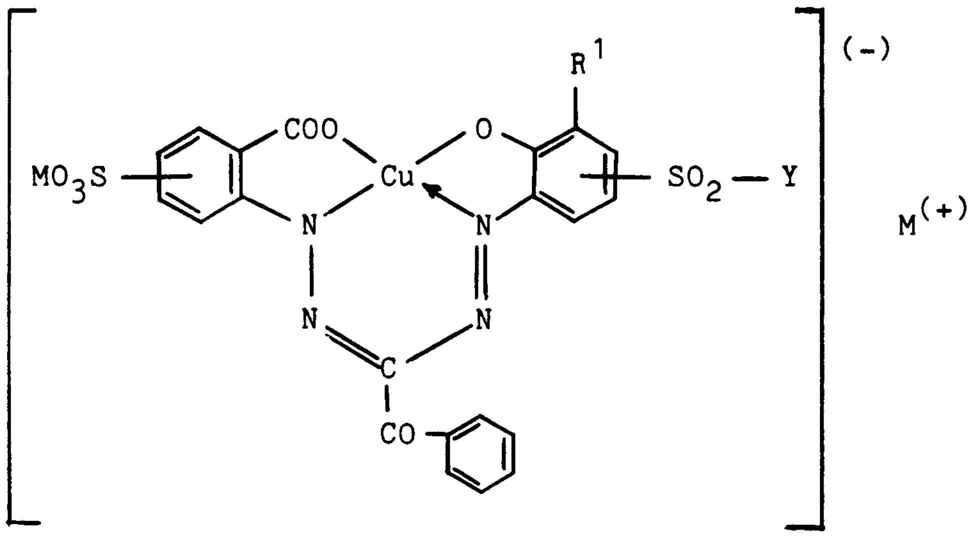

(1c)

ist, in welcher

| | |
|---|---|
| $R^1$ | ein Wasserstoffatom oder eine Sulfogruppe ist und |
| Y und M | die in Anspruch 1 genannten Bedeutungen haben. |

**15.** Verfahren nach mindestens einem der Ansprüche 1 bis 14, dadurch gekennzeichnet, daß Y die Vinylgruppe oder eine β-Chlorethyl-, β-Acetyloxyethyl-, β-(Sulfobenzoyloxy)-ethyl-, β-(p-Methyl-phenylsulfonyloxy)-ethyl-, β-Dimethylamino-ethyl-, β-Diethylamino-ethyl-, β-Phosphatoethyl- oder eine β-Thiosulfatoethyl-Gruppe ist oder eine β-Sulfatoethyl-Gruppe bedeutet.

**16.** Verfahren nach mindestens einem der Ansprüche 1 bis 14, dadurch gekennzeichnet, daß Y eine β-Sulfatoethyl-Gruppe bedeutet.

**17.** Verwendung eines Farbstoffes von mindestens einem der Ansprüche 1 bis 16 zum Färben und Bedrucken von hydroxy- und/oder carbonamidgruppenhaltigem Material, insbesondere Fasermaterial.

**18.** Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 16 verwendet.

## Claims

### Claims for the following Contracting States : BE, CH, DE, FR, GB, IT, LI

1. A copper complex formazan compound corresponding to the formula (1)

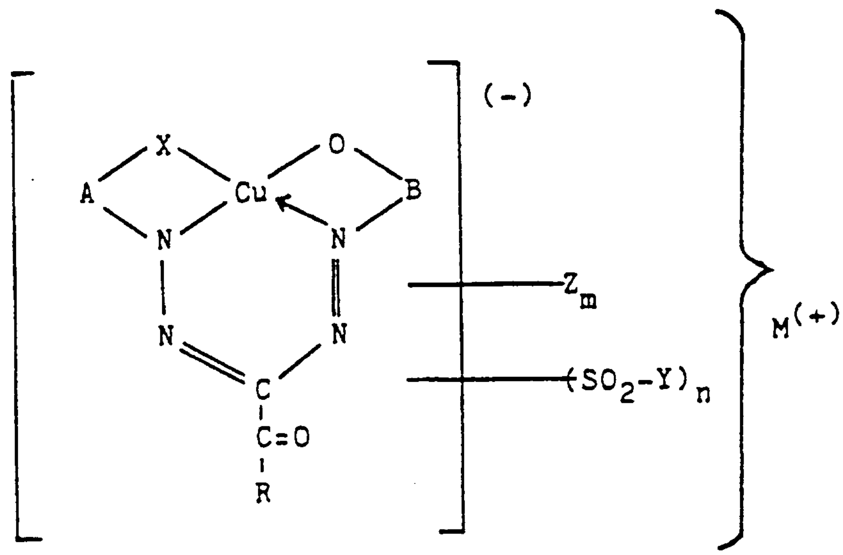

(1)

in which:

A can be substituted by one or two groups Z, which is defined below, and/or by the group mentioned of the formula $-SO_2-Y$, which is defined below, and is a phenylene radical or a naphthylene radical, both of which can be substituted by substituents which belong to the following group of substituents: halogen, alkyl having 1 to 5 carbon atoms, alkoxy having 1 to 5 carbon atoms, alkylsulfonyl having 1 to 4 carbon atoms, which can be substituted, phenylsulfonyl, sulfamoyl, sulfamoyl which is mono- or disubstituted by alkyl having 1 to 4 carbon atoms, cycloalkylsulfamoyl having a cycloalkyl radical having 5 to 8 carbon atoms, nitro, alkanoylamino having 2 to 5 carbon atoms, benzoylamino, which can be substituted by 1 or 2 substituents from the group comprising sulfo, carboxyl, chlorine, methyl, ethyl, methoxy and ethoxy, and substituted alkanoylamino having 2 to 5 carbon atoms in the alkanoyl radical;

the group X and the N atom are bonded to the aromatic nucleus of A in the ortho-position relative to one another;

B has one of the meanings of A and can be identical to A or different from A;

the O atom and the N atom are bonded to the aromatic nucleus of B in the ortho-position relative to one another;

R is an aryl radical, such as the phenyl or naphthyl radical, which can be substituted by one or two groups Z, which is defined below, and/or by substituents from the group comprising halogen, alkyl having 1 to 5 carbon atoms and alkoxy having 1 to 5 carbon atoms, or

R is a straight-chain or branched alkyl radical having 1 to 6 carbon atoms, preferably 1 to 4 carbon atoms, which can be substituted by halogen, sulfo and/or carboxyl;

Z is a group which confers water-solubility, as a substituent on A, B and R, if appropriate in addition to the abovementioned substituents of A, B and R, which is contained in the formazan molecule one to four times, according to the definition of m below, and is bonded to an aromatic carbon atom or to an aliphatic carbon atom of A, B and R or a substituent thereof, it being possible for Z, if it is contained in the molecule 2, 3 or 4 times, to have different meanings within the meanings mentioned;

m is the number 1, 2, 3 or 4;

Y is the vinyl group or is the ethyl group, which contains a substituent in the $\beta$-position which can be eliminated by an alkali, the group $-SO_2-Y$, as a substituent on A and B if appropriate in addition to the abovementioned substituents of A and B, being contained in the formazan molecule once or twice and being bonded to an aromatic carbon atom of A and B or to an

aliphatic carbon atom of a substituent thereof, it being possible for the groups $-SO_2-Y$, if they are contained in the molecule twice, to have different meanings within the abovementioned meanings;

n is the number 1 or 2;

X is an oxygen atom or a carbonyloxy group of the formula -CO-O- or a group of the formula $-SO_3^{(-)}$ bonded to only the radical A; and

$M^{(+)}$ is a hydrogen atom or an alkali metal or the equivalent of a divalent metal, preferably a hydrogen atom or sodium, potassium or lithium.

**2.** A compound as claimed in claim 1, in which A is a benzene nucleus which can be substituted by, in addition to the group Z and/or the group $-SO_2-Y$, a substituent from the group comprising chlorine, bromine, nitro, methyl, ethyl, methoxy, ethoxy, methylsulfonyl, ethylsulfonyl, sulfamoyl, N,N-dimethylsulfamoyl, phenylsulfonyl, β-hydroxyethylsulfonyl, β-sulfoethylsulfonyl, acetylamino, benzoylamino, succinylamino, (β-sulfatoethylsulfonyl)-amino and N-methyl-N-(β-sulfatoethylsulfonyl)amino.

**3.** A compound as claimed in claim 1 or 2, wherein B is the benzene ring which can be substituted by, in addition to the group Z and/or a group $-SO_2-Y$, one or two substituents from the group comprising chlorine, bromine, nitro, methyl, ethyl, methoxy, ethoxy, methylsulfonyl, ethylsulfonyl, sulfamoyl, N,N-dimethylsulfamoyl, phenylsulfonyl, β-hydroxyethylsulfonyl, β-sulfoethylsulfonyl, acetylamino, benzoylamino, succinylamino, (β-sulfatoethylsulfonyl)amino and N-methyl-N-(β-sulfatoethylsulfonyl)amino.

**4.** A compound as claimed in claim 1 or 3, in which A is a naphthylene or phenylene radical, both of which can be substituted by, in addition to the groups Z and/or $-SO_2-Y$ mentioned, 1 or 2, preferably 1, substituent(s) from the group comprising chlorine, bromine, nitro, methyl, ethyl, methoxy, ethoxy, methylsulfonyl, ethylsulfonyl, β-sulfoethylsulfonyl, sulfamoyl and N,N-dimethylsulfamoyl.

**5.** A compound as claimed in at least one of claims 1, 2 and 4, in which B is a naphthylene or phenylene radical, both of which can be substituted by, in addition to the groups Z and/or $-SO_2-Y$ mentioned, 1 or 2 substituents from the group comprising chlorine, methyl, ethyl, methoxy, ethoxy, methylsulfonyl, ethylsulfonyl and nitro.

**6.** A compound as claimed in claim 4 or 5, in which Z is a sulfo group and is bonded once or twice to A and/or once or twice to B and the group $-SO_2-Y$ is bonded to A or to B or, in the case where n is 2, to A and B.

**7.** A compound as claimed in at least one of claims 1 to 6, in which n represents the number 1.

**8.** A compound as claimed in at least one of claims 1 to 7, preferably 7, in which the group $-SO_2-Y$ is bonded to B.

**9.** A compound as claimed in at least one of claims 1 to 8, in which R is methyl, ethyl, phenyl or naphthyl.

**10.** A compound as claimed in at least one of claims 1 to 8, in which R is methyl or phenyl.

**11.** A compound as claimed in at least one of claims 1, 9 and 10, in which A is the phenylene radical, which can be substituted by a methyl, ethyl, methoxy, ethoxy, nitro, β-sulfoethylsulfonyl, methylsulfonyl or ethylsulfonyl group or a chlorine atom, n is the number 1, B denotes the phenylene radical, which is substituted by the group $-SO_2-Y$, where Y has the meaning given in claim 1, m represents the number 1, 2 or 3, Z denotes the sulfo group and is bonded to A and/or B and X denotes the oxy or carbonyloxy radical, and M has the meaning given in claim 1.

**12.** A compound as claimed in claim 1, corresponding to the formula (1a)

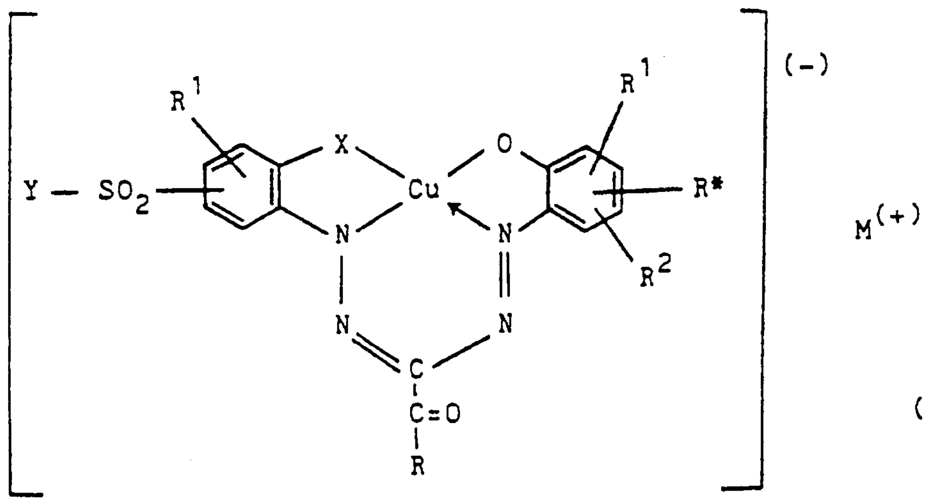

(1a)

in which

| | |
|---|---|
| $R^1$ | is a hydrogen atom or a sulfo group, at least one $R^1$ being a sulfo group, |
| $R^2$ | is a hydrogen atom or a $\beta$-sulfatoethylsulfonyl group, |
| $R^*$ | is hydrogen, sulfo, chlorine, methylsulfonyl, ethylsulfonyl, carboxyl, nitro or methyl, |
| R | is methyl or phenyl, |
| X | is carbonyloxy or oxy and |
| Y and M | have the meanings given in claim 1. |

**13.** A compound as claimed in claim 1, corresponding to the formula (1b)

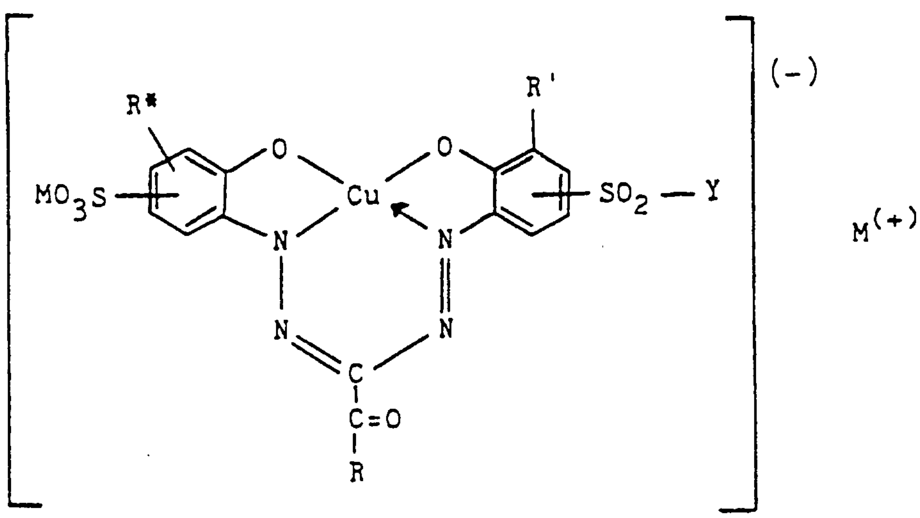

(1b)

in which

| | |
|---|---|
| $R^1$ | is a hydrogen atom or a sulfo group, |
| $R^*$ | is hydrogen, sulfo, chlorine, methylsulfonyl, ethylsulfonyl, carboxyl, nitro or methyl, |
| R | is methyl or phenyl and |
| Y and M | have the meanings given in claim 1. |

**14.** A compound as claimed in claim 1, corresponding to the formula (1c)

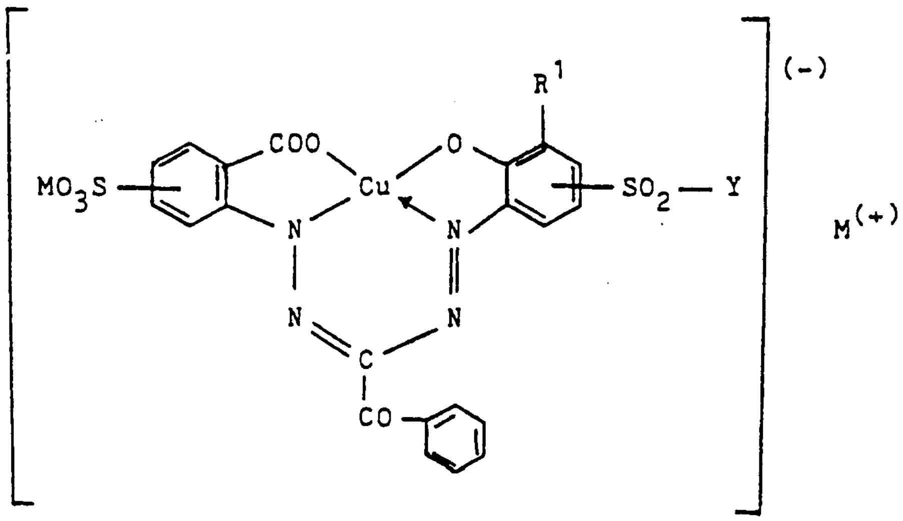

(1c)

in which

| | |
|---|---|
| $R^1$ | is a hydrogen atom or a sulfo group and |
| Y and M | have the meanings given in claim 1. |

**15.** A compound as claimed in at least one of claims 1 to 14, in which Y is the vinyl group or a β-chloroethyl, β-acetoxyethyl, β-(sulfobenzoyloxy)ethyl, β-(p-methylphenylsulfonyloxy)ethyl, βdimethylaminoethyl, β-diethylaminoethyl, β-phosphatoethyl or β-thiosulfatoethyl group or denotes a β-sulfatoethyl group.

**16.** A compound as claimed in at least one of claims 1 to 14, in which Y denotes a β-sulfatoethyl group.

**17.** A process for the preparation of a compound of the formula (1) mentioned and defined in claim 1, which comprises reacting a hydrazone compound of the formula (2)

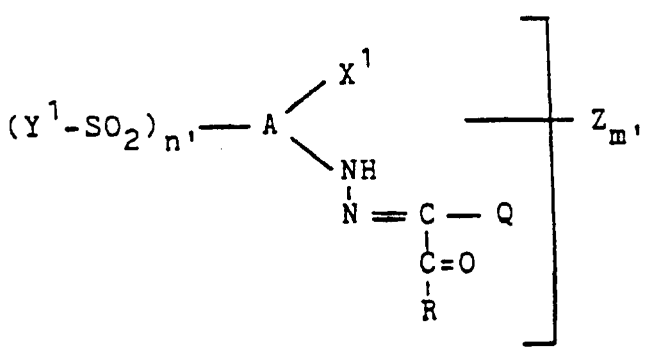

(2)

in which

| | |
|---|---|
| A, R and Z | have the meanings given in claim 1, |
| $X^1$ | represents the hydroxyl, carboxyl or sulfo group, |
| $Y^1$ | has one of the meanings given for Y or is the β-hydroxyethyl group, |
| n' | denotes the number zero or 1, |
| m' | denotes the number zero, 1, 2 or 3, |
| Q | is a hydrogen atom or a substituent which can be replaced by azo coupling, such as, for example, the carboxyl group, the group $X^1$ and the amino group being bonded to A in the ortho-position relative to one another, |

with the diazonium compound of an aromatic amine of the formula (3)

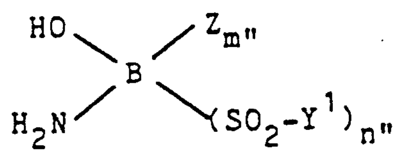

(3)

in which

B, Z and $Y^1$ have one of the meanings given in claim 1 or mentioned above, the hydroxyl group and the amino group being bonded to B in the ortho-position relative to one another,

m'' represents the number zero, 1 or 2 and

n'' denotes the number zero or 1,

the sum of (m' + m'') being equal to the meaning of m and the sum of (n' + n'') being equal to the meaning of n, in the presence of a copper-donating agent,

and, in the case where one or both of the groups $Y^1$ represent the β-hydroxyethyl group, converting this (these) group(s) in the copper formazan compound formed into the β-sulfatoethylsulfonyl-copper complex formazan compound of the formula (1) by procedures analogous to known procedures by means of a sulfating agent.

**18.** The use of a dyestuff as claimed in at least one of claims 1 to 16 for dyeing and printing material containing hydroxyl and/or carboxamide groups, in particular fiber material.

**19.** A process for coloring (dyeing, including printing) material containing hydroxyl and/or carboxamide groups, preferably fiber material, in which a dyestuff is applied to the material or incorporated into the material and the dyestuff is fixed on or in the material by means of heat or with the aid of an alkaline agent or by means of heat and with the aid of an alkaline agent, which comprises using a dyestuff as claimed in at least one of claims 1 to 16 as the dyestuff.

**Claims for the following Contracting State : ES**

**1.** A process for the preparation of a copper complex formazan compound corresponding to the formula (1)

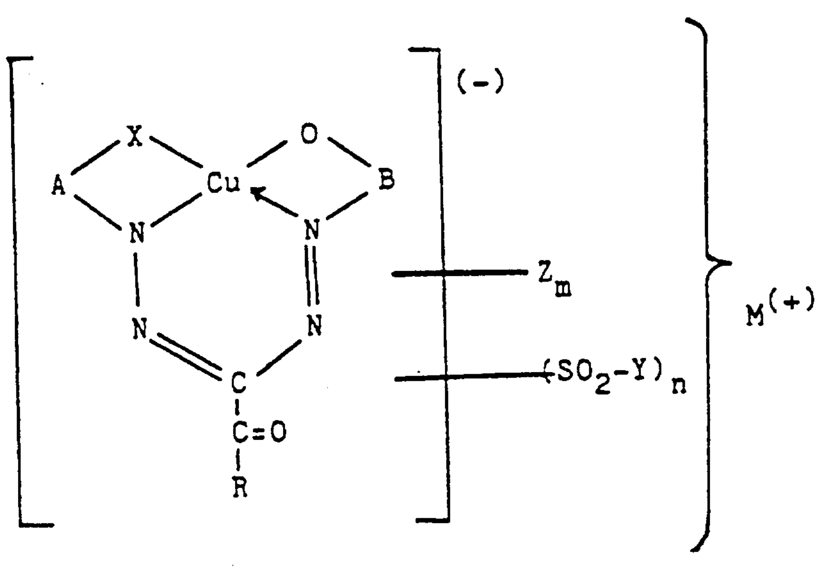

(1)

in which:

A can be substituted by one or two groups Z, which is defined below, and/or by the group mentioned of the formula $-SO_2-Y$, which is defined below, and is a phenylene radical or a naphthylene radical, both of which can be substituted by substituents which belong to the

following group of substituents: halogen, alkyl having 1 to 5 carbon atoms, alkoxy having 1 to 5 carbon atoms, alkylsulfonyl having 1 to 4 carbon atoms, which can be substituted, phenylsulfonyl, sulfamoyl, sulfamoyl which is mono- or disubstituted by alkyl having 1 to 4 carbon atoms, cycloalkylsulfamoyl having a cycloalkyl radical having 5 to 8 carbon atoms, nitro, alkanoylamino having 2 to 5 carbon atoms, benzoylamino, which can be substituted by 1 or 2 substituents from the group comprising sulfo, carboxyl, chlorine, methyl, ethyl, methoxy and ethoxy, and substituted alkanoylamino having 2 to 5 carbon atoms in the alkanoyl radical;

the group X and the N atom are bonded to the aromatic nucleus of A in the ortho-position relative to one another;

B has one of the meanings of A and can be identical to A or different from A;

the O atom and the N atom are bonded to the aromatic nucleus of B in the ortho-position relative to one another;

R is an aryl radical, such as the phenyl or naphthyl radical, which can be substituted by one or two groups Z, which is defined below, and/or by substituents from the group comprising halogen, alkyl having 1 to 5 carbon atoms and alkoxy having 1 to 5 carbon atoms, or

R is a straight-chain or branched alkyl radical having 1 to 6 carbon atoms, preferably 1 to 4 carbon atoms, which can be substituted by halogen, sulfo and/or carboxyl;

Z is a group which confers water-solubility, as a substituent on A, B and R, if appropriate in addition to the abovementioned substituents of A, B and R, which is contained in the formazan molecule one to four times, according to the definition of m below, and is bonded to an aromatic carbon atom or to an aliphatic carbon atom of A, B and R or a substituent thereof, it being possible for Z, if it is contained in the molecule 2, 3 or 4 times, to have different meanings within the meanings mentioned;

m is the number 1, 2, 3 or 4;

Y is the vinyl group or is the ethyl group, which contains a substituent in the $\beta$-position which can be eliminated by an alkali, the group $-SO_2-Y$, as a substituent on A and B if appropriate in addition to the abovementioned substituents of A and B, being contained in the formazan molecule once or twice and being bonded to an aromatic carbon atom of A and B or to an aliphatic carbon atom of a substituent thereof, it being possible for the groups $-SO_2-Y$, if they are contained in the molecule twice, to have different meanings within the abovementioned meanings;

n is the number 1 or 2;

X is an oxygen atom or a carbonyloxy group of the formula -CO-O- or a group of the formula $-SO_3^{(-)}$ bonded to only the radical A; and

$M^{(+)}$ is a hydrogen atom or an alkali metal or the equivalent of a divalent metal, preferably a hydrogen atom or sodium, potassium or lithium;

which comprises reacting a hydrazone compound of the formula (2)

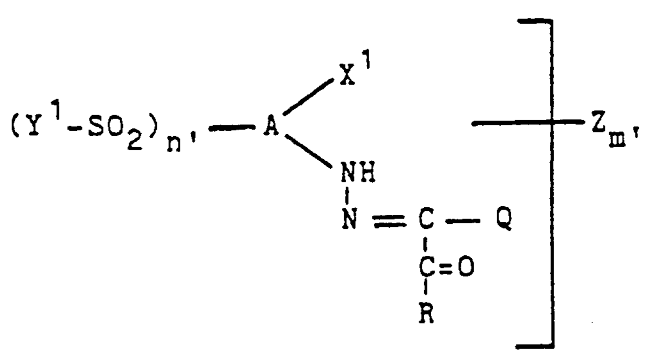

(2)

in which

| | |
|---|---|
| A, R and Z | have the abovementioned meanings, |
| $X^1$ | represents the hydroxyl, carboxyl or sulfo group, |
| $Y^1$ | has one of the meanings given for Y or is the $\beta$-hydroxyethyl group, |
| n' | denotes the number zero or 1, |
| m' | denotes the number zero, 1, 2 or 3, |

Q — is a hydrogen atom or a substituent which can be replaced by azo coupling, such as, for example, the carboxyl group, the group $X^1$ and the amino group being bonded to A in the ortho-position relative to one another,

with the diazonium compound of an aromatic amine of the formula (3)

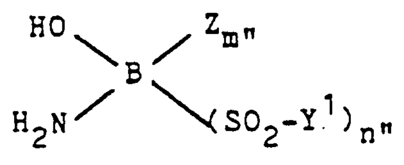

(3)

in which

B, Z and $Y^1$ — have one of the abovementioned meanings, the hydroxyl group and the amino group being bonded to B in the ortho-position relative to one another,

m'' — represents the number zero, 1 or 2 and

n'' — denotes the number zero or 1,

the sum of (m' + m'') being equal to the meaning of m and the sum of (n' + n'') being equal to the meaning of n, in the presence of a copper-donating agent,

and, in the case where one or both of the groups $Y^1$ represent the β-hydroxyethyl group, converting this (these) group(s) in the copper formazan compound formed into the β-sulfatoethylsulfonyl-copper complex formazan compound of the formula (1) by procedures analogous to known procedures by means of a sulfating agent.

**2.** The process as claimed in claim 1, wherein A is a benzene nucleus which can be substituted by, in addition to the group Z and/or the group $-SO_2-Y$, a substituent from the group comprising chlorine, bromine, nitro, methyl, ethyl, methoxy, ethoxy, methylsulfonyl, ethylsulfonyl, sulfamoyl, N,N-dimethylsulfamoyl, phenylsulfonyl, β-hydroxyethylsulfonyl, β-sulfoethylsulfonyl, acetylamino, benzoylamino, succinylamino, (β-sulfatoethylsulfonyl)amino and N-methyl-N-(β-sulfatoethylsulfonyl)amino.

**3.** The process as claimed in claim 1 or 2, wherein B is the benzene ring which can be substituted by, in addition to the group Z and/or a group $-SO_2-Y$, one or two substituents from the group comprising chlorine, bromine, nitro, methyl, ethyl, methoxy, ethoxy, methylsulfonyl, ethylsulfonyl, sulfamoyl, N,N-dimethylsulfamoyl, phenylsulfonyl, β-hydroxyethylsulfonyl, β-sulfoethylsulfonyl, acetylamino, benzoylamino, succinylamino, (β-sulfatoethylsulfonyl)amino and N-methyl-N-(β-sulfatoethylsulfonyl)amino.

**4.** The process as claimed in claim 1 or 3, wherein A is a naphthylene or phenylene radical, both of which can be substituted by, in addition to the groups Z and/or $-SO_2-Y$ mentioned, 1 or 2, preferably 1, substituent(s) from the group comprising chlorine, bromine, nitro, methyl, ethyl, methoxy, ethoxy, methylsulfonyl, ethylsulfonyl, β-sulfoethylsulfonyl, sulfamoyl and N,N-dimethylsulfamoyl.

**5.** The process as claimed in at least one of claims 1, 2 and 4, wherein B is a naphthylene or phenylene radical, both of which can be substituted by, in addition to the groups Z and/or $-SO_2-Y$ mentioned, 1 or 2 substituents from the group comprising chlorine, methyl, ethyl, methoxy, ethoxy, methylsulfonyl, ethylsulfonyl and nitro.

**6.** The process as claimed in claim 4 or 5, wherein Z is a sulfo group and is bonded once or twice to A and/or once or twice to B and the group $-SO_2-Y$ is bonded to A or to B or, in the case where n is 2, to A and B.

**7.** The process as claimed in at least one of claims 1 to 6, wherein n represents the number 1.

**8.** The process as claimed in at least one of claims 1 to 7, preferably 7, wherein the group $-SO_2-Y$ is bonded to B.

**9.** The process as claimed in at least one of claims 1 to 8, wherein R is methyl, ethyl, phenyl or naphthyl.

**10.** The process as claimed in at least one of claims 1 to 8, wherein R is methyl or phenyl.

**11.** The process as claimed in at least one of claims 1, 9 and 10, wherein A is the phenylene radical, which can be substituted by a methyl, ethyl, methoxy, ethoxy, nitro, β-sulfoethylsulfonyl, methylsulfonyl or ethylsulfonyl group or a chlorine atom, n is the number 1, B denotes the phenylene radical, which is substituted by the group $-SO_2-Y$, where Y has the meaning given in claim 1, m represents the number 1, 2 or 3, Z denotes the sulfo group and is bonded to A and/or B and X denotes the oxy or carbonyloxy radical, and M has the meaning given in claim 1.

**12.** The process as claimed in claim 1, wherein the compound of the formula (1) is a compound corresponding to the formula (1a)

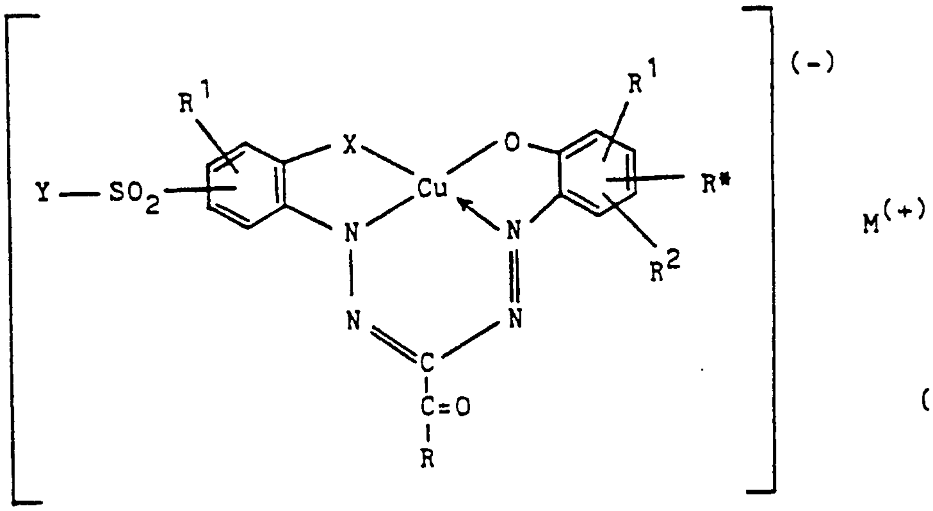

(1a)

in which

| | |
|---|---|
| $R^1$ | is a hydrogen atom or a sulfo group, at least one $R^1$ being a sulfo group, |
| $R^2$ | is a hydrogen atom or a β-sulfatoethylsulfonyl group, |
| R* | is hydrogen, sulfo, chlorine, methylsulfonyl, ethylsulfonyl, carboxyl, nitro or methyl, |
| R | is methyl or phenyl, |
| X | is carbonyloxy or oxy and |
| Y and M | have the meanings given in claim 1. |

**13.** The process as claimed in claim 1, wherein the compound of the formula (1) is a compound corresponding to the formula (1b)

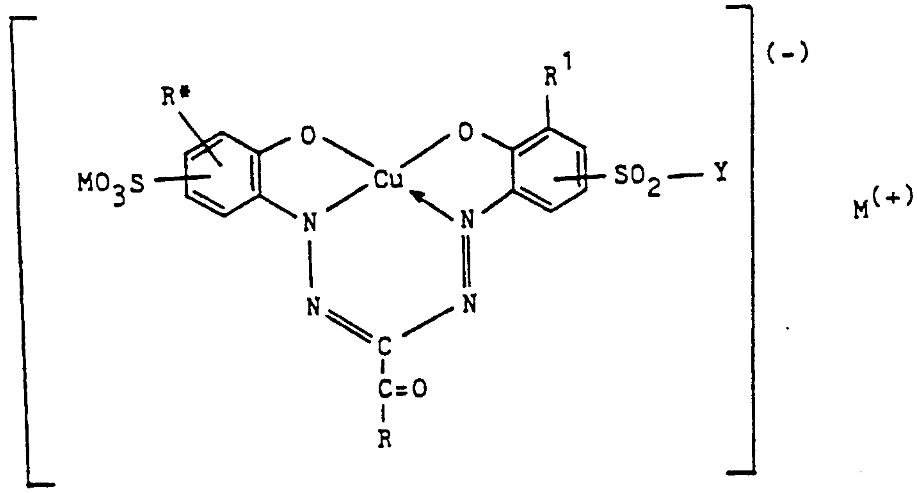

(1b)

in which

| | |
|---|---|
| $R^1$ | is a hydrogen atom or a sulfo group, |
| R* | is hydrogen, sulfo, chlorine, methylsulfonyl, ethylsulfonyl, carboxyl, nitro or methyl, |
| R | is methyl or phenyl and |
| Y and M | have the meanings given in claim 1. |

**14.** The process as claimed in claim 1, wherein the compound of the formula (1) is a compound corresponding to the formula (1c)

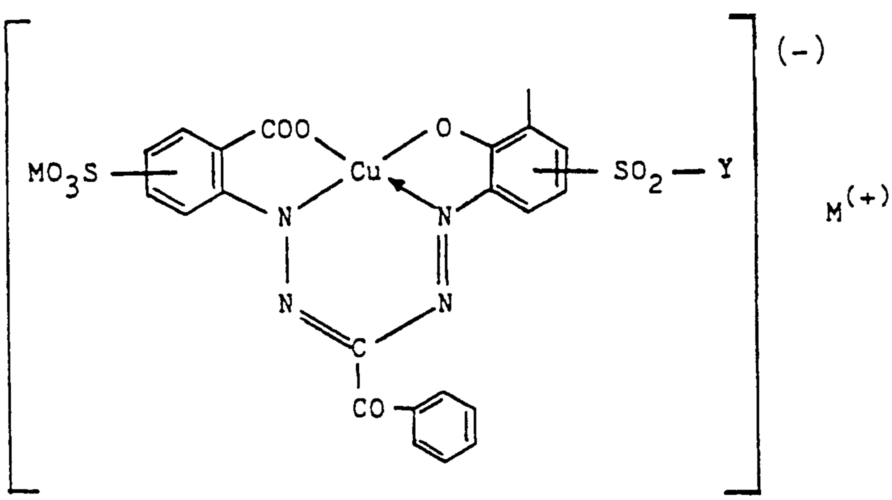

(1c)

in which

| | |
|---|---|
| $R^1$ | is a hydrogen atom or a sulfo group and |
| Y and M | have the meanings given in claim 1. |

**15.** The process as claimed in at least one of claims 1 to 14, wherein Y is the vinyl group or a $\beta$-chloroethyl, $\beta$-acetoxyethyl, $\beta$-(sulfobenzoyloxy)ethyl, $\beta$-(p-methylphenylsulfonyloxy)ethyl, $\beta$-dimethylamino-ethyl, $\beta$-diethylaminoethyl, $\beta$-phosphatoethyl or a $\beta$-thiosulfatoethyl group or denotes a $\beta$-sulfatoethyl group.

**16.** The process as claimed in at least one of claims 1 to 14, wherein Y denotes a $\beta$-sulfatoethyl group.

**17.** The use of a dyestuff as claimed in at least one of claims 1 to 16 for dyeing and printing material containing hydroxyl and/or carboxamide groups, in particular fiber material.

**18.** A process for coloring (dyeing, including printing) material containing hydroxyl and/or carboxamide groups, preferably fiber material, in which a dyestuff is applied to the material or incorporated into the material and the dyestuff is fixed on or in the material by means of heat or with the aid of an alkaline agent or by means of heat and with the aid of an alkaline agent, which comprises using a dyestuff as claimed in at least one of claims 1 to 16 as the dyestuff.

**Revendications**
**Revendications pour les Etats contractants suivants : BE, CH, DE, FR, GB, IT, LI**

**1.** Composé de type complexe de cuivre-formazan, correspondant à la formule générale (1)

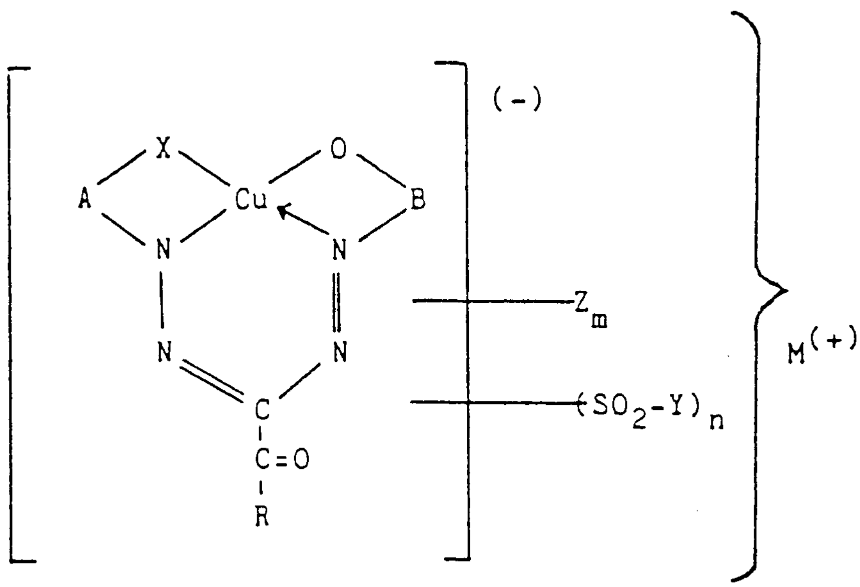

(1)

dans laquelle les abréviations ont les significations suivantes :

A peut être substitué par un ou deux groupes Z , dont la définition sera donnée ci-dessous et/ou par les groupes indiqués de formule $-SO_2-Y$, dont la définition sera donnée ci-dessous, et représente un radical phénylène ou un radical naphthylène, ces deux radicaux pouvant être substitués par des substituants qui appartiennent au groupe suivant de substituants : les atomes d'halogène, les groupes alkyle contenant de 1 à 5 atomes de carbone, les groupes alkoxy contenant de 1 à 5 atomes de carbone, les groupes alkylsulfonyle contenant de 1 à 4 atomes de carbone, qui peuvent être substitués, les groupes phénylsulfonyle, sulfamoyle, sulfamoyle substitué une ou deux fois par des groupes alkyle contenant de 1 à 4 atomes de carbone, cycloalkylsulfamoyle présentant un radical cycloalkyle contenant de 5 à 8 atomes de carbone, un groupe nitro, alkanoylamino contenant de 2 à 5 atomes de carbone, benzoylamino, qui peut être substitué par un ou deux substituants choisis dans le groupe de substituants formé par les groupes sulfo, carboxy, chloro, méthyle, éthyle, méthoxy et éthoxy, et les groupes alkanoylamino substitués contenant de 2 à 5 atomes de carbone dans le radical alkanoyle ;
les groupes X et l'atome d'azote sont liés au noyau aromatique de A en position ortho l'un par rapport à l'autre.

B présente la même signification que A et peut être identique à A ou différent ;
l'atome d'oxygène et l'atome d'azote sont liés au noyau aromatique de B en position ortho l'un par rapport à l'autre ;

R représente un radical aryle, comme un radical phényle ou naphthyle, qui peut être substitué par un ou deux groupes Z dont la définition sera donnée ci-dessous, et/ou par des substituants appartenant au groupe des atomes d'halogène, des groupes alkyle contenant de 1 à 5 atomes de carbone et des groupes alkoxy contenant de 1 à 5 atomes de carbone, ou bien

R représente un radical alkyle à chaîne droite ou ramifiée contenant de 1 à 6 atomes de carbone, de préférence de 1 à 4 atomes de carbone, qui peut être substitué par un atome

d'halogène ou un groupe sulfo et/ou carboxy ;

Z représente un groupe apportant une fonction de solubilité dans l'eau, sous la forme d'un substituant sur les groupes A, B et R, éventuellement additionnel par rapport aux substituants cités ci-dessus de A, B et R, qui se trouve dans la molécule de formazan en nombre compris de 1 à 4 en fonction de la définition de m donnée ci-dessous, et est lié à un atome de carbone aromatique ou à un atome de carbone aliphatique des groupes A, B et R ou à l'un des substituants de ces groupes, Z, pour autant qu'il soit contenu 2,3 ou 4 fois dans la molécule, pouvant présenter différentes significations dans le groupe formé par les significations données ci-dessus ;

m vaut 1, 2, 3 ou 4 ;

Y représente le groupe vinyle ou représente le groupe éthyle, qui contient en position $\beta$ un subsituant qui est éliminable par un alcali, le groupe $-SO_2$-Y étant contenu une ou deux fois dans la molécule de formazan sous la forme d'un substituant aux groupes A et B éventuellement additionnel par rapport aux substituants cités ci-dessus de A et B, et est lié à un atome de carbone aromatique de A et a ou bien un atome de carbone aliphatique d'un substituant de ces groupes, les groupes $-SO_2$-Y, pour autant qu'ils soient contenus deux fois dans la molécule, pouvant présenter différentes significations contenues dans la liste des significations indiquées ci-dessus ;

n vaut 1 ou 2 ;

X représente un atome d'oxygène ou un groupe carbonyloxy de formule -CO-O- ou un groupe de formule $-SO_3^{(-)}$ lié seulement au radical A ;

$M^{(+)}$ représente un atome d'hydrogène ou un métal alcalin ou l'équivalent d'un métal bivalent, de préférence un atome d'hydrogène ou bien le sodium, le potassium ou le lithium.

**2.** Composé selon la revendication 1, **caractérisé** en ce que A représente un noyau benzénique, qui, outre les groupes Z et/ou les groupes $-SO_2$-Y, peut être substitué par un substituant choisi dans le groupe formé par les atomes de chlore, de brome et les groupes nitro, méthyle, éthyle, méthoxy, éthoxy, méthylsulfonyle, éthylsulfonyle, sulfamoyle, N,N-diméthylsulfamoyle, phénylsulfonyle, $\beta$-hydroxyéthylsulfonyle, $\beta$-sulfoéthylsulfonyle, acétylamino, benzoylamino, succinylamino, ($\beta$-sulfatoéthylsulfonyl)-amino et N-méthyl-N-($\beta$-sulfatoéthylsulfonyl)-amino.

**3.** Composé selon la revendication 1 ou 2, **caractérisé** en ce que B représente un cycle benzénique, qui, outre les groupes Z et/ou un groupe $-SO_2$-Y, peut être substitué par un ou deux substituants choisis dans le groupe formé par les atomes de chlore, de brome, et les groupes nitro, méthyle, éthyle, méthoxy, éthoxy, méthylsulfonyle, éthylsulfonyle, sulfamoyle, N,N- diméthylsulfamoyle, phénylsulfonyle, $\beta$-hydroxyéthylsulfonyle, $\beta$-sulfoéthylsulfonyle, acétylamino, benzoylamino, succinylamino, ($\beta$-sulfatoéthylsulfonyl)-amino et N-méthyl-N-($\beta$-sulfatoéthylsulfonyl)-amino.

**4.** Composé selon la revendication 1 ou 3, **caractérisé** en ce que A représente un radical naphthylène ou phénylène, ces deux radicaux pouvant être substitués, en dehors des groupes indiqués Z et/ou $-SO_2$-Y, par un ou deux, de préférence un, substituant(s) choisi(s) dans le groupe formé par les atomes de chlore et de brome, et les groupes nitro, méthyle, éthyle, méthoxy, éthoxy, méthylsulfonyle, éthylsulfonyle, $\beta$-sulfoéthylsulfonyle, sulfamoyle et N,N-diméthylsulfamoyle.

**5.** Composé selon l'une au moins des revendications 1, 2 et 4, **caractérisé** en ce que B représente un radical naphthylène ou phénylène, ces deux radicaux pouvant être substitués, en dehors des groupes Z et/ou $-SO_2$-Y indiqués, par un ou deux substituants choisis dans le groupe des atomes de chlore, et des groupes méthyle, éthyle, méthoxy, éthoxy, méthylsulfonyle, éthylsulfonyle et nitro.

**6.** Composé selon la revendication 4 ou 5, **caractérisé** en ce que Z représente un groupe sulfo et est lié sur le radical A une fois ou deux fois et/ou sur le radical B une fois ou deux fois, et le groupe $-SO_2$-Y est lié sur A ou sur B ou bien, lorsque n vaut 2 sur A et B.

**7.** Composé selon l'une au moins des revendications 1 à 6 **caractérisé** en ce que n vaut 1.

**8.** Composé selon l'une au moins des revendications 1 à 7 de préférence la revendication 7, **caractérisé** en ce que le groupe $-SO_2$-Y est lié au radical B.

9. Composé selon l'une au moins des revendications 1 à 8, **caractérisé** en ce que R représente un groupe méthyle, éthyle, phényle ou naphthyle.

10. Composé selon l'une au moins des revendications 1 à 8, **caractérisé** en ce que R représente un groupe méthyle ou phényle.

11. Composé selon l'une au moins des revendications 1,9 et 10, **caractérisé** en ce que A représente un radical phénylène, qui peut être substitué par un groupe méthyle, éthyle, méthoxy, éthoxy, nitro, β-sulfoéthylsulfonyle, méthylsulfonyle ou éthylsulfonyle ou par un atome de chlore, n vaut 1, B représente un radical phénylène qui est substitué par les groupes $-SO_2-Y$ dans lesquels Y est tel que défini dans la revendication 1, m vaut 1, 2 ou 3, Z représente un groupe sulfo et est lié sur le groupe A et/ou le groupe B et X représente un groupe oxy ou un groupe carbonyloxy et M est tel que défini dans la revendication 1.

12. Composé selon la revendication 1, correspondant à la formule générale (1a)

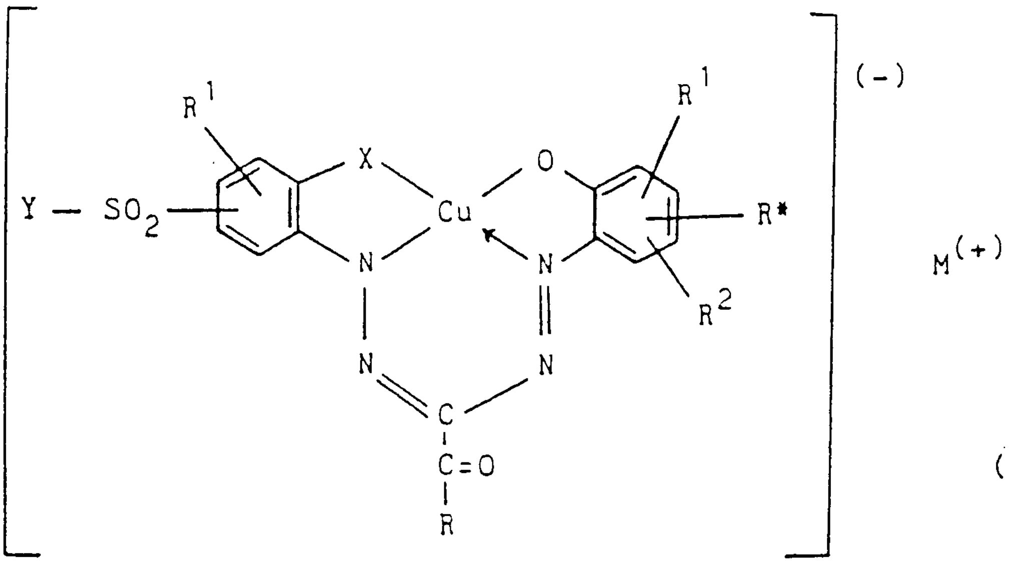

(1a)

dans laquelle les abréviations ont les significations suivantes :

- $R^1$ représente un atome d'hydrogène ou un groupe sulfo, au moins l'un des radicaux $R^1$ représentant un groupe sulfo,
- $R^2$ représente un atome d'hydrogène ou un groupe β-sulfatoéthylsulfonyle,
- $R^*$ représente un atome d'hydrogène, ou un groupe sulfo, ou un atome de chlore, ou un groupe méthylsulfonyle, éthylsulfonyle, carboxy, nitro ou méthyle,
- R représente un groupe méthyle ou phényle,
- X représente un groupe carbonyloxy et oxy et
- Y et M sont tels que définis dans la revendication 1.

**13.** Composé selon la revendication 1, correspondant à la formule générale (1b)

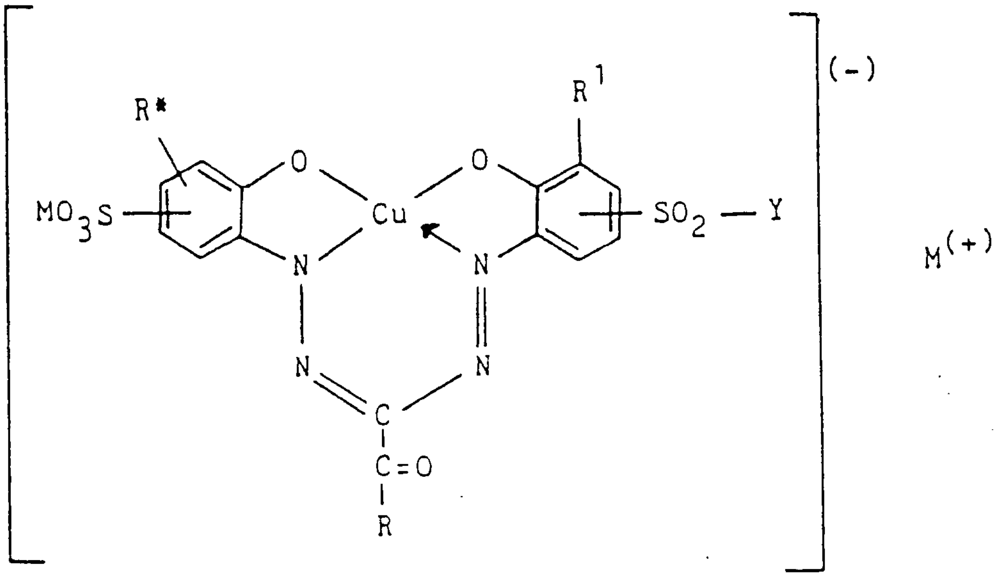

(1b)

dans laquelle:

- $R^1$ représente un atome d'hydrogène ou un groupe sulfo,
- $R^*$ représente un atome d'hydrogène, ou un groupe sulfo, ou un atome de chlore, ou un groupe méthylsulfonyle, éthylsulfonyle, carboxy, nitro ou méthyle,
- R représente un groupe méthyle ou phényle,
- Y et M sont tels que définis ci-dessus dans la revendication 1.

**14.** Composé selon la revendication 1, correspondant à la formule générale (1c)

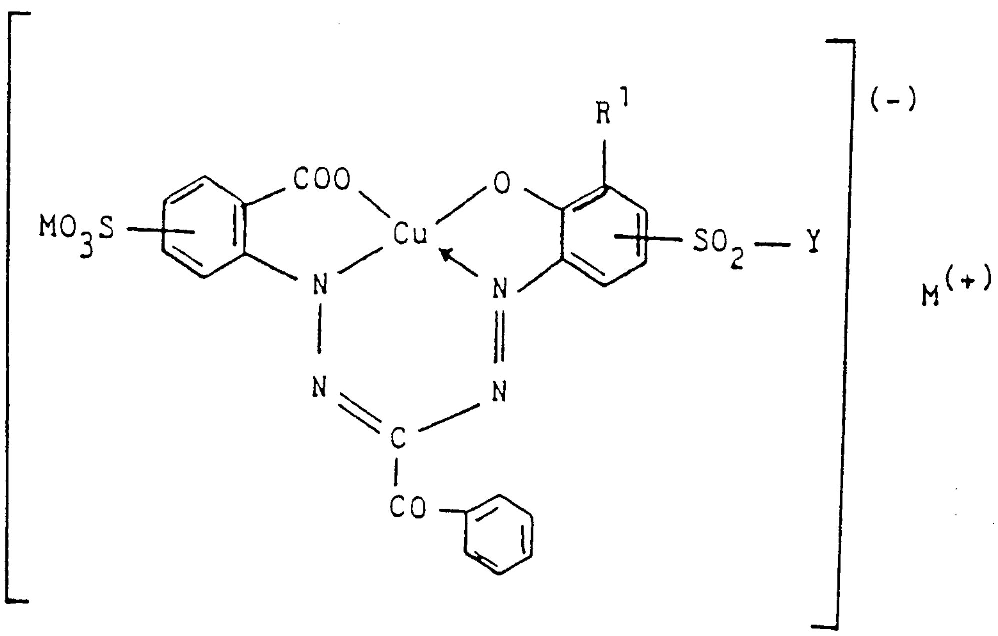

(1c)

dans laquelle :

- $R^1$ représente un atome d'hydrogène ou un groupe sulfo, et
- Y et M sont tels que définis dans la revendication 1.

**15.** Composé selon l'une au moins des revendications 1 à 14, **caractérisé** en ce que Y représente un groupe vinyle ou un groupe $\beta$-chloroéthyle, $\beta$-acétyloxyéthyle, $\beta$-(sulfobenzoyloxy)-éthyle, $\beta$-(p-méthylphénylsulfonyloxy)-éthyl, $\beta$-diméthylaminoéthyle, $\beta$-diéthylaminoéthyle, $\beta$-phosphatoéthyle ou représente un groupe $\beta$-thiosulfatoéthyle ou signifie un groupe $\beta$-sulfatoéthyle.

**16.** Composé selon l'une au moins des revendications 1 à 14, **caractérisé** en ce que Y représente un groupe $\beta$-sulfatoéthyle.

**17.** Procédé pour la préparation d'un composé défini et cité dans la revendication 1, de formule générale (1), **caractérisé** en ce que l'on fait réagir un composé d'hydrazone de formule générale (2)

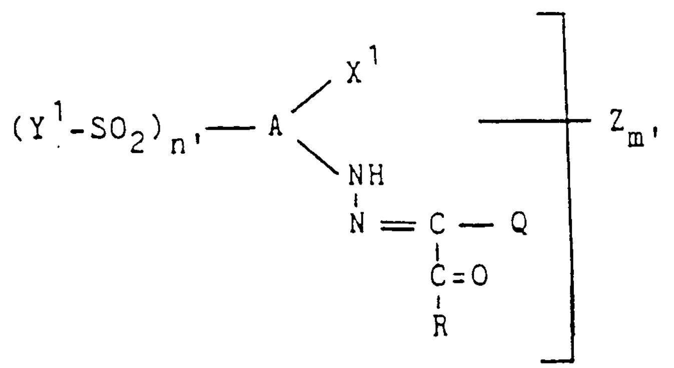

(2)

dans laquelle :

A, R et Z sont tels que définis dans la revendication 1,

$X^1$ représente un groupe hydroxy, carboxy ou sulfo,

$Y^1$ représente un groupe dont la signification a été donnée pour Y ou représente un groupe $\beta$-hydroxyéthyle,

n' vaut 0 ou 1,

m' vaut 0, 1, 2 ou 3,

Q représente un atome d'hydrogène ou bien un substituant pouvant être remplacé par copulation azoïque, comme par exemple un groupe carboxy, les groupes $X^1$ et les groupes amino étant liés sur le groupe A en position ortho l'un par rapport à l'autre,

sur un composé de diazonium d'une amine aromatique de formule générale (3)

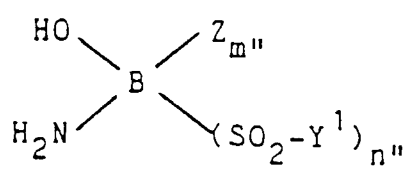

(3)

dans laquelle :

B, Z et $Y^1$ sont tels que définis dans la revendication 1 ou respectivement ont les significations indiquées ci-dessus, les groupes hydroxy et les groupes amino étant liés à B en position ortho l'un par rapport à l'autre,

m'' vaut 0, 1 ou 2 et

n'' vaut 0 ou 1,

la somme de (m' + m'') est égale à m et la somme de (n' + n'') est identique à n, en présence d'un agent capable de libérer du cuivre,

et en ce que, dans le cas où l'un ou les deux groupes $Y^1$ représente un groupe $\beta$-hydroxyéthyle, en ce que l'on transforme ces groupes dans le composé formé de cuivre-formazan, par des procédés analogues aux procédés connus, au moyen d'un agent de sulfatation, en les composés de $\beta$-sulfatoéthylsulfonyle-complexe de cuivre-formazan de formule (1).

**18.** Utilisation d'un colorant selon l'une au moins des revendications 1 à 16 pour la teinture et l'impression de matières contenant des groupes hydroxy et/ou carbonamide, en particulier de matières fibreuses de ce type.

**19.** Procédé pour colorer (teinter, y compris par impression) des matières contenant des groupes hydroxy et/ou carbonamide, de préférence des matières fibreuses de ce type, selon lequel on dépose un colorant sur ladite matière, ou on l'incorpore dans ladite matière, et on fixe le colorant sur ou dans ladite matière au moyen de la chaleur ou au moyen d'un agent alcalin, ou au moyen de la chaleur et à l'aide d'un agent alcalin, **caractérisé** en ce que l'on utilise comme colorant un colorant selon l'une au moins des revendications 1 à 16.

**Revendications pour l'Etat contractant suivant : ES**

**1.** Procédé pour la préparation d'un composé de type complexe de cuivre-formazan correspondant à la formule générale (1)

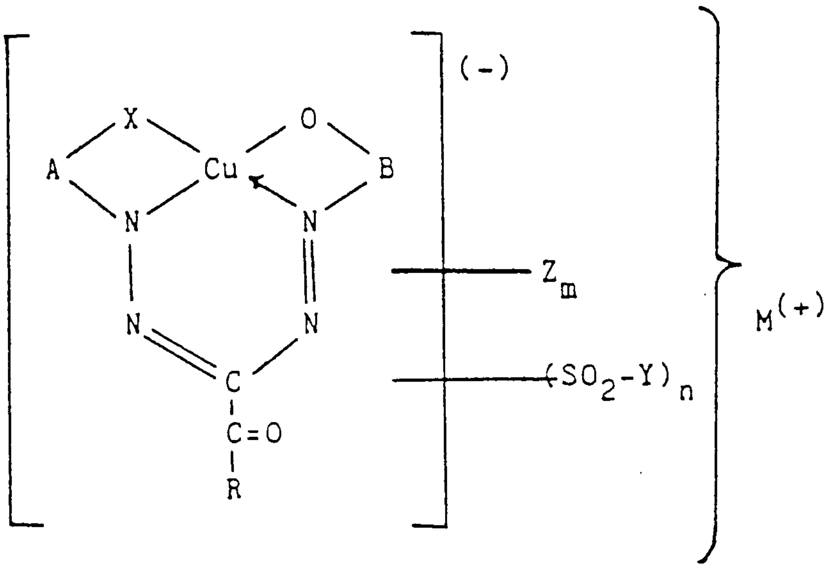

(1)

dans laquelle les abréviations ont les significations suivantes :

A peut être substitué par un ou deux groupes Z , dont la définition sera donnée ci-dessous et/ou par les groupes indiqués de formule $-SO_2-Y$, dont la définition sera donnée ci-dessous, et représente un radical phénylène ou un radical naphthylène, ces deux radicaux pouvant être substitués par des substituants qui appartiennent au groupe suivant de substituants : les atomes d'halogène, les groupes alkyle contenant de 1 à 5 atomes de carbone, les groupes alkoxy contenant de 1 à 5 atomes de carbone, les groupes alkylsulfonyle contenant de 1 à 4 atomes de carbone, qui peuvent être substitués, les groupes phénylsulfonyle, sulfamoyle, sulfamoyle substitué 1 ou 2 fois par des groupes alkyle contenant de 1 à 4 atomes de carbone, cycloalkylsulfamoyle présentant un radical cycloalkyle contenant de 5 à 8 atomes de carbone, un groupe nitro, alkanoylamino contenant de 2 à 5 atomes de carbone, benzoylamino, qui peut être substitué par un ou deux substituants choisis dans le groupe de substituants formé par les groupes sulfo, carboxy, chloro, méthyle, éthyle, méthoxy et éthoxy, et les groupes alkanoylamino substitués contenant de 2 à 5 atomes de carbone dans le radical alkanoyle :
les groupes X et l'atome d'azote sont liés au noyau aromatique de A en position ortho l'un par rapport à l'autre :

B présente la même signification de A et peut être identique à A ou différent ;
l'atome d'oxygène et l'atome d'azote sont liés au noyau aromatique de B en position ortho l'un par rapport à l'autre ;

R représente un radical aryle, comme un radical phényle ou naphthyle, qui peut être

substitué par un ou deux groupes Z dont la définition sera donnée ci-dessous, et/ou par des substituants appartenant au groupe des atomes d'halogène, des groupes aklyle contenant de 1 à 5 atomes de carbone et des groupes alkoxy contenant de 1 à 5 atomes de carbone, ou bien

R représente un radical alkyle à chaîne droite ou ramifiée contenant de 1 à 6 atomes de carbone, de préférence de 1 à 4 atomes de carbone, qui peut être substitué par un atome d'halogène ou un groupe sulfo et/ou carboxy ;

Z représente un groupe apportant une fonction de solubilité dans l'eau, sous la forme d'un substituant sur les groupes A, B et R, éventuellement additionnel par rapport aux substituants cités ci-dessus de A, B et R, qui se trouve dans la molécule de formazan en nombre compris de 1 à 4 en fonction de la définition de m donnée ci-dessous, et est lié à un atome de carbone aromatique ou à un atome de carbone aliphatique des groupes A, B et R ou à l'un des substituants de ces groupes, Z, pour autant qu'il soit contenu 2,3 ou 4 fois dans la molécule pouvant présenter différentes significations dans le groupe formé par les significations données ci-dessus ;

m vaut 1, 2, 3 ou 4 ;

Y représente le groupe vinyle ou représente le groupe éthyle, qui contient en position $\beta$ un substituant qui est éliminable par un alcali, le groupe $-SO_2-Y$ étant contenu une ou deux fois dans la molécule de formazan sous la forme d'un substituant aux groupes A et B éventuellement additionnel par rapport aux substituants cités ci-dessus de A et B, et est lié à un atome de carbone aromatique de A et B ou bien un atome de carbone aliphatique d'un substituant de ces groupes, les groupes $-SO_2-Y$, pour autant qu'ils soient contenus deux fois dans la molécule, pouvant présenter différentes significations contenues dans la liste des significations indiquées ci-dessus ;

n vaut 1 ou 2 ;

X représente un atome d'oxygène ou un groupe carbonyloxy de formule -CO-O- ou un groupe de formule $-SO_3^{(-)}$ lié seulement au radical A ;

$M^{(+)}$ représente un atome d'hydrogène ou un métal alcalin ou l'équivalent d'un métal bivalent, de préférence un atome d'hydrogène ou bien le sodium, le potassium ou le lithium ;

**caractérisé** en ce que on fait réagir un composé d'hydrazone de formule générale (2)

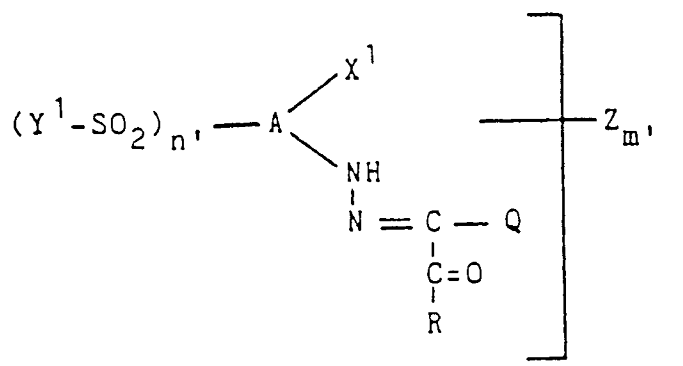

(2)

dans laquelle :

A, R et Z sont tels que définis dans la revendication 1,

$X^1$ représente un groupe hydroxy, carboxy ou sulfo,

$Y^1$ représente un groupe dont la signification a été donnée pour Y ou représente un groupe $\beta$-hydroxyéthyle,

n' vaut 0 ou 1,

m' vaut 0, 1, 2 ou 3,

Q représente un atome d'hydrogène ou bien un substituant pouvant être remplacé par copulation azoïque, comme par exemple un groupe carboxy, les groupes $X^1$ et les groupes amino étant liés sur le groupe A en position ortho l'un par rapport à l'autre, sur le dérivé de diazonium d'une amine aromatique de formule générale (3)

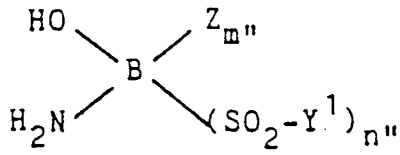

(3)

dans laquelle :

| | |
|---|---|
| B, Z et $Y^1$ | sont tels que définis dans la revendication 1 ou respectivement ont les significations indiquées ci-dessus, les groupes hydroxy et les groupes amino étant liés à B en position ortho l'un par rapport à l'autre, |
| m" | vaut 0, 1 ou 2 et |
| n" | vaut 0 ou 1, |

la somme de (m' + m") est égale à m et la somme de (n' + n") est identique à n, en présence d'un agent capable de libérer du cuivre,

et en ce que, dans le cas où l'un ou les deux groupes $Y^1$ représente un groupe β-hydroxyéthyle, en ce que l'on transforme ces groupes dans le composé formé de cuivre-formazan, par des procédés analogues aux procédés connus, au moyen d'un agent de sulfatation, en les composés de β-sulfatoéthylsulfonyle-complexe de cuivre-formazan de formule (1).

2. Procédé selon la revendication 1, **caractérisé** en ce que A représente un noyau benzénique, qui, outre les groupes Z et/ou les groupes $-SO_2-Y$, peut être substitué par un substituant choisi dans le groupe formé par les atomes de chlore, de brome et les groupes nitro, méthyle, éthyle, méthoxy, éthoxy, méthylsulfonyle, éthylsulfonyle, sulfamoyle, N,N-diméthylsulfamoyle, phénylsulfonyle, β-hydroxyéthyl-sulfonyle, β-sulfoéthylsulfonyle, acétylamino, benzoylamino, succinylamino, (β-sulfatoéthylsulfonyl)-amino et N-méthyl-N-(β-sulfatoéthylsulfonyl)-amino.

3. Procédé selon la revendication 1 ou 2, **caractérisé** en ce que B représente un cycle benzénique, qui, outre les groupes Z et/ou un groupe $-SO_2-Y$, peut être substitué par un ou deux substituants choisis dans le groupe formé par les atomes de chlore, de brome et les groupes nitro, méthyle, éthyle, méthoxy, éthoxy, méthylsulfonyle, éthylsulfonyle, sulfamoyle, N,N- diméthylsulfamoyle, phénylsulfonyle, β-hydroxyéthyl-sulfonyle, β-sulfoéthylsulfonyle, acétylamino, benzoylamino, succinylamino, (β-sulfatoéthylsulfonyl)-amino et N-méthyl-N-(β-sulfatoéthylsulfonyl)-amino.

4. Procédé selon la revendication 1 ou 3, **caractérisé** en ce que A représente un radical naphthylène ou phénylène, ces deux radicaux pouvant être substitués, en dehors des groupes indiqués Z et/ou $-SO_2-Y$, par un ou deux, de préférence un, substituant(s) choisi(s) dans le groupe formé par les atomes de chlore et de brome, et les groupes nitro, méthyle, éthyle, méthoxy, éthoxy, méthylsulfonyle, éthylsulfonyle, β-sulfoéthylsulfonyle, sulfamoyle et N,N-diméthylsulfamoyle.

5. Procédé selon l'une au moins des revendications 1, 2 et 4, **caractérisé** en ce que B représente un radical naphthylène ou phénylène, ces deux radicaux pouvant être substitués, en dehors des groupes Z et/ou $-SO_2-Y$ indiqués, par un ou deux substituants choisis dans le groupe formé des atomes de chlore et des groupes méthyle, éthyle, méthoxy, éthoxy, méthylsulfonyle, éthylsulfonyle et nitro.

6. Procédé selon la revendication 4 ou 5, **caractérisé** en ce que Z représente un groupe sulfo et est lié sur le radical A une fois ou deux fois et/ou sur le radical B une fois ou deux fois, et le groupe $-SO_2-Y$ est lié sur A ou sur B ou bien, lorsque n vaut 2 sur A et B.

7. Procédé selon l'une au moins des revendications 1 à 6 **caractérisé** en ce que n vaut 1.

8. Procédé selon l'une au moins des revendications 1 à 7, de préférence la revendication 7, **caractérisé** en ce que le groupe $-SO_2-Y$ est lié au radical B.

9. Procédé selon l'une au moins des revendications 1 à 8, **caractérisé** en ce que R représente un groupe méthyle, éthyle, phényle ou naphthyle.

**10.** Procédé selon l'une au moins des revendications 1 à 8, **caractérisé** en ce que R représente un groupe méthyle ou phényle.

**11.** Procédé selon l'une au moins des revendications 1,9 et 10, **caractérisé** en ce que A représente un radical phénylène, qui peut être substitué par une groupe méthyle, éthyle, méthoxy, éthoxy, nitro, β-sulfoéthylsulfonyle, méthylsulfonyle ou éthylsulfonyle ou par un atome de chlore, n vaut 1, B représente un radical phénylène qui est substitué par les groupes $-SO_2-Y$ dans lesquels Y est tel que défini dans la revendication 1, m vaut 1, 2 ou 3, Z représente un groupe sulfo et est lié sur le groupe A et/ou le groupe B et X représente un groupe oxy ou un groupe carbonyloxy et M est tel que défini dans la revendication 1.

**12.** Procédé selon la revendication 1, **caractérisé** en ce que le composé de formule (1) représente un composé correspondant à la formule générale (1a)

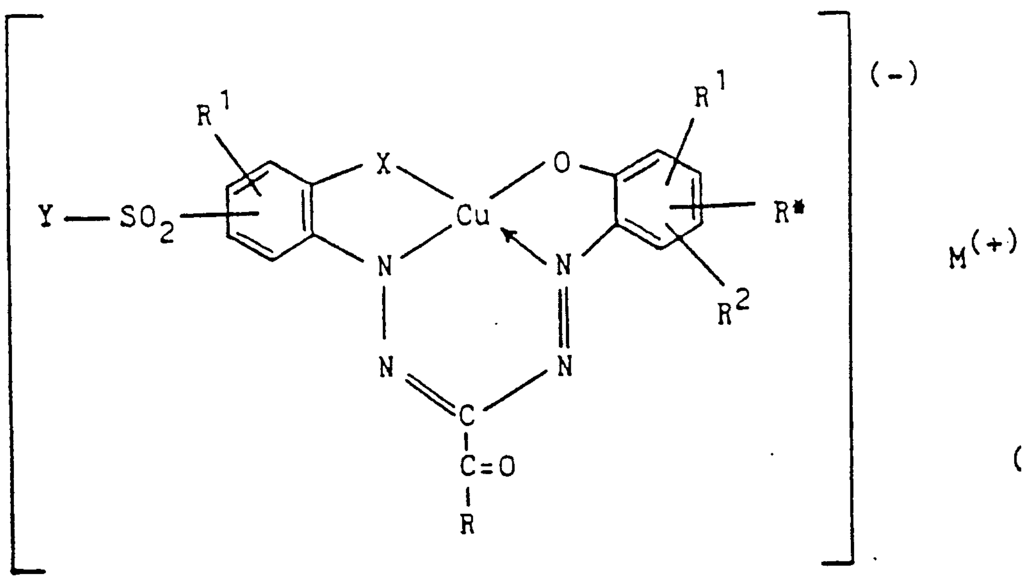

(1a)

dans laquelle :

| | |
|---|---|
| $R^1$ | représente un atome d'hydrogène ou un groupe sulfo, au moins l'un des radicaux $R^1$ représentant un groupe sulfo, |
| $R^2$ | représente un atome d'hydrogène ou un groupe β-sulfatoéthylsulfonyle, |
| $R^*$ | représente un atome d'hydrogène, ou un groupe sulfo, ou un atome de chlore, ou un groupe méthylsulfonyle, éthylsulfonyle, carboxy, nitro ou méthyle, |
| R | représente un groupe méthyle ou phényle, |
| X | représente un groupe carbonyloxy et oxy et |
| Y et M | sont tels que définis dans la revendication 1. |

**13.** Procédé selon la revendication 1, **caractérisé** en ce que le composé de formule (1) est un composé correspondant à la formule générale (1b)

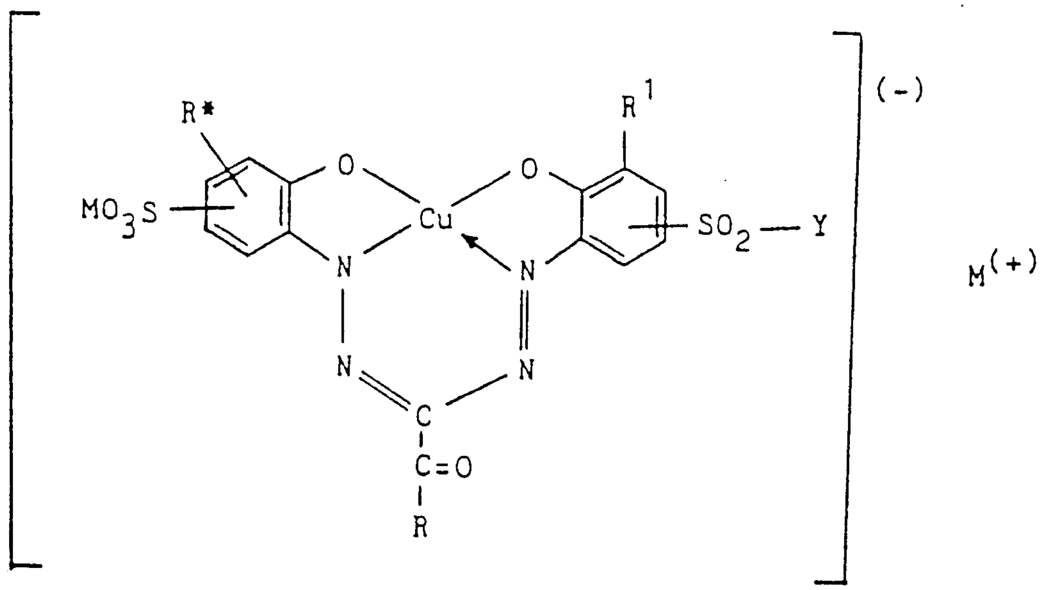

(1b)

dans laquelle:

| | |
|---|---|
| $R^1$ | représente un atome d'hydrogène ou un groupe sulfo, |
| R* | représente un atome d'hydrogène, ou un groupe sulfo, ou un atome de chlore, ou un groupe méthylsulfonyle, éthylsulfonyle, carboxy, nitro ou méthyle, |
| R | représente un groupe méthyle ou phényle, |
| Y et M | sont tels que définis ci-dessus dans la revendication 1. |

14. Procédé selon la revendication 1, **caractérisé** en ce que le composé de formule (1) est un composé correspondant à la formule générale (1c)

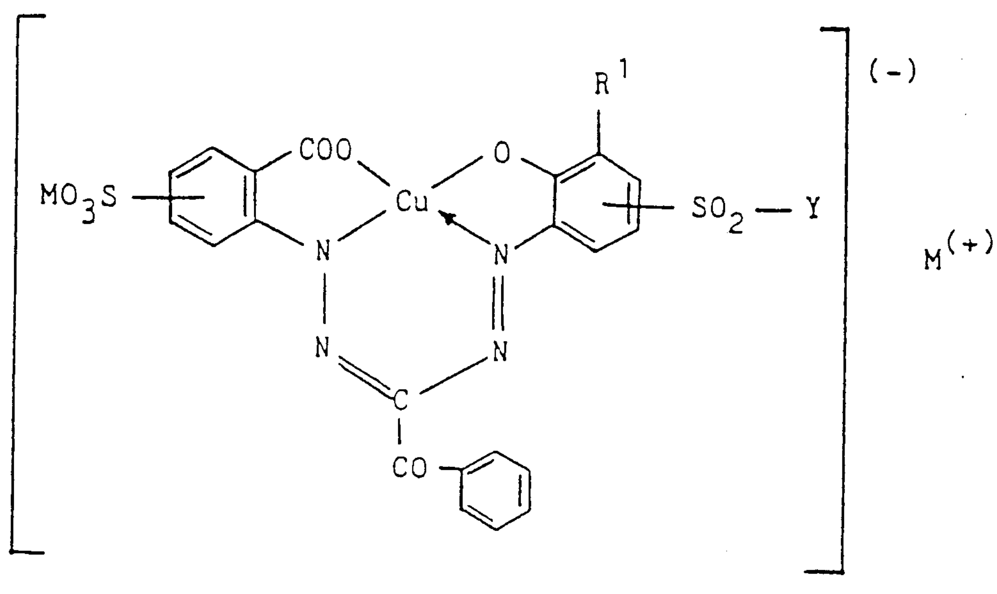

(1c)

dans laquelle :

| | |
|---|---|
| $R^1$ | représente un atome d'hydrogène ou un groupe sulfo, et |
| Y et M | sont tels que définis dans la revendication 1. |

15. Procédé selon l'une au moins des revendications 1 à 14, **caractérisé** en ce que Y représente un groupe vinyle ou un groupe $\beta$-chloroéthyle, $\beta$-acétyloxyéthyle, $\beta$-(sulfobenzoyloxy)-éthyle, $\beta$-(p-méthyl-phénylsulfonyloxy)-éthyl, $\beta$-diméthylaminoéthyle, $\beta$-diéthylaminoéthyle, $\beta$-phosphatoéthyle ou représen-

te un groupe $\beta$-thiosulfatoéthyle ou signifie un groupe $\beta$-sulfatoéthyle.

**16.** Procédé selon l'une au moins des revendications 1 à 14, **caractérisé** en ce que Y représente un groupe $\beta$-sulfatoéthyle.

**17.** Utilisation d'un colorant selon l'une au moins des revendications 1 à 16 pour la teinture et l'impression de matières contenant des groupes hydroxy et/ou carbonamide, en particulier de matières fibreuses de ce type.

**18.** Procédé pour colorer (teinter y compris par impression) des matières contenant des groupes hydroxy et/ou carbonamide, de préférence des matières fibreuses de ce type, selon lequel on dépose un colorant sur ladite matière, ou on l'incorpore dans ladite matière, et on fixe le colorant sur ou dans ladite matière au moyen de la chaleur ou au moyen d'un agent alcalin, ou au moyen de la chaleur et à l'aide d'un agent alcalin, **caractérisé** en ce que l'on utilise comme colorant un colorant selon l'une au moins des revendications 1 à 16.